# EUROPÄISCHE PATENTANMELDUNG

(11) **EP 4 620 754 A2**
(43) Veröffentlichungstag der Anmeldung: **24.09.2025**
(21) Anmeldenummer: 25194347.8
(22) Anmeldetag: 29.06.2023
(51) Int. Cl.: B60T 13/74

(54) **FAHRDYNAMIKSYSTEM FÜR EIN FAHRZEUG MIT RÄDERN UND VERFAHREN ZUM EINSTELLEN EINES BREMSDRUCKS**

(30) Priorität: 30.06.2022 DE 102022116353
(62) Teilanmeldung aus: 23742201.9
(71) Anmelder: IPGATE AG, 8808 Pfäffikon SZ (CH)
(72) Erfinder: LEIBER, Thomas, 22203 Rogoznica (HR)
(74) Vertreter: Meissner Bolte Partnerschaft mbB

(57) **Zusammenfassung**

Die Erfindung betrifft ein Fahrdynamiksystem für ein Fahrzeug mit Rädern (R1-R4), umfassend:
- eine Primärsteuereinheit (M-ECU) zur Erfassung und/oder Generierung von Lenkbefehlen und Bremsbefehlen;
- mindestens zwei hydraulisch betätigbare Radbremsen (RB1-RB4), die jeweils einem Rad (R1-R4) zugeordnet sind;
- mindestens einen elektrischen Traktionsmotor mit Traktionsmotor-Steuereinheit, wobei der Traktionsmotor (TM1, TM2) angeordnet ist, um mindestens eines der Räder (R1-R4) anzutreiben,
wobei die Primärsteuereinheit kommunikativ mit einer Traktionsmotor-Steuereinheit verbunden ist, um den Traktionsmotor (TM1, TM2) zur Implementierung der Lenkbefehle und Bremsbefehle zu steuern;
- mindestens eine (erste) elektrohydraulische Druckversorgungseinheit (BM1) mit
∘ mindestens einer elektrischen Motor-Pumpen-Einheit:
∘ mindestens zwei Anschlüssen zum Anschließen der Radbremsen (RB1-RB4);
∘ elektrisch betätigbaren Radbremsdruckeinstellventilen bzw. Bremsdruckeinstellventilen (AV1-AV4, EV1-EV4), und
∘ einer ersten Sekundärsteuereinheit (S-ECU1);

wobei mindestens einer der hydraulisch betätigbaren Radbremsen (RB1-RB4) ein Bremsdruckeinstellventil in Form eines Einlassventils (EV1-EV4) und eines Auslassventils (AV1-AV4) zugeordnet ist,
dadurch gekennzeichnet, dass
die Primärsteuereinheit (M-ECU) dazu ausgebildet ist, Informationen auszuwerten und diese für eine effektive und prädiktive Druckregelung oder Drucksteuerung zu verwenden,
wobei die Informationen Kamerainformationen über die Fahrbahnbeschaffenheit oder Informationen über die Umgebung, beispielsweise Abstände zu Passanten und/oder Fahrzeugen, umfassen.

## Beschreibung

### Bezeichnung

Die vorliegende Erfindung betrifft ein Fahrdynamiksystem (FDS) mit einer Primärsteuereinheit bzw. einem Zentralrechner (M-ECU) gemäß dem Oberbegriff des Anspruchs 1 sowie ein Verfahren zum Einstellen eines Bremsdrucks.

### Stand der Technik

Seit der Markteinführung des Antiblockiersystems (ABS), der Antriebsschlupfregelung (ASR) und des Elektronischen Stabilitätsprogramms (ESP) in den Jahren 1978, 1986 und 1995 haben sich Bremsdruckregelsysteme für die elektrohydraulische Bremse (EHB) auf Basis des Rückförderprinzips mit Vordruck über einen Hauptbremszylinder durchgesetzt. Hierbei erfolgt ein mit PWM gedrosselter Druckaufbau über Einlassventile und Druckabbau über eine Zeitsteuerung der Auslassventile. In einer Baueinheit sind üblicherweise Ventilblock, Elektromotor, Pumpe, Speicherkammer, acht Magnetventile (für ABS) oder zwölf Magnetventile (für ESP), Druckgeber und elektronisches Steuergerät (ECU) zusammengefasst und räumlich getrennt zum Bremskraftverstärker (BKV) im Motorraum verbaut.

Am meisten verbreitet in bestehenden Fahrzeugen am Markt ist der Einsatz von ABS/ESP-Motor-Pumpen-Einheiten in Kombination mit Vakuumbremskraftverstärkern und Vakuumpumpen. Sogenannte 2-Box-Bremssysteme mit elektrohydraulischem Bremskraftverstärker und räumlich getrennter ESP-Einheit (DE102012211278A1) und sog. 1-Box-Bremssysteme mit integrierter Bremskraftverstärkung und Druckmodulation (EP1907253B1, DE102013222281A1) sind Standard bei neuen Fahrzeugen.

Der hydraulische Aufbau der ESP-Einheit mit zwölf Magnetventilen als eine Druckversorgungseinheit hat sich seit der Serieneinführung im Jahr 1995 nicht verändert, es wurde jedoch eine standardisierte Schnittstelle (vgl. VDA 360) für die Interaktion zwischen dem Steuergerät eines elektrischen Bremskraftverstärkers und dem Steuergerät der ESP-Einheit für weitere Funktionen und zum Bauteilschutz eines steifen elektromechanischen Bremskraftverstärkers spezifiziert. So werden bei bestimmten Funktionen über die Steuervorrichtung Magnetventile der ESP-Einheit für bestimmte Funktionen angesteuert. In der DE102012211278A1 wird eine Ansteuerung von Ventilen und der ABS-Pumpe für das rekuperative Bremsen beschrieben.

Die Automobilindustrie befindet sich in einem starken Veränderungsprozess. Neben der zunehmenden Marktdurchdringung von Elektrofahrzeugen werden verschiedene Stufen des automatisierten Fahrens (SAE Stufe 2-5) durchlaufen, wobei bei jeder Stufe des autonomen Fahrens die Redundanzanforderungen an die verwendeten Bremssysteme steigen (vgl. ATZ-Artikel 3/2019 "Bremskraftverstärker für das automatisierte Fahren").

Zudem wird die zentrale Steuerung eines Fahrzeuges mit Steuergeräten für die Fahrwerkskontrolle eingeführt (im weiteren als "Vehicle Motion Control" bzw. "VMC" oder "Vehicle Chassis Control" bzw. "VCC" bezeichnet), welche die elektrohydraulische Bremse, elektrische Traktionsmotoren^{™} an einer oder mehreren Achsen eines Fahrzeugs, die elektrische Servolenkung (EPS) und optional auch die Dämpfung umfasst. Durch die zentrale Steuerung können Synergien ausgeschöpft werden.

Erstmalig seit dem Jahr 2020 wird in der Rennserie "Formula E" beim rekuperativen Bremsen mit starken elektrischen Traktionsmotoren nicht die in der 5. Auflage des Bremsenhandbuchs (vgl. Kapitel 19: "Regenerative Bremssysteme") als Standard definierte "Verblendungs-Strategie" verfolgt, bei der das hydraulische Bremsmoment um das Bremsmoment des elektrischen Traktionsmotors reduziert wird. Stattdessen wird additiv ein Bremsmoment durch einen elektrischen Traktionsmotor und durch die elektrohydraulische Bremse erzeugt, um eine Verkürzung der Zeit zum Erreichen des Blockierbremsmoments / Blockierbremsdrucks (kurz: TTL) zu erreichen. Somit wird der Bremsweg durch schnellstmöglichen Bremsmomentaufbau verkürzt.

### Aktuelle Einschränkungen und Problemstellungen von ABS/ESP-Anlagen gemäß dem Stand der Technik

Ein Problem aktueller ABS/ESP-Bremsanlagen mit Motor-Pumpen-Einheit ist die beschränkte Dynamik für neue Funktionalitäten, wie z. B. die automatische Notbremse AEB ("Automatic Emergency Brake"). Für diese Funktion ist es sehr wichtig, in kürzester Zeit den Bremsdruck bis zum Radblockierdruck (typische Werte in PKW-Bremssystemen: 80-100 bar) aufzubauen. Während die ABS/ESP-Bremsanlage mit ihrer Pumpe und elektrischem Bürstenmotor einen Druck von 50 bar in 450 ms erreicht, können 1-Box Bremssysteme mit einem leistungsstarken bürstenlosen Motor (DE102005063659B3) den Radblockierdruck von 80-100 bar in weniger als 150 ms erreichen. Kurze TTL-Zeiten können bei einer Anfangsgeschwindigkeit von 65 km/h eine Verkürzung des Bremswegs um mehr als 5 Meter bedeuten.

Jede ABS/ESP-Bremsanlage (ABS/ESP-Bremsanlage mit Motor-Pumpen-Einheit sowie 1-Box) weist prinzipbedingt Rückschlagventile auf, welche in den Hydraulikleitungen zu den Radbremsen aus Sicherheitsüberlegungen hydraulisch parallel zu den Einlassventilen geschaltet sind und gewährleisten, dass der Druck in den Radbremsen immer automatisch abgebaut wird, d. h. bei Ausfall der Druckversorgung verbleibt kein Druck in den Radbremsen. Diese technische Lösung führt jedoch dazu, dass ein Radbremskreisausfall schwer oder nicht diagnostiziert werden kann, weil unklar ist, ob ein Rückschlagventil oder das Einlassventil die Ursache für den Radkreisausfall ist. In Folge muss im Fehlerfall ein gesamter Bremskreis mit zwei Radbremsen deaktiviert werden. Daher ist die diagonale Bremskreisaufteilung (X-Bremskreis) die bevorzuge Aufteilung in einem Großteil von Fahrzeugen, weil bei Bremskreisausfall immer noch mit einer Vorderradbremse mit größerer Bremswirkung als einer Hinterradbremse gebremst werden kann. Eingesetzt ist die sog. "Schwarz-Weiß"-Bremskreisverteilung (II-Bremskreis) bei Hybrid- oder Elektrofahrzeugen mit dem Nachteil der schlechten Bremswirkung im Fehlerfall, aber dem Vorteil der einfacheren Umsetzung von Regelstrategien zum rekuperativen Bremsen.

Ferner hat eine ABS/ESP-Bremsanlage mit Motor-Pumpen-Einheit mit Druckabbau über zeitgesteuerte Auslassventile in die Speicherkammer in der Bremswegregelperformance Nachteile gegenüber o. g. 1-Box-Bremssystemen (vgl. DE102013222281A1) mit Druckabbau in den Vorratsbehälter, weil beim Druckabbau der Gegendruck in der Speicherkammer (bis zu 5 bar) einen schnellen Druckabbau bei niedrigen Drücken begrenzt. Dies führt bei einer ABS-Regelung auf Fahrbahnen mit niedrigen Reibwerten low-µ (Schnee & Eis) zu einem langsamen Druckabbau und die Radgeschwindigkeitseinbrüche bei der ABS-Regelung sind demzufolge sehr lange. Dies führt zu einem langen Bremsweg. Teilweise kann auf Fahrbahnen mit extrem niedrigen Reibwerten (Eis) ABS nur rudimentär geregelt werden. Infolgedessen haben Standard ABS/ESP-Anlagen gegenüber den mit 1-Box-Bremssystemen neuen gesetzten Standard auch im Regelbetrieb einen weiteren signifikanten Nachteil im Bremsweg durch eine schlechtere Regelperformance.

### Aufgabe der Erfindung

Aufgabe der Erfindung ist es, ein verbessertes Fahrdynamiksystem, insbesondere in Form mehrerer Druckversorgungseinheiten ( 2-Box-Lösung mit zwei hydraulisch in zwei separaten hydraulische in Reihe geschalteten Druckversorgungseinheiten, separate Drucksteller für jeweils zwei Radbremsen) anzubieten. Vorzugsweise soll das System die obengenannten Problemstellungen lösen. Das System soll klein, zuverlässig, präzise, sicher und hocheffizient sein.

Das Fahrdynamiksystem soll zudem die Anforderungen des autonomen Fahrbetriebs (SAE Stufe 3, 4 mit Fahrerwunscherfassung über ein E-Pedal oder SAE Stufe 5 ohne Pedal mit Sollwertvorgabe durch einen Zentralrechner) erfüllen und es sollen neue Schnittstellen zwischen Bremsmodulen bzw. Druckversorgungseinheiten untereinander und/oder Bremsmodul und Zentralrechner geschaffen werden.

Weiterhin soll das System es ermöglichen, Funktionen der Fahrdynamikregelung (ABS, ESP, EBV, ACC, AEB, Reku-Mgt) und radindividuelle Bremsmomenteingriffe (BtS: Brake-to-Steer, BtTV: Brake-to-Torque Vektoring) effizient unter Einbindung mindestens eines elektrischen Traktionsmotors anzubieten.

### Lösung der Erfindung

Diese Aufgabe wird durch den Gegenstand nach Anspruch 1 gelöst.
Insbesondere wird die Aufgabe durch ein Fahrdynamiksystem für ein Fahrzeug mit Rädern gelöst, das umfasst:
- eine Primärsteuereinheit zur Erfassung und/oder Generierung von Lenkbefehlen und Bremsbefehlen;
- mindestens zwei hydraulisch betätigbare Radbremsen, die jeweils einem Rad zugeordnet sind;
- mindestens einen elektrischen Traktionsmotor mit Traktionsmotor-Steuereinheit, wobei der Traktionsmotor angeordnet ist, um mindestens eines der Räder anzutreiben,
   wobei die Primärsteuereinheit kommunikativ mit einer Traktionsmotor-Steuereinheit verbunden ist, um den Traktionsmotor zur Implementierung der Lenkbefehle und Bremsbefehle zu steuern;
- mindestens eine (erste) elektrohydraulische Druckversorgungseinheit mit
   o mindestens einer elektrischen Motor-Pumpen-Einheit:
   o mindestens zwei Anschlüssen zum Anschließen der Radbremsen;
   o elektrisch betätigbaren Radbremsdruckeinstellventilen bzw. Bremsdruckeinstellventilen, und
   o einer ersten Sekundärsteuereinheit;

wobei mindestens einer der hydraulisch betätigbaren Radbremens (RB1-RB4) eine Bremsdruckeinstellventil in Form eines insbesondere zuziehfesten Spezial-Magnetventils (MV2k) und ein Auslassventil zugeordnet ist,
**dadurch gekennzeichnet**, dass
das Fahrdynamiksystem, insbesondere die Primärsteuereinheit (M-ECU), dazu ausgebildet ist, aus der mindestens einen hydraulisch betätigbaren Radbremens wahlweise über das zugeordnete Auslassventil oder über das Spezial-Magnetventil (MV2k) Druck abzubauen.

Vorzugsweise erfolgt der Druckabbau in der ersten Variant ausschließlich über das jeweilige Auslassventil. In der zweiten Variante kann ein ausschließlicher Druckabbau über das jeweilige Spezial-Magnetventil oder ein gleichzeitiger Druckabbau über Spezial-Magnetventil und Auslassventil erfolgen.

Weiterhin wird die Aufgabe durch ein Fahrdynamiksystem gelöst, das umfasst:
- eine Primärsteuereinheit zur Erfassung und/oder Generierung von Lenkbefehlen und Bremsbefehlen;
- mindestens zwei hydraulisch betätigbare Radbremsen, die jeweils einem Rad zugeordnet sind;
- mindestens einen elektrischen Traktionsmotor mit Traktionsmotor-Steuereinheit, wobei der Traktionsmotor so angeordnet ist, um mindestens eines der Räder anzutreiben,
   wobei die Primärsteuereinheit kommunikativ mit einer Traktionsmotor-Steuereinheit verbunden ist, um den Traktionsmotor zur Implementierung der Lenkbefehle und Bremsbefehle zu steuern;
- mindestens eine (erste) elektrohydraulische Druckversorgungseinheit mit
   o mindestens einer elektrischen Motor-Pumpen-Einheit:
   o mindestens zwei Anschlüssen zum Anschließen der Radbremsen;
   o elektrisch betätigbaren Radbremsdruckeinstellventilen bzw. Bremsdruckeinstellventilen, und
   o einer ersten Sekundärsteuereinheit;
- wobei mindestens eines der Bremsdruckeinstellventile ein Spezial-Magnetventil mit einem elektromagnetischen Antrieb mit einer ersten Erregerspule umfasst, über den ein Ventilstellglied bzw. Ventilstößel zwischen einer geöffneten Ventilstellung und einer geschlossenen Ventilstellung verstellbar ist.

Ein erfinderischer Aspekt besteht dabei darin, dass das Spezial-Magnetventil eine Kraftzusatzeinrichtung aufweist, die einen Permanentmagneten und/oder eine zweite Erregerspule umfasst und die zur Bereitstellung mindestens einer auf das Ventilstellglied bzw. den Ventilstößel wirkenden Rückhaltekraft angeordnet ist. Vorzugsweise werden die Spezial-Magnetventile, die als Einlassventile bzw. Radeinlassregelventile verwendet werden können, durch diese Maßnahme zuziehfest.

Durch eine Radbremskreisauslegung mit zuziehfesten Radeinlassregelventilen ist das erfindungsgemäße System deutlich fehlersicherer als Bremsanlagen nach dem Stand der Technik und es kann ein Bremssystem mit Radkreisen (radindividuelle Druckregelung und/oder Versorgung) an Stelle von herkömmlichen Bremskreisen mit mehreren Rädern (Diagonale oder Schwarz-Weiss) realisiert werden. Beispielsweise können der Ausfall eines Radkreises diagnostiziert und der ausgefallene Radkreis durch Schließen eines Einlassventils von der Druckversorgung abgetrennt werden. Damit kann bei Ausfall eines (individuellen) Radkreises mit den verbleibenden drei Radkreisen im Fehlerfall eine deutlich verbesserte Verzögerung erreicht werden und Giermomenteingriffe noch an drei Rädern durchgeführt werden. Im Weiteren werden Bremsmodule einer ersten Druckversorgungseinheit mit Spezial-Magnetventilen nach Anspruch 1 als ESP-X bezeichnet.

Die Erfassung eines Lenk- und/oder Bremsbefehls durch die Primärsteuereinheit kann beispielsweise über Lenkradsensoren oder Kraft-Weg-Sensoren an einem E-Bremspedal erfolgen. Die Primärsteuereinheit kann aber auch dazu ausgebildet sein, eigenständige Lenkbefehle und Bremsbefehle zu generieren. Dies ist im Zuge des autonomen Fahrens notwendig. Ebenso können entsprechende Befehle aufgrund der Implementierung einer Sicherheitsfunktion (z. B. automatische Notbremsung AEB) entstehen. Als Lenkbefehl im Sinne der vorliegenden Erfindung ist nicht der konkrete Eingriff eines Fahrers mittels des Lenkrads gemeint. Stattdessen versteht die vorliegende Erfindung als Lenkbefehl jegliche Anweisung, die sich darauf bezieht, dass sich das Fahrzeug in eine bestimmte Richtung bewegt und auch eine Trajektorien-Steuerung im autonomen Fahrbetrieb umfasst. Beispielsweise fällt hierunter auch ein Befehl der zu einer Veränderung des Giermoments führt. Auch ein Torque-Vectoring kann durch entsprechende Lenkbefehle und/oder Bremsbefehle implementiert werden.

Die (erste) elektrohydraulische Druckversorgungseinrichtung kann eine ABS/ESP-Einheit sein. Allgemein soll aber jede Einheit darunter verstanden werden, die einen Druckerzeuger, beispielsweise in Form der besagten Motor-Pumpen-Einheiten aufweist und an entsprechenden Anschlüssen entsprechende Drücke bereitstellt. Die Druckversorgungseinheit kann auch Regel- und/oder Steuerfunktionen übernehmen. Sie kann also ein Druckstellmodul sein.

Ein Aspekt der Erfindung besteht darin, dass das Spezial-Magnetventil eine zusätzliche Rückhaltekraft bereitstellt. Dies führt dazu, dass das Spezial-Magnetventil zuziehfest ist und hohe Drücke über dieses Ventil abgebaut werden können. Neben der Rückhaltekraft kann es auch eine Rückstellkraft sein, die das Ventilstellglied bzw. den Ventilstößel in eine geöffnete Ventilstellung bewegt.

In einer Ausführungsform kann die Primärsteuereinheit dazu ausgebildet sein, zumindest in einem ausgewählten Bremsmodus das Spezial-Magnetventil der ersten Druckversorgungseinheit derart anzusteuern, dass aus der dem Spezial-Magnetventil zugeordneten Radbremse bei geöffnetem Spezial-Magnetventil Druck abgebaut wird. Vorzugsweise ist jedes Spezial-Magnetventil der ersten Druckversorgungseinheit einer Radbremse zugeordnet. Aufgrund der zuziehfesten Ausgestaltung kann das jeweilige Spezial-Magnetventil nicht nur als Einlassventil, sondern auch als eine Art Auslassventil genutzt werden. Der Druck kann bidirektional über dasselbe Spezial-Magnetventil sowohl aufgebaut als auch abgebaut werden. Somit kann eine (deutlich) schnellere Druckreduzierung der jeweils zugeordneten Radbremse ermöglicht werden, weil Druck sowohl über mehrere Ventile (Spezial-Ventil) als auch über die Auslassventile abgebaut werden kann. Des Weiteren kann der Druck in der Radbremse durch Schließen des Ventils gehalten werden während der Druckerzeuger mit niedrigem Druck betrieben wird während der Druck in der Radbremse hoch ist. Dies stellt neue Freiheitsgrade bereit, die bei einer zentralen Steuerstrategie mittels der primären Steuereinheit sehr vorteilhaft sind.

In einer Ausführungsform weist mindestens eine der Radbremsen, die einem Spezial-Magnetventil zugeordnet ist, auch ein Auslassventil auf. Das entsprechende Auslassventil kann der Radbremse zugeordnet sein. In einer Ausführungsform werden zum Druckabbau Auslassventil und Spezial-Magnetventil gleichzeitig genutzt, um möglichst schnell und effektiv den Druck in der jeweiligen Radbremse abzubauen. Insbesondere kann die Primärsteuereinheit dazu ausgebildet sein, zumindest in einem ausgewählten Bremsmodus das zugeordnete Spezial-Magnetventil und Auslassventil derart anzusteuern, dass gleichzeitig Bremsfluid über das zugeordnete Spezial-Magnetventil und das zugeordnete Auslassventil aus der Radbremse abgeführt wird.

In einer Ausführungsform weist das Fahrdynamiksystem mindestens eine zweite Druckversorgungseinheit auf. Vorzugsweise umfasst diese eine Kolben-Zylindereinheit oder eine Rotationspumpe - also einen eigenen Druckerzeuger. Die zweite Druckversorgungseinheit kann zur Bereitstellung von Bremsfluid an mindestens einen Eingang der ersten Druckversorgungseinheit angeschlossen sein. In einer Ausführungsform übernimmt die Druckversorgungseinheit nicht nur eine Funktion, bei der sie als Druckreservoir dient, sondern auch eine Funktion, bei der sie als (steuer-/regelbare) Drucksenke eingesetzt wird oder alternativ mindestens ein Ventil zum Druckabbau aufweist (z.B. zentrales Auslassventil vgl. WO2020165259A1, Auslassventile einer ABS/ESP-Einheit) Der Druckabbau kann mit Ventilen zeitgesteuert, kann aber auch PWM-gesteuert werden, wenn für den Druckabbau Einlassventile einer ABS/ESP-Einheit eingesetzt werden. Wird beispielsweise eine Kolben-Zylindereinheit eingesetzt, so kann durch das Zurückziehen des Zylinders innerhalb des Kolbens ein sehr niedriger Druck, beispielsweise ein Druck von 1 bis 5 bar erzeugt werden, wobei die bestehende Druckdifferenz zu einem schnellen Druckabbau in den Radbremsen führt. In einer (bevorzugten) Ausführungsform stellt die Druckversorgungseinheit Bremsfluid für einen ersten und einen zweiten Bremskreis bereit, wobei vorzugsweise mindestens ein Trennventil zum Abtrennen des ersten und/oder des zweiten Bremskreises vorgesehen ist. Dieses Trennventil kann, wie nachfolgend noch näher erläutert, ähnlich oder identisch ausgebildet sein, wie das bereits beschriebene Spezial-Magnetventil.

Es können auch mehrere erste Druckversorgungseinheiten vorgesehen und an die zweite Druckversorgungseinheit angeschlossen sein.

In einer Ausführungsform ist die erste Druckversorgungseinheit (unmittelbar) mit genau zwei Radbremsen verbunden. Vorzugsweise sind diese beiden Radbremsen Rädern zugeordnet, die sich an einer ersten Achse befinden. In einer Ausführungsform ist neben der ersten Druckversorgungseinheit mindestens eine weitere Druckversorgungseinheit vorgesehen, die (unmittelbar) mit mindestens zwei Radbremsen an einer zweiten Achse verbunden ist. In anderen Worten versorgt die weitere Druckversorgungseinheit zwei Radbremsen, die Rädern zugeordnet sind, die sich an der zweiten Achse befinden. Erfindungsgemäß können also mehrere erste Druckversorgungseinheiten als unterschiedliche Module vorgesehen werden, wobei jedes Modul einer bestimmten Achse bzw. den Radbremsen an einer bestimmten Achse zugeordnet ist. Je nach Fahrzeug können neben der ersten und der zweiten Achse auch noch weitere Achsen mit weiteren Druckversorgungseinheiten vorgesehen sein, wobei jede Druckversorgungseinheit einer Achse vorzugsweise kommunikativ mit der Primärsteuereinheit zum Empfang von Lenkbefehlen und Bremsbefehlen verbunden ist. Erfindungsgemäß kann ein unmittelbares Verbinden einer Vorrichtung mit einer anderen Vorrichtung derart verstanden werden, dass eine hydraulische Verbindung beispielsweise über Leitungen vorgesehen ist, die nicht durch andere Vorrichtungen, wie beispielsweise Ventile oder Druckerzeuger unterbrochen ist.

In einer Ausführungsform (nachfolgend auch als Ventilanschlussvariante I bezeichnet) ist das Spezial-Magnetventil wie in ABS/ESP-Anlagen nach Stand der Technik üblich mit dem Ankerraum des Ventils an die Radbremse und dem Ventilsitz an die Druckversorgungseinheit angeschlossen sowie stromlos offen ausgeführt. Der Druck kann über eine Vordrucksteuerung und eine PWM-Steuerung eines oder mehrerer der Spezial-Magnetventile aufgebaut werden. Ein Abbau erfolgt über eine Zeitsteuerung derselben Ventile, wobei beim Druckabbau aufgrund der zuziehfesten Ausführung nicht die Gefahr besteht, dass das Spezial-Magnetventil zuzieht.

In einer (anderen) Ausführungsform (Ventilanschlussvariante II) ist der Ventilsitz mindestens eines Spezial-Magnetventils an die Radbremse angeschlossen. Die Anordnung ermöglicht, den Druck geräuscharm in der jeweils zugeordneten Radbremse abzubauen. Aufgrund der Anordnung lässt sich der Ventilöffnungsquerschnitt, insbesondere durch eine PWM-Ansteuerung oder Stromregelung, einstellen. Somit kann ein gedrosselter Druckabbau über das Spezial-Magnetventil erfolgen. Der Druckaufbau über das Spezial-Magnetventil kann in dieser Ausführungsform über eine Zeitsteuerung oder Volumenzumessung erfolgen, die in der zweiten Druckversorgungseinheit, z.B. durch die Drehwinkeleinstellung einer Rotationspumpe oder Kolbenwegeinstellung einer Kolben-Zylinder-Einheit durchgeführt werden kann.

Beide Formen des Anschlusses ermöglichen durch ein einfaches Schließen mittels Bestromung des Spezial-Magnetventils, eine Radbremse von dem System abzukoppeln. Um das Spezial-Magnetventil zuzuhalten kann ein niedriger Haltestrom angelegt werden. Die Abtrennung kann vorteilhaft sein, wenn in der jeweiligen Radbremse ein Defekt, beispielsweise ein Leck, detektiert wurde.

In einer Ausführungsform kann die erste Versorgungseinheit eine Rotationspumpe umfassen, die angeschlossen und dazu ausgebildet ist, Druck in den Radbremsen auf- und abzubauen. Somit kann die Rotationspumpe als Drucksenke fungieren und einen schnellen Druckabbau umsetzen.

Weiterhin wird die Aufgabe durch ein Fahrdynamiksystem gelöst, das umfasst:
- eine Primärsteuereinheit zur Erfassung und/oder Generierung von Lenkbefehlen und Bremsbefehlen;
- vier hydraulisch betätigbare Radbremsen, die jeweils Rädern zugeordnet sind;
- mindestens einen elektrischen Traktionsmotor mit Traktionsmotor-Steuereinheit, wobei der Traktionsmotor angeordnet ist, um mindestens eines der Räder des Fahrzeugs anzutreiben,
   wobei die Primärsteuereinheit kommunikativ mit einer Traktionsmotor-Steuereinheit verbunden ist, um den Traktionsmotor zur Implementierung der Lenkbefehle und Bremsbefehle zu steuern;
- mindestens eine erste elektrohydraulische Druckversorgungseinheit mit
   o mindestens einer elektrischen Motor-Pumpen-Einheit
   o mindestens zwei Anschlüssen zum Anschließen der Radbremsen;
   o elektrisch betätigbaren Radbremsdruckeinstellventilen bzw. Bremsdruckeinstellventilen; und
   o einer ersten Sekundärsteuereinheit;
- mindestens eine zweite elektrohydraulische Druckversorgungseinheit, die zur Bereitstellung von Bremsfluid an mindestens einem Eingang der ersten Druckversorgungseinheit für einen ersten Bremskreis und einen zweiten Bremskreis angeordnet ist,

wobei der zweiten Druckversorgungseinheit mindestens ein Trennventil in Form eines Spezial-Magnetventils zum Abtrennen des ersten und/oder zweiten Bremskreises zugeordnet ist,
wobei das Spezial-Magnetventil einen elektromagnetischen Antrieb mit einer ersten Erregerspule umfasst, über den ein Ventilstellglied bzw. Ventilstößel des Spezial-Magnetventils zwischen einer geöffneten Ventilstellung und einer geschlossenen Ventilstellung verstellbar ist.

Alternativ wird die Aufgabe durch ein System für ein Fahrzeug mit Rädern (R1-R4), insbesondere Fahrdynamiksystem, insbesondere wie in einer vorherigen Ausführungsformen beschrieben gelöst. Das System kann umfassen:
- eine Primärsteuereinheit (M-ECU) zur Erfassung und/oder Generierung von Lenkbefehlen und Bremsbefehlen;
- vier hydraulisch betätigbare Radbremsen (RB1-RB4), die jeweils Rädern (R1-R4) zugeordnet sind;
- mindestens einen elektrischen Traktionsmotor (TM1, TM2) mit Traktionsmotor-Steuereinheit (S-ECU-TMHA), wobei der Traktionsmotor (TM1, TM2) angeordnet ist, um mindestens eines der Räder (R1-R4) des Fahrzeugs anzutreiben,
   wobei die Primärsteuereinheit (M-ECU) kommunikativ mit einer Traktionsmotor-Steuereinheit verbunden ist, um den Traktionsmotor (TM1, TM2) zur Implementierung der Lenkbefehle und Bremsbefehle zu steuern;
- mindestens eine erste elektrohydraulische Druckversorgungseinheit (BM1) mit
   o mindestens einer elektrischen Motor-Pumpen-Einheit
   o mindestens zwei Anschlüssen zum Anschließen der Radbremsen (RB1-RB4);
   o elektrisch betätigbaren Radbremsdruckeinstellventilen bzw. Bremsdruckeinstellventilen, und
   o einer ersten Sekundärsteuereinheit (S-ECU1);
- mindestens eine zweite elektrohydraulische Druckversorgungseinheit (BM2), die zur Bereitstellung von Bremsfluid an mindestens einem Eingang der ersten Druckversorgungseinheit für einen ersten Bremskreis (BK1) und einen zweiten Bremskreis (BK2) angeordnet ist,

wobei der zweiten Druckversorgungseinheit (BM2) mindestens ein Trennventil (TV1, TV2) in Form eines Spezial-Magnetventil (MV2k) zum Abtrennen des ersten und/oder zweiten Bremskreises (BM1, BM2) zugeordnet ist,
wobei das Spezial-Magnetventil (MV2k) einen elektromagnetischen Antrieb mit einer ersten Erregerspule (SP1a) umfasst, über den ein Ventilstellglied (7) bzw. Ventilstößel (7a) des Spezial-Magnetventils (MV2k) zwischen einer geöffneten Ventilstellung und einer geschlossenen Ventilstellung verstellbar ist.

Das System kann sich dadurch auszeichnen, dass das Spezial-Magnetventil (MV2k) zuziehfest ist, insbesondere durch das Vorsehen einer Kraftzusatzeinrichtung, die einen Permanentmagneten (PM) und/oder eine zweite Erregerspule (SP1b, SP2), umfasst und die zur Bereitstellung mindestens einer auf das Ventilstellglied (7) bzw. Ventilstößel (7a) wirkenden Rückhaltekraft (FPM, FEM2) angeordnet ist.

Ein Aspekt der Erfindung besteht darin, dass das Spezial-Magnetventil zuziehfest ist, insbesondere durch das Vorsehen einer Kraftzusatzeinrichtung, die einen Permanentmagneten und/oder eine zweite Erregerspule umfasst und die zur Bereitstellung mindestens einer auf das Ventilstellglied bzw. den Ventilstößel wirkenden Rückhaltekraft angeordnet ist.

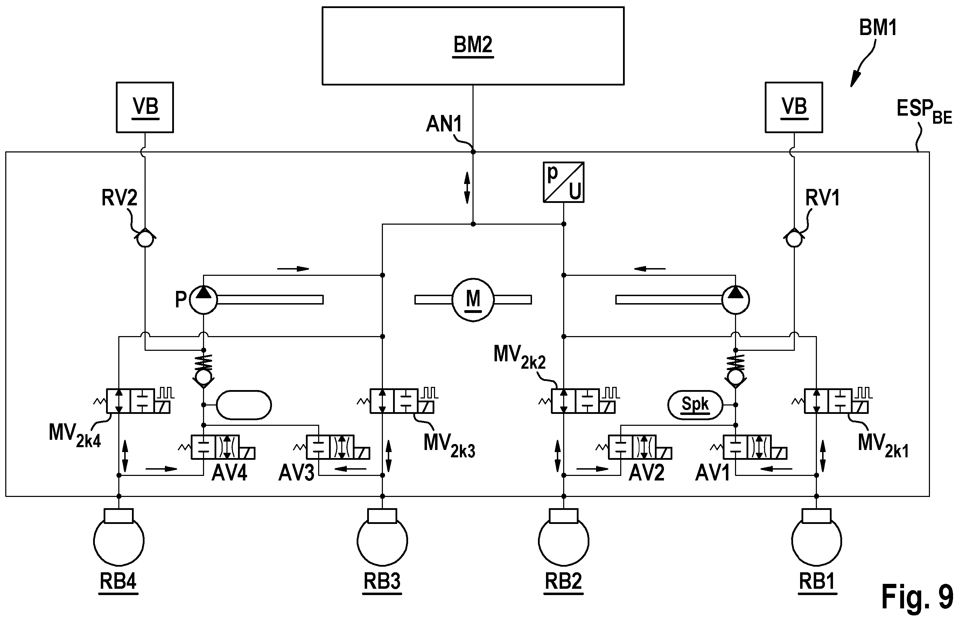

Das Spezial-Magnetventil kann also auch als Trennventil, beispielsweise als Teil der zweiten Druckversorgungseinheit (im weiteren auch als zweites Bremsmodul BM2 bezeichnet), eingesetzt werden, wobei das zweite Bremsmodul BM2 bei nur einem hydraulischen Anschluss an das erste Bremsmodul (Figur 9, Figur 10, Figur 15) kein Trennventil enthalten muss und auch in den Ausführungsformen ohne Trennventil als Bremsmodul BM2 bezeichnet wird. Die zuziehfesten Eigenschaften führen auch hier zu einer deutlichen Verbesserung des Systems. Allgemein können erfindungsgemäß auch andere Ventile eingesetzt werden, die entsprechende zuziehfeste Eigenschaften aufweisen. Bei dem System handelt es sich vorzugsweise um ein 2-Box-System, bei dem die erste Druckversorgungseinheit Teil einer ersten Box und die zweite Druckversorgungseinheit Teil einer zweiten Box ist.

Soweit ein Spezial-Magnetventil verwendet wird, das den besagten Permanentmagneten und/oder die zweite Erregerspule aufweist, so kann dieses ähnlich oder identisch ausgebildet sein, wie dies bereits vorab beschrieben wurde. Die Kraftzusatzeinrichtung kann neben der genannten Rückhaltekraft auch eine zusätzliche Rückstellkraft erzeugen.

Mit dem vorteilhaften Einsatz einer zweiten Druckversorgungseinheit für den Druckabbau auf niedrigen Reibwert können auch kostengünstige ABS/ESP-Bremsanlagen eine neue Regelgüte erreichen und durchaus in der Bremswegperformance mit neuartigen 1-Box-Bremssystemen (DE102013222281A1, Bremsenhandbuch 5. Auflage, Kapitel 20.3 "Integriertes Bremssystem MK C1") konkurrieren.

Unabhängig von der Ausgestaltung der zweiten Druckversorgungseinheit kann in einer Ausführungsform die erste Druckversorgungseinheit mit einer Rotationspumpe mit Druckaufbau und Druckabbau entsprechend der Drehrichtung der Rotationspumpe ausgestattet werden, wodurch ein weiterer Freiheitsgrad des Druckabbaus geschaffen wird. Weiterhin kann in dieser Ausführungsform aufgrund des fehlenden Gegendrucks der Speicherkammer der Druck bei einem ABS-Betrieb mit Niedrigreibwert ("low-µ") gut abgebaut werden. Dies führt zu einem hochpräzisen und kostengünstigen System.

In einer (weiteren) Ausführungsform kann die erste Druckversorgereinheit derart ausgeführt sein, dass ein Druckabbau in einen Vorratsbehälter anstatt in eine Speicherkammer vorgesehen ist. Dies ist auf Grund des hohen Sicherheitsgewinns, der durch das erfindungsgemäße Spezial-Magnetventil, insbesondere in seiner Verwendung als Einlassventil, erreicht wird, möglich und verbessert die ABS-Regelperformance deutlich.

In einer Ausführungsform wird gemeinsam mit elektrischen Traktionsmotoren an einer oder mehreren Achsen gleichzeitig ein Bremsmoment über die elektrischen Traktionsmotoren und den Druck der ersten und/oder zweiten Druckversorgungseinheit aufbaut. In diesem Zusammenhang kann beim Druckaufbau eine elektrische Bremskraftverteilung (EBV) mittels der ersten und/oder zweiten Druckversorgungseinheit vorgenommen werden, um zu verhindern, dass die Hinterräder vor den Vorderrädern blockieren. Wird ein Radblockierdruck erreicht, kann erfindungsgemäß die ABS-Regelung einsetzen und das Bremsmoment mindestens eines Traktionsmotors wird sehr schnell abgebaut. Ein entsprechendes Vorgehen stellt bei elektrischen Traktionsmotoren, die im Hochvolt (>400 V, insbesondere >700V) betrieben werden und Bremsmomentgradienten >10000 Nm/s aufweisen, kein Sicherheitsrisiko dar und funktioniert schnell genug für einen sicheren Bremsmomentabbau, ggf. bereits im ersten Regelzyklus. Erfindungsgemäß kann dies durch die Einführung der zentralen Fahrdynamikregelung FDS ermöglicht werden, das synchronisiert elektrische Traktionsmotoren TM und die Druckerzeugereinheiten ansteuert, und einen ABS-Fall durch Auswerten von Raddrehzahlsensoren sehr schnell erkennt. Hierfür kann die Primärsteuereinheit derart mit den Raddrehzahlsensoren kommunikativ verbunden sein, dass die entsprechenden Sensorwerte direkt eingelesen werden können. Durch den erfindungsgemäßen Ansatz kann bei der automatischen Notbremse mit nur der Druckerzeugung über die Pumpe des ersten Bremsmoduls BM1 ein TTL von 150 ms erreicht werden, wobei vergleichbare Werte bisher nur 1-Box-Bremssystemen mit leistungsstarken bürstenlosen Motoren vorbehalten waren.

Alternativ oder zusätzlich kann erfindungsgemäß (neben den elektrischen Traktionsmotoren) auch eine 6-Kolbenpumpe oder ein leistungsstärkerer Bürstenmotor in der ersten Druckversorgungseinheit eingesetzt werden, womit eine kürzere TTL-Zeit erreicht werden kann. Mit diesem Ansatz können auch bei leistungsschwächeren elektrischen Traktionsmotoren gut TTL Zeiten, ggf. im Bereich von 150 ms, erreicht werden. Erfindungsgemäß können die einzelnen Maßnahmen der Ausführungsformen in einem Baukastenkonzept unterschiedlich kombiniert werden.

Die Druckversorgungseinheit kann sowohl zum Druckaufbau wie auch zum Druckabbau ausgebildet sein. Die erste und die zweite Druckversorgungseinheit kann jeweils eine Sekundärsteuereinheit aufweisen, die jeweils über mindestens eine Kommunikationsschnittstelle verfügt. Diese Kommunikationsschnittstellen können genutzt werden, um eine Kommunikation mit der Primärsteuereinheit aufzubauen. Insbesondere können Messsignale und Stellsollwerte ausgetauscht werden. Das Spezial-Magnetventil der zweiten Druckversorgungseinheit kann derart angeordnet sein, dass ein Ventilsitz des Spezial-Magnetventils (unmittelbar) mit einem/dem Eingang der ersten Druckversorgungseinheit verbunden ist (Ventilanschlussvariante III). Aufgrund der Anordnung des Spezial-Magnetventils lässt sich der Ventilöffnungsquerschnitt, insbesondere durch eine PWM-Ansteuerung oder Stromregelung einstellen. Diese besondere Anordnung führt auch in diesem Fall dazu, dass Druck über das Spezial-Magnetventil aus der ersten Druckversorgungseinheit gedrosselt und somit geräuscharm abgebaut werden kann. Der Druckaufbau erfolgt in dieser Anordnung vorzugsweise über eine Zeitsteuerung oder eine Volumenzumessung (vgl. vorhergehende Erläuterung zur Drucksteuerung/Druckregelung über Volumenmessung).

In einer Ausführungsform ist die Primärsteuereinheit dazu ausgebildet, durch ein Ansteuern mindestens eines der Spezial-Magnetventile der ersten Druckversorgungseinheit und/oder der mindestens einen zweiten Druckversorgungseinheit eine radbremsenindividuelle oder bremskreisindividuelle Drucksteuerung zu implementieren.

In einer Ausführungsform ist die primäre Steuereinheit dazu ausgebildet, durch Druckmessungen bei geschlossenen Spezial-Magnetventilen der ersten Druckversorgung oder eines Einlassventils einen Radkreisausfall zu detektieren. Ein entsprechendes Diagnoseverfahren kann umfassen, dass bei im System bestehendem Druck gemessen wird, ob dieser abfällt, obwohl sämtliche relevanten Ventile geschlossen sind. Soweit dies der Fall ist, kann davon ausgegangen werden, dass ein Leck vorhanden ist. Es kann durch Schließen eines Spezial-Magnetventils noch ein Druckaufbau in dem verbleibenden Bremskreisen oder anderen nicht leckenden Radkreisen stattfinden. Beispielsweise kann die zweite Druckversorgungseinheit mit einer Kolbenbewegung den Druck aufbauen. Soweit kein Druckanstieg erfolgt, der mit der Kolbenbewegung korreliert, kann auch in diesem Fall auf ein Leck geschlossen werden.

Wie bereits erläutert, kann die Primärsteuerung dazu ausgebildet sein, durch ein Schließen mindestens eines der Trennventile, einen defekten Bremskreis abzutrennen. In einer bevorzugten Ausführungsform ist es also möglich, entweder radkreisindividuelle oder bremskreisindividuelle Abtrennungen vorzunehmen, um defekte Bremskreise oder Radbremskreise abzuschotten und die Funktionalität des übrigen Systems aufrechtzuerhalten.

Die Primärsteuereinheit kann dazu ausgebildet sein, durch Steuerung mindestens eines der Trennventile sowie (abwechselnden) Druckaufbau und Druckabbau über die zweite Druckversorgungseinheit ein (achsweises) ABS zu implementieren. Anders als herkömmliche Systeme kann also auch die zweite Druckversorgungseinheit dazu eingesetzt werden, um zumindest ein (rudimentäres) 1-Kanal-ABS zu implementieren. Dies führt zu zusätzlichen Redundanzen.

In einer Ausführungsform ist die Primärsteuereinheit dazu ausgebildet, durch ein paralleles Ansteuern der Traktionsmotoren und zumindest der ersten Druckversorgungseinheit eine (automatische) Notbremsung zu implementieren.

Eine entsprechende Steuerstrategie lässt sich auch mit nur einem Traktionsmotor umsetzen.

Die Primärsteuereinheit kann dazu ausgebildet sein, eine (automatische) Notbremsfunktion (AEB) oder einen Bremsmomentaufbau, insbesondere ein hohes Bremsmoment (> 3 m/s² Fahrzeugverzögerung) durch die Steuerung des elektrischen Traktionsmotors und ein elektrohydraulisches Bremsen zu implementieren. Bei einer Implementierung einer Notbremsung werden die Bremsmomente von elektrischen Traktionsmotoren und der ersten Druckversorgungseinheit bis zu einer hohen Verzögerung (>5 m/s²), vorzugsweise bis zur maximalen Verzögerung (>8 m/s², insbesondere > 9,5 m/s²) additiv erzeugt. Eine ABS-Situation kann durch ein Auswerten von Raddrehzahlsensoren während der Notbremsfunktion, d.h. beim hochdynamischen Druckaufbau, erkannt werden. In diesem Fall kann die Primärsteuerung das Bremsmoment des elektrischen Traktionsmotors und/oder der elektrohydraulischen Bremse (zentral) an einem oder mehreren blockierenden Rädern oder das Bremsmoment einer Fahrzeugachse reduzieren

In einer Ausführungsform ist der erste elektromagnetische Antrieb redundant mit mindestens einem ersten Magnetventiltreiber und einem zweiten Magnetventiltreiber versehen, wobei die Sekundärsteuereinheit zur Steuerung des mindestens einen Spezial-Magnetventils mit dem ersten Magnetventiltreiber und die Primärsteuereinheit zur Steuerung des mindestens einen Spezial-Magnetventils mit dem zweiten Magnetventiltreiber kommunikativ verbunden sind. Dies bedeutet, dass sich das Spezial-Magnetventil von zwei gesondert ausgeführten Steuerungen aktivieren lässt, so dass dessen Betätigung auch im Fall des Ausfalls einer der Steuerungen weiter sichergestellt sein kann. Die kommunikative Verbindung kann eine elektrische Verbindung sein.

In einer Ausführungsform ist die Primärsteuereinheit dazu ausgebildet, zumindest zweitweise einen Bremsdruck zumindest in einer Auswahl der Radbremsen in einem Multiplex-/PPC-Verfahren einzustellen, wobei die Primärsteuereinheit ein Stellsignal an die zweite Druckversorgungseinheit gibt, um den Druck aufzubauen oder abzubauen.

In einer Ausführungsform wird eine neue FDS-Architektur mit kommunikativen Schnittstellen Int-BM1, Int-BM2 zwischen Zentralrechner bzw. Primärsteuereinheit und der Steuereinheit eines Bremsmodules (BM1 oder BM2) sowie bei mehreren Bremsmodulen (BM1 und BM2) einer weiteren Schnittstelle Int_{2BM} zwischen den Steuergeräten der beiden Bremsmodule S-ECU1 und S-ECU2 geschaffen. Die Schnittstelle Int-2BM baut auf der VDA360-Richtlinie auf, die für das Zusammenwirken eines elektrischen Folgebremskraftverstärkers (z. B. Produkt i-Booster) und einer ESP-hev-Bremsanlage für rekuperatives Bremsen, u. a. mit einer Schnittstelle zur Ventilbetätigung der Auslassventile der ESP-hev-Anlage definiert wurde. Zudem wird im FDS mindestens ein elektrischer Traktionsmotor (TM1, TM2, TM3) eingebunden. Zwischen Zentralrechner und Traktionsmotor ist mindestens eine weitere Schnittstelle vorgesehen, vorzugsweise je eine Schnittstelle IntTMᵢ zwischen M-ECU und dem Sekundärsteuergerät des jeweiligen Traktionsmotors (S-ECU-TMi) oder eine Schnittstelle zwischen M-ECU und dem Steuergerät der jeweiligen Achse eines Fahrzeuges (IntTM_{HA}, IntTM_{VA}), insbesondere wenn die Achse mehrere Traktionsmotoren umfasst. Diese Konfiguration ist dann vorteilhaft, wenn z. B. an der Hinterachse jeweils ein Traktionsmotor für jedes Rad vorgesehen ist, um radindividuell das Rad zu beschleunigen oder abzubremsen.

Eine oder mehrere der kommunikativen Schnittstellen können eine elektrische Verbindung, eine kabellose oder eine optische Verbindung sein, wobei vorzugsweise zwei Kommunikationswege gewählt werden. Ein erster Kommunikationsweg kann redundant ausgeführt sein und ein zweiter Kommunikationsweg kann zum Überprüfen der Signale des ersten Kommunikationswegs genutzt werden. In einer Ausführungsform ist das 2 aus 3-Prinzip mit zwei unterschiedlichen Signalübertragungsarten umgesetzt, damit die Anforderungen für SAE Level 5 erfüllt sind und Fehler in der Übertragung ausgeschlossen werden können. Das 2 aus 3-Prinzip ist bei Bremsanlagen für SAE Level 4 mit E-Pedal oder SAE Level 5 ohne Pedal zwingend einzuhalten, da kein Bremspedal mit Durchgriff durch den Fahrer mehr zur Verfügung steht.

Zusätzlich können von der Primärsteuereinheit auch Magnetventiltreiber der Einlassventile der ersten Druckversorgungseinheit angesteuert werden. Damit ist ausschließlich mit der zweiten Druckversorgungseinheit und den Spezial-Magnetventilen an den Radbremsen eine radindividuelle Druckregelung, insbesondere ein 4-Kanal-ABS oder radindividuelle Bremsmomenteingriffe für Lenkungsfunktionen unabhängig von der Betriebsfähigkeit des Druckerzeugers, z.B. der Pumpe, und des Sekundärsteuergerätes der ersten Druckversorgungseinheit möglich. In einer Ausführungsform sind die Magnetventiltreiber, insbesondere die Spezial-Magnetventile, redundant ausgeführt.

In einer Ausführungsform ist auf dem Sekundärsteuergerät der ersten Druckversorgungseinheit eine von der Hauptsteuerplatine insbesondere galvanisch getrennte Magnetventilelektronik vorgesehen, die mit einer eigenen Spannung versorgt wird und somit autark betrieben werden kann. So kann auch bei einem vollständigen Ausfall der ersten Druckversorgungseinheit ein vollwertiges ABS realisiert werden.

Ferner kann die Umsetzung einer zentralen Fahrdynamikregelung in einer Domäne eines Zentralrechners mit Fahrwerkregelung unter Einbindung von Lenkungsaktuator(en), z.B. einer elektrischen Servolenkung und elektrischen Traktionsmotor(en) vereinfacht werden. Bestehende Softwarearchitekturen können im Wesentlichen behalten und übergreifende Zusatzfunktionen, die ein Zusammenwirken von Lenkungsaktuator(en) und elektrischem Traktionsmotor fordern, können einfach, z.B. im Primärsteuergerät, implementiert werden. In einer Ausführungsform sind Funktionen der ersten Druckversorgungseinheit an die Primärsteuereinheit übertragen, so dass die erste Druckversorgungseinheit nur noch als Drucksteller ausgeführt ist.

Das Fahrdynamiksystem FDS kann als zentrale Fahrdynamikregelung für ein Fahrzeug mehrere der im Weiteren aufgeführten Bestandteile umfassen:
- eine Primärsteuereinheit (M-ECU) zur Erfassung und/oder Generierung von Lenkbefehlen und Bremsbefehlen
- wobei im Primärsteuergerät mindestens einer der Funktionen ABS, ESP, ASR, ACC, AEB, rekuperatives Bremsen, Lenkung in redundanten Microcontroller µC1, µC2, µC3 aufweist.
- mindestens einen elektrischen Traktionsmotor TM1, TM2, TM3 zum Antrieb und Abbremsen von Rädern, je ein Sekundärsteuergerät (ECU-TM1, ECU-TM2, ECU-TM3) oder Fahrzeugachssteuergerät (ECU-VA, ECU-HA)
- mindestens 1 Bremsmodul (BM1) mit hydraulischen Anschlüssen für mehrere Radbremsen
- **ein zentrales** Fahrzeugmodell, mittels dessen die Lenkung- und Bremsbefehle unter Berücksichtigung des Reibwertes der Fahrbahn, der Fahrzeuggeschwindigkeit und/oder der dynamischen Gewichtsverteilung beim Bremsen berechnet werden können
- wobei zum Bremsen und Lenken mindestens die Raddrehzahlsensoren, vorzugsweise weitere Sensoren (Beschleunigungssensoren und/oder Gewichtssensoren) in die Primärsteuereinheit eingelesen werden.

Das Fahrdynamiksystem FDS kann sich dadurch auszeichnen, dass mittels der Primärsteuereinheit (M-ECU) Lenk- und Bremsbefehle für die Bremsmomentmodulation (z.B. ABS, ESP, EBV) an mehrere Sekundärsteuergeräte gesendet werden, derart dass entweder
o ein elektrischer Traktionsmotor oder ein Bremsmodul BM1 oder BM2 ein Grundbremsmoment bereitstellt und über elektrische Traktionsmotoren die Bremsmomentmodulation (z.B. ABS, ESP) geregelt wird
∘ oder die Bremsmomentmodulation gemeinsam durch mindestens einen elektrischen Traktionsmotor und mindestens ein Bremsmodul (BM1 oder BM2) geregelt wird
∘ oder an der Hinterachse die Bremsmomentmodulation über elektrische Traktionsmotoren geregelt wird und die Bremsmomentmodulation an der Vorderachse über mindestens ein elektrohydraulisches Bremsmodul (BM1, BM2) geregelt wird.

Das FDS kann derart vorteilhaft genutzt werden, dass die Bremsaggregate in Abhängigkeit der Bremssituation (Komfortbremsung, Notbremsung), Fahrbahnbeschaffenheit (Bremsung auf Asphalt, Schnee, Eis, µ-Sprung, µ-Split) sowie Verfügbarkeit der Bremsmodule in Hinblick auf die Maximierung der Rekuperation sowie die Bremsregelleistung bei unterschiedlichen Fahrsituationen optimiert werden. Zudem sollen mittels der Regelung über das FDS und durch regeneratives Bremsen über elektrische(n) Traktionsmotor(en), auch bei hohen Verzögerungen <5 m/s die Kosten der Bremssättel reduziert werden. Durch regeneratives Bremsen wird die thermische Belastung der Reibbremse minimiert und ermöglicht eine Verkleinerung einer Scheibenbremse an der Vorderachse oder den Einsatz einer Trommelbremse an der Hinterachse.

Bei der Bremsmomentmodulation wird so über die zentrale Primärsteuereinheit mindestens ein Bremsmodul (BM1, BM2) sowie mindestens ein elektrischer Traktionsmotor (TM1, TM2, TM3) gleichzeitig angesteuert und die Bremsmomentbefehle auf mindestens ein Bremsmodul und mindestens einen elektrischen Traktionsmotor aufgeteilt.

Durch eine Ausführung der Bremsanlage mit mindestens einem Bremsmodul (BM1, BM2) sowie Spezial-Magnetventilen mit vorzugsweiser direkter Ansteuerung über eine Primärsteuereinheit können radindividuelle Bremsmomenteingriffe mittels Steuerung über die Primärsteuereinheit durchgeführt werden. Erfindungsgemäß können bei einem Ausfall eines Radkreises die verbleibenden Radkreise durch Schließen eines Spezialventils des ausgefallenden Radbremskreises weiter betrieben werden. Ferner kann über die zentrale Ansteuerung von mindestens einem Traktionsmotor und mindestens einem Bremsmodul die TTL-Zeit minimiert werden.

Folgende Funktionen profitieren besonders von dieser Ausführung:
- Automatische Notbremse AEB mit hoher Dynamik (50-180 ms) durch gemeinsame Bremsmomenteingriffe über elektrischen Traktionsmotor und Bremsmodul
- Radindividuelle Bremsmomenteingriffe zur Lenkungsunterstützung (Brake to Steer BtS) oder Fahrdynanmik (Brake to Torque Vektoring BtTV)
- Fahrzeugstabilisierung (ESP-Funktion) bei hohen Giergeschwindigkeiten
- Radindividuelles oder achsindividuelles regeneratives Bremsen.

Erfindungsgemäß können die neuen Funktionen und die verbesserte Ausfallsicherheit ausgehend von einer 2-kreisigen ABS/ESP-Bremsanlage durch die Modifikation des hydraulischen Aufbaus und den Ersatz weniger Bauteile erreicht werden. Somit wird ein dreikreisiges oder vierkreisiges Bremssystem mit signifikanten Sicherheitsvorteilen geschaffen. Das Fahrdynamiksystem FDS kann zudem eine radindividuelle Bremsmomentregelung über eine Druckschnittstelle Int-BM1 mit der Primärsteuereinheit vorsehen, wobei die radindividuelle oder achsindividuelle Bremsmomentregelung über die Druckschnittstelle einfacher zu realisieren ist als bei einer Standard-ESP-Einheit. Das erfindungsgemäße System kann zudem präziser und dynamischer den Druck in den einzelnen Radbremsen einregeln. Mittels des erfindungsgemäßen Systems können radindividuelle Bremsmomenteingriffe immer an drei Radbremsen durchgeführt werden, was zu signifikanten Vorteilen bei Fahrzeugstabilisierungsfunktionen und hochdynamischen Vorgängen, wie z. B. AEB mit elektronischer Bremskraftverteilung (EBV), führt.

Ferner werden mit dem Fahrdynamiksystem die Redundanzanforderungen des autonomen Fahrens der SAE Stufe 3-5 (redundante Bremskraftverstärkung, redundante ABS- und EBV-Funktion) erfüllt. Das System kann mit zwei Druckversorgungseinheiten (sog. 2-Box-Bremssystem mit je einer Druckversorgungseinheit) derart betrieben werden, dass neben der redundanten ABS/ESP-Funktion die Regelperformance bei Niedrigreibwert low-µ durch Zusammenwirken der ESP-X-Einheit mit einem externen Druckerzeuger DV2, insbesondere als Teil einer Druckversorgungseinheit, im Vergleich zum Stand der Technik deutlich verbessert wird. Durch die vorteilhafte Einbindung in eine Domänenarchitektur eines E-Fahrzeuges mit einem Zentralrechner in Form der Primärsteuereinheit soll zudem die Notbremsfunktion AEB durch synchronisierte Sollwertvorgabe von Bremsmomenten an das/die Steuergerät(e) eines oder mehrerer elektrischer Traktionsmotoren sowie Sollwertvorgaben von Bremsmomenten verbessert werden. Somit kann die TTL deutlich reduziert werden.

Nachdem das Bremsmoment der elektrischen Traktionsmotoren entweder nur an einer Fahrzeugachse oder mit unterschiedlichen Bremsmomenten an mehreren Fahrzeugachsen wirkt, muss zudem die Bremskraftverteilung (EBV) geregelt werden, d. h. das hydraulische Bremsmoment muss an die Vorder- und Hinterachse anders aufgeteilt werden als in einer Standard-EBV-Regelung. Das erfindungsgemäße System kann den Fall verhindern, dass die Räder der Hinterachse vor den Rädern der Vorderachse blockieren und die Räder der Vorderachse dürfen erst bei einer Verzögerung von 0,85 g blockieren. Im Fall des Radblockierens greift dann das ABS ein und bei der ABS-Regelung muss das Bremsmoment des elektrischen Traktionsmotors mitberücksichtigt werden.

Eine Ausführungsform des erfindungsgemäßen Fahrdynamiksystems kann dadurch gekennzeichnet sein, dass zumindest zwei, vorzugsweise vier Einlassventile der ersten Druckversorgungseinheit durch stromlos offene Spezial-Magnetventile ersetzt werden. Das zuziehfeste Spezial-Magnetventil hat im Gegensatz zum Stand der Technik kein Rückschlagventil, welches in einem parallelen hydraulischen Pfad zum Einlassventil angeordnet ist oder im Einlassventil integriert ist. Wie in der Problemstellung gemäß dem Stand der Technik bereits ausgeführt, dient das Rückschlagventil dazu, dass ein sichererer Bremsdruckabbau auch bei Ausfall oder Teilausfall der Bremsanlage, z. B. der Druckversorgungseinheit, aus den Radbremsen sichergestellt ist. Bei den erfindungsgemäßen Systemen kann hierauf aber verzichtet werden.

Die eingangs genannte Aufgabe wird weiterhin durch ein Schaltventil gelöst. Dieses Schaltventil kann insbesondere in Verbindung mit den bereits beschriebenen Fahrdynamiksystemen eingesetzt werden. Dieses Schaltventil kann einerseits in der Funktion eines Einlassventils (einer ESP-Anlage) und andererseits in der Funktion eines Trennventils einer zweiten Druckversorgungseinheit verwendet werden.

Das Schaltventil kann umfassen:
- ein Ventilstellglied bzw. einen Ventilstößel;
- einen Anker, der mit dem Ventilstellglied bzw. dem Ventilstößel verbunden ist;
- einen elektromagnetischen Antrieb mit mindestens einer Erregerspule zum Verstellen des Ventilstößel zwischen einer geöffneten Ventilstellung und einer geschlossenen Ventilstellung entlang einer Längsrichtung.

Das Schaltventil kann sich dadurch auszeichnen, dass der Anker mindestens einen Permanentmagneten umfasst. Dieser ist in einer Ausführungsform so angeordnet, dass das Ventilstellglied bzw. der Ventilstößel mittels der durch den Permanentmagneten erzeugten Magnetkraft in der geöffneten Ventilstellung gehalten wird. Vorzugsweise wirkt diese Magnetkraft auch ohne das Bestromen des elektromagnetischen Antriebs. Hierdurch kann eine besondere Zuziehfestigkeit des Schaltventils, insbesondere dann, wenn hohe Volumenströme durch das Ventil verlaufen, erreicht werden.

Das vorstehend beschriebene Schaltventil kann ebenso wie die nachfolgend erläuterten Ausführungsformen des Schaltventils als Spezial-Magnetventil im Sinne der vorliegenden Erfindung eingesetzt werden.

In einer Ausführungsform ist im Anker mindestens ein Ringpermanentmagnet oder eine Vielzahl von Permanentmagneten vorgesehen. Der Ringmagnet oder die Vielzahl von Permanentmagneten können eine Polausrichtung haben, die im Wesentlichen senkrecht zur Längsrichtung vorläuft.

In einer Ausführungsform sind der Ringpermanentmagnet bzw. die Vielzahl der Permanentmagneten axial und radial in einem Material mit ferromagnetischen Leiteigenschaften eingebettet.

In einer Ausführungsform sind die Permanentmagnete (PM) und/oder die benachbart angeordneten ferromagnetischen Flussleitstücke derart angeordnet und dimensioniert sind, dass in einem unbestromten Zustand des elektromagnetischen Antriebs die Magnetkraft den Ventilstößel aus der geschlossenen Ventilstellung in die geöffnete Ventilstellung verstellt. Es handelt sich also um ein stromlos geöffnetes Ventil, das sich bei einem Stromausfall automatisch öffnet. Dies hat insbesondere in Verbindung mit dem beschriebenen Fahrdynamiksystem besondere Vorteile, die bereits erläutert wurden.

Der elektromagnetische Antrieb kann die erste Erregerspule und mindestens eine zweite Erregerspule umfassen. Es gibt also redundante Erregerspulen, die vorzugsweise an gesonderte ausgeführte Magnetventiltreiber angeschlossen sind. Dies erhöht ganz allgemein die Ausfallsicherheit des Ventils. Weiterhin kann das Ventil gesondert an unterschiedliche Steuereinheiten, z. B. eine der Sekundärsteuereinheiten und die Primärsteuereinheit angeschlossen werden. Somit kann eine der Steuereinheiten die Kontrolle über das Ventil übernehmen, wenn die andere Steuereinheit ausfällt.

In einer Ausführungsform ist eine H-Brücke mit vier Schaltern, insbesondere Leistungshalbleitern vorgesehen, mittels derer ein elektromagnetisches Feld mit unterschiedlicher Polarisierung erzeugt werden kann, so dass bei bestromter Erregerspule je nach Beschaltung der H-Brücke und resultierender Stromrichtung durch die Erregerspule das Ventil aktiv geschlossen und geöffnet werden kann und unabhängig von der Durchflussrichtung mittels Stromregelung mit variablen Querschnitten sowohl beim Druckaufbau als auch beim Druckabbau betrieben werden kann. Die H-Brücke ermöglich es, das elektrische Magnetfeld durch mindestens eine Erregerspule umzudrehen und zudem die Magnetfeldstärke einzustellen. Damit kann die Kraft auf den Anker (in der Wirkrichtung) und die Amplitude geregelt werden.

In einer (alternativen) Ausführungsform, wird mit dem Schaltventil vorteilhafterweise ein erfindungsgemäßes neues und zugleich kostengünstiges Design mit einem ersten Weicheisenmagnetkreis EM1 und einen zweiten über einen Permanentmagneten erzeugten zweiten Magnetkreis EM2 bereitgestellt, wobei in einer Ausführungsform die Kräfte der beiden Magnetkreise EM1 und EM2 auf den Anker eines Kugelsitzschaltventils wirken.

Einige der erfindungsgemäßen Schaltventile können kostengünstig hergestellt werden, indem die meisten Bauteile eines Standard-Magnetventils (z.B. Ankerdurchmesser und Magnetkreis mit Spulen) verwendet werden und nur der Endteil (Kopfteil) des Ventils modifiziert wird.

So wird das Kopfteil mit einem Permanentmagnetkreis ausgestattet, womit das Spezial-Magnetventil somit einen Weicheisenmagnetkreis (EM1) und einen durch einen einfachen Permanentmagnet erzeugten zweiten Magnetkreis (EM2) in einem Ventil vereint. Diese Ausführungsform hat den großen Vorteil, dass bestehende Fertigungsanlagen für die Herstellung verwendet werden können. So können Einlassventile vorzugsweise mit unveränderten Durchmessern und gleichen Schnittstellen zum Hydraulikblock (HCU) mit der typischen Einpress-Montagetechnik einfach durch die Spezial-Magnetventile ersetzt werden, d. h. die Spezial-Magnetventile können einfach in einen unveränderten Hydraulikblock eingesetzt werden. Zudem muss die ECU (=Sekundärsteuereinheit), die auf einen Hydraulikblock aufgesteckt wird und die Erregerspulen der Magnetventile trägt, nicht oder nur geringfügig modifiziert werden.

Allgemein kann das vorab beschriebene Bremsmodul BM1 mit Spezial-Magnetventilen (ESP-X) wie folgt vielseitig in unterschiedlichen Konfigurationen (A-E) eingesetzt werden:
A) Konfiguration A: Bremsmodul BM1 (z. B. als ESP-X) hydraulisch verbunden mit einem Vakuumbremskraftverstärker ;
B) Konfiguration B: Bremsmodul BM1 hydraulisch verbunden mit einem elektrischen Folgebremskraftverstärker, z. B. wie in DE112009004636B4 ausgeführt;
C) Konfiguration C: Bremsmodul BM1 hydraulisch verbunden mit elektrohydraulischem Bremskraftverstärker mit Pedalgefühlsimulator;
D) Konfiguration D: Bremsmodul BM1 hydraulisch verbunden mit einem zweiten Bremsmodul BM2 und angesteuert über ein Primärsteuergerät sowie ein E-Bremspedal;
E) Konfiguration E: Bremsmodul BM1 als autarke Druckregeleinheit, angesteuert über ein Primärsteuergerät, z. B. als Achsmodul für die Betätigung von zwei Radbremsen, oder zentrale Hydraulik zur Betätigung von vier Radbremsen.

Der Einsatz des zuziehfesten Spezialventils (Radbremskreise mit Abtrennmöglichkeit durch Schließen des Spezial-Magnetventils) ermöglicht bei allen Konfigurationen A-E:
- eine Diagnose der Leckage durch beispielsweise Messung des Druckanstieges oder Volumenstroms beim Druckaufbaus durch eine Druckversorgungseinheit bei geschlossenem Ventil
- eine Diagnose des Ausfalls Radbremskreises durch Messung des Druckanstieges oder Volumenstroms bei offenem Ventil und Vergleich mit der typischen, vorher gemessenen und im Speicher abgelegten Druckvolumenkennlinie des Radkreises
- Entscheidung über Weiterbetrieb des Radbremskreises auch bei geringer Leckage
- Entscheidung über Abtrennung des Bremskreises durch dauerhaftes Schließen des Ventils, das mit einem ausgefallenen Radbremskreis verbunden ist und Weiterbetrieb mit drei Radkreisen.
- Druckabbau wahlweise über Auslassventile oder das Spezial-Magnetventil,
- Halten von Radbremsdrücken bei niedrigen Bremsdrücken in anderen Radbremsen.

Des Weiteren kann bei einem Ausfall z. B. einer Erregerspule oder eines Magnetventiltreibers eines stromlos geschlossenen Auslassventils der Druck alternativ über ein Einlassventil abgebaut werden, womit die Verfügbarkeit des Fahrdynamiksystems FDS steigt.

Da das Spezial-Magnetventil eine besondere Bedeutung für die Funktion und Sicherheit hat, ist es vorteilhaft, wenn dieses Ventil neben der zuziehfesten Ausführung zusätzlich redundante Spulen und Magnetventiltreiber aufweist. Bei stromlos geschlossenen Auslassventilen kann auf diese Redundanz aus Kostengründen verzichtet werden, da bei Ausfall eines Auslassventils der Druck noch über das Spezial-Magnetventil abgebaut werden kann. So ist ein Druckaufbau redundant sichergestellt. Damit kann die Ausfallwahrscheinlichkeit eines Radbremskreises stark reduziert werden und das Fahrdynamiksystem kann mit hoher Zuverlässigkeit mit allen Radbremskreiskanälen betrieben werden. Die Redundanz hat insbesondere eine sehr hohe Bedeutung bei einer radindividuellen Bremsmomentregelung, insbesondere bei einer zentralen Fahrdynamiksteuerung über eine Primärsteuereinheit, z. B. für die Funktionen BtS und BtTV.

Die bekannten Druckregelverfahren können in einer Ausführungsform der Erfindung unverändert bleiben und der Druckaufbau erfolgt über Vordrucksteuerung und Betrieb der Einlassventile mit variablem Ventilöffnungsquerschnitt. Die Magnetventile werden durch Stromregelung bzw. Stromsteuerung als Proportionalventile betrieben (in Fachkreisen als PWM-Betrieb der Einlassventile vereinfacht bezeichnet).

In einer (weiteren) Ausführungsform können in der Druckregelung die neuen Freiheitsgrade bei der Steuerstrategie genutzt werden. Dadurch können Funktionsverbesserungen im ABS-Betrieb sowie neue Funktionen, z. B. radindividueller Bremsmomenteingriff über die Druckschnittstelle mit dem Zentralrechner realisiert werden. Die neuen Funktionen der zentralen Fahrdynamiksteuerung sind insbesondere die radindividuelle Bremsmomentregelung für Torque-Vektoring (BtTV), Bremsmomenteingriffe für die Giergeschwindigkeitsregelung der ESP-Funktion oder Lenkungsfunktion (BtS) und/oder achs- oder radindividuelles regeneratives Bremen.

In einer Ausführungsform (Ventilanschlussvariante I) wird der Ventilsitz der Einlassventile, insbesondere des Spezial-Magnetventils an den (die) Bremskreis(e) angeschlossen und der Ankerraum wird an die Radbremse angeschlossen. Hier wird das Druckregelverfahren A (=Standard-Druckeinstellmodus oder EV_{PWM}/AV_{Δt}-Druckregelverfahren), nämlich das konventionelle Druckregelverfahren mit PWM-Steuerung der Einlassventile beim Druckaufbau und Zeitsteuerung von Auslassventilen beim Druckabbau, (Bremsenhandbuch Abb. 20.12. a) eingesetzt.

Alternativ kann aufgrund der zuziehfesten Einlassventile bei Anschlussvariante I auch das Druckregelverfahren B (Multiplex-/PPC-Verfahren, nachfolgend auch als "Spezial-Druckeinstellmodus I" bezeichnet) eingesetzt werden. Das Multiplex-/PPC-Verfahren hat, wie im Bremsenhandbuch 5. Auflage, Kapitel 20.4 "Integriertes Bremssystem IBS" - Abb.20.13 illustriert, große Vorteile bei der ABS-Regelung auf niedrigen Fahrbahnreibwerten, weil der Druckabbaugradient durch Druckabbau über eine Kolben-Zylinder-Einheit nicht durch den Gegendruck einer Speicherkammer limitiert ist und somit geringere Radgeschwindigkeitseinbrüche des blockierenden Rades realisiert werden können. Das zuziehfeste Einlassventil, insbesondere in Form des Spezial-Magnetventils, wird in der Wirkungsweise entsprechend dem im Bremsenhandbuch Abb. 20.12. b dargestellten Schaltventil eingesetzt. Als Druckquelle und Drucksenke dient vorteilhafterweise eine weitere Druckversorgungseinheit, beispielsweise die zweite Druckversorgungseinheit. Die zweite Druckversorgungseinheit kann eine Kolben-Zylinder-Einheit oder Rotationspumpe umfassen, wobei der Kolben der Kolben-Zylinder-Einheit beim Druckaufbau vorgefahren und Druckabbau zurückgefahren wird bzw. die Rotationspumpe bei Druckaufbau (p_{auf} ) und Druckabbau (p_{ab}) in ihrer Drehrichtung des Pumpenmotors verändert wird.

Bei der Druckregelung nach Druckregelverfahren B und dem Einsatz einer Kolben-Zylinder-Einheit kann das in Fachkreisen bekannte PPC-Verfahren ("Piston Pressure Control") eingesetzt werden, womit durch Nutzung der Sensorsignale Strom, Kolbenposition und Druckvolumenkennlinie der Druck hochdynamisch aufgebaut und abgebaut werden kann. Zudem kann mit diesem Ansatz der zeitliche Druckverlauf präzise geregelt werden. Es kann bei der Druckänderung das Einlassventil offen betrieben werden und der Druckverlauf wird vorzugsweise ausschließlich durch die Volumenregelung über die Kolben-Zylinder-Einheit geregelt (Regelung über Reglerkaskade mit Kolbenweg, Kolbengeschwindigkeit und Strom des Elektromotors) oder gesteuert (stromproportionale Drucksteuerung). Beim Druckaufbau kann das Einlassventil entweder zeitgesteuert oder im Multiplex-/PPC-Verfahren nacheinander (Druckregelverfahren B: p_{auf}/p_{ab}: Multiplex-/PPC-Verfahren) auch gedrosselt mit PWM-Steuerung (p_{auf}: EV_{PWM}; p_{ab}(1): EV _{Δt}, p_{ab}(2): AV_{Δt} Druckregelverfahren) betrieben werden. Damit können mit dem erfindungsgemäßen Fahrdynamiksystem gleichzeitig an unterschiedlichen Radbremsen unterschiedliche Bremsdrücke hochpräzise eingestellt werden.

In einer Ausführungsform kann während des Betriebes zwischen Druckregelverfahren A (Standard-Druckeinstellmodus) und Druckregelverfahren B (Spezial-Druckeinstellmodus I) umgeschaltet werden. Zwischen den Druckregelverfahren wird vorzugsweise derart umgeschaltet, dass Druckregelverfahren A bei ABS-Druckregelung auf Asphalt (high-µ) oder bei einem Reibwertsprung (µ-sprung) eingesetzt wird, wobei gleichzeitig an mehreren Radbremsen hohe Druckänderungen erzielt werden müssen. Das Druckregelverfahren B wird bevorzugt bei niedrigen Reibwerten, z. B. Schnee/Eis (low-µ) eingesetzt. Vorzugsweise ist die Primärsteuereinheit dazu ausgebildet, die unterschiedlichen Bedingungen zu detektieren. In einer Ausführungsform kann ein Bremskreis des Fahrdynamiksystems mit dem Druckregelverfahren A und der zweite Bremskreis mit dem Druckregelverfahren B betrieben werden, soweit die Primärsteuereinheit entsprechend konfiguriert ist.

In einer anderen Ausführungsform (Ventilanschlussvariante II) wird das Spezial-Magnetventil mit dem Ventilsitz an die Radbremse angeschlossen, wodurch der Druck mit variablem Ventilöffnungsquerschnitt gedrosselt abgebaut werden kann. Ein Druckaufbau kann in dieser Ausführungsform unter Verwendung der zweiten Druckversorgungseinheit vorzugsweise durch ein Verschieben des Kolbens sowie eine Zeitsteuerung anstatt PWM-Betrieb nach einem Multiplex-/PPC-Verfahren entweder gleichzeitig oder nacheinander erfolgen. In dieser Ausführungsform ist vorzugsweise die Steuer-/Regelstrategie der ersten Druckversorgungseinheit oder der Primärsteuereinheit angepasst, so dass beim Druckabbau die zweite Druckversorgungseinheit als steuerbare oder regelbare Drucksenke und Druckquelle eingesetzt wird. Der Differenzdruck zum Radbremsdruck kann durch eine Bestimmung der Kolbenposition erfasst und entsprechend eingestellt werden. Mit dieser Ventilanschlussvariante II kann auch auf ein oder mehrere Auslassventile verzichtet werde. Beispielsweise können vier Spezial-Magnetventile als stromlos offene Einlassventile und zwei stromlos geschlossene Auslassventile an der Vorderachse verwendet werden. Auslassventile an der Hinterachse sind dann nicht erforderlich. Ein entsprechendes System hat eine hohe Dynamik und eine geringe Geräuschentwicklung.

Bei der Ventilanschlussvariante II kann erfindungsgemäß ein drittes Druckregelverfahren C (p_{auf}: EV_{ΔT}, p_{ab} (1): EV_{PWM}, p_{ab} (2): AV_{ΔT} Druckregelungsverfahren) eingesetzt werden, bei dem über eine variable Ventilquerschnittsteuerung der Einlassventile der Druckabbau erfolgt. Gegenüber der Ventilanschlussvariante I kann der Druck über mehrere Einlassventile gleichzeitig geräuscharm abgebaut werden. Das ist besonders vorteilhaft für einen geräuscharmen Regelbetrieb für E-Fahrzeuge. Der Druckaufbau erfolgt in einer Ausführungsform über das Druckregelverfahren B (Mulitplex/PPC-Druckregelung) oder Druckregelverfahren C.

Es ergeben sich somit Ausführungsformen, mit unterschiedlichen Druckregelverfahren, die nachfolgend noch einmal tabellarisch zusammengefasst sind.

| Druckaufbau p_{auf} | | | |
|---|---|---|---|
| | Ventilanschlussvariante I | Ventilanschlussvariante II | Mit zweiter Druckversorgungseinheit / Bremsmodul BM2 |
| | (Standard-Druckeinstellmodus = Druckregelverfahren A) | | |
| | | | (Spezial-Druckeinstellmodus I = Druckregelverfahren B) |
| p_{auf} (EV) | Druckregelung mit variablen Ventilquerschnitten | Zeitsteuerung der Magnetventile | Mulitplex/PPC-Verfahren |
| p_{auf} (EV), red. Magnetspule/ -treiber | Druckregelung mit variablen Ventilquerschnitten | Zeitsteuerung der Magnetventile | Multiplex/PPC-Verfahren |
| Druckabbau p_{ab} | | | |
| P_{ab} (AV) | Zeitsteuerung der Magnetventile | Zeitsteuerung der Magnetventile | Mulitplex/PPC-Verfahren |
| P_{ab} (AV) | Zeitsteuerung der Magnetventile | Druckregelung mit variablen Ventilquerschnitten | Mulitplex/PPC-Verfahren |

Erfindungsgemäß ist es möglich, den Druckaufbau (pauf) und den Druckabbau (pab) ohne Redundanzen zu implementieren. Exemplarisch kann der Druckaufbau ausschließlich über Einlassventile (EV) implementiert werden (vgl. Tabellenzeile mit "pauf(EV)" in der ersten Spalte) und der Druckabbau ausschließlich über Auslassventile AV (vgl. Tabellenzeile mit "pab(AV)" in der ersten Spalte).

Bevorzugt sind aber Redundanzen, wie in der Tabelle gezeigt vorgesehen, wobei als Redundanz für den Druckaufbau vorzugsweise eine redundante Magnetspule und ein redundanter Treiber für das Einlassventil vorgesehen ist (vgl. Tabellenzeile mit "p_{auf} (EV), red. Magnetspule/ -treiber" in der ersten Spalte).

In einigen Ausführungsformen kann für den Druckabbau die Redundanz dadurch sichergestellt werden, dass der Druckabbau über Auslassventile (vgl. Tabellenzeile mit "p_{ab}(AV)" in der ersten Spalte) oder Einlassventile (vgl. Tabellenzeile mit "p_{ab}(EV)" in der ersten Spalte) erfolgt. Ohne diese hardware- und softwareseitigen Redundanzen kann beispielsweise beim Ausfall einer Magnetspule eines Auslassventils kein Druckabbau über das Auslassventil erfolgen, weil das Ventil stromlos geschlossen ist und somit den Druckabbau sperrt. Damit kann es zu einer dauerhaften Blockierung der zugeordneten Radbremse kommen.

Das erfindungsgemäße Fahrdynamiksystem hat allgemein den Vorteil, dass radindividuelle Bremsmomenteingriffe und neuartige Regelstrategien für ein rekuperatives Bremsen einfacher und leistungsfähiger bereitgestellt werden können, weil im Gegensatz zum Stand der Technik mit dem Spezial-Magnetventil zumindest in einigen Ausführungsformen der Druck in einer ausgewählten Radbremse gehalten werden kann, während der Bremsdruck in anderen Radbremsen variiert wird.

Bei einem Druckabbau über das Spezial-Magnetventil muss im Gegensatz zu konventionellen Verfahren mit einem Druckabbau über Auslassventile die Pumpe der ersten Druckversorgungseinheit angesteuert werden, um den Druck zurück zu fördern. Dies gilt besonders für Ausführungsformen gemäß den oben beschriebenen Konfigurationen (C) und (D). Bei einem ABS-Betrieb mit Niedrigreibwert ("low-µ") ist das Verfahren aber durchaus auch bei Konfiguration (B) möglich. Auch bei der Konfiguration (E) stellen sich entsprechende Vorteile ein, wenn in einer Ausführungsform der ersten Druckversorgungseinheit eine steuer- oder regelbare Drucksenke, z.B. in Form einer Rotationspumpe, vorgesehen ist, welche durch Umkehr der Drehrichtung Druck abbauen kann.

Die eingangs genannte Aufgabe wird weiterhin durch ein Verfahren gelöst. Insbesondere wird die Aufgabe durch ein Verfahren zum Einstellen eines Bremsdrucks in mindestens einer Radbremse eines Bremssystems gelöst, das die folgenden Schritte umfasst:
- Bestimmen, dass aus mindestens einer der Radbremsen, nämlich einer Zielradbremse Druck abgebaut werden soll;
- Auswahl eines Druckabbaumodus aus einem ersten Druckabbaumodus und einem zweiten Druckabbaumodus;
- wenn der erste Druckabbaumodus ausgewählt ist, Öffnen mindestens eines der der Zielradbremse zugeordneten Auslassventils, um den Druckabbau zu implementieren;
- wenn der zweite Druckabbaumodus ausgewählt ist, Geschlossenenhalten des der Zielradbremse zugeordneten Auslassventils und Öffnen mindestens eines des der Zielradbremse zugeordneten Einlassventils und Erzeugung eines Differenzdruckes in einer (externen), vorzugsweise zweiten, Druckversorgungseinheit, um den Druckabbau aus der Zielradbremse über das Einlassventil zu implementieren.

Ein Aspekt der Erfindung besteht also darin, dass für einen optimalen Druckabbau, insbesondere situationsbedingt, zwischen unterschiedlichen Modi ausgewählt werden kann. Zumindest in einem Modus erfolgt der Druckabbau über ein (Spezial-)Einlassventil. Dies ermöglicht zum einen eine Verbesserung der Verfügbarkeit (z.B. Betrieb bei Teilausfall von Ventilen) sowie zum anderen einen Druckabbau mit geringeren Druckschwingungen und somit geringem Geräusch, nämlich
- der Druck kann auch bei Ausfall eines Auslassventils erfolgen (Auslassventil ist bei Ausfall stromlos geschlossen),
- der Druckabbau kann über eine externe Druckquelle im Druckgradienten und/oder Druckgradientenverlauf geregelt oder gesteuert werden,
- der Druckabbau kann bei Auswahl der Ventilanschlussvariante II über die Spezial-Ventile geräuscharm erfolgen.

Im Rahmen der Erfindung erfordert ein Geschlossenhalten eines Ventils, insbeondere eines Auslassventils, nicht zwangsläufig, dass dieses Ventil in irgendeiner Form betätigt wird. Vielmehr kann ein stromlos geschlossenes Ventil, wie es häufig als Auslassventil verwendet wird, erfindungsgemäß dadurch geschlossen gehalten werden, dass kein Strom angelegt und kein irgendwie geartetes Aktivierungssignal ausgegeben wird.

Alternativ wird die Aufgabe durch ein Verfahren zur Durchführung einer ABS-Bremsung in einem Fahrzeug gelöst, wobei das Verfahren umfasst:
- Bestimmen eines geforderten Druckabbaugradienten für mindestens eine Radbremse;
- Verwenden des geforderten Druckabbaugradienten zur Auswahl eines Druckeinstellmodus aus einer Vielzahl von Druckeinstellmodi, wobei die Druckeinstellmodi zumindest umfassen einen ersten und einen zweiten Druckeinstellmodus;
- wenn der erste Druckeinstellmodus ausgewählt wird, Abbauen des Drucks aus mindestens einer Radbremse über mindestens ein Auslassventil unter Verwendung einer Zeitsteuerung;
- wenn der zweite Druckeinstellmodus ausgewählt ist, Abbauen des Drucks aus einer Radbremse, vorzugsweise bei geschlossenem Auslassventil, ausschließlich über ein weiteres Magnetventil, wobei der Druck aus der Radbremse über das weitere Ventil in eine steuer-/regelbare Drucksenke erfolgt.

Die Auswahl des für den Druckabbau verwendeten Modus erfolgt also in Abhängigkeit des geforderten Druckgradienten. Zusätzlich oder alternativ kann bei der Auswahl auch die Menge des abzubadenden Fluids oder die Druckdifferenz berücksichtigt werden.

Der erste Druckeinstellmodus kann ein Standard-Druckeinstellmodus sein, wie dieser bereits erläutert wurde. Bei dem zweiten Druckeinstellmodus kann es sich um den Spezial-Durckeinstellmodus I handeln.

In einer Ausführungsform umfasst die Vielzahl von Druckeinstellmodi einen dritten Druckeinstellmodus, z.B. den Spezial-Druckeinstellmodus II. Wenn der dritte Druckeinstellmodus ausgewählt ist, kann ein Abbauen des Drucks aus mindestens einer Radbremse zumindest zeitweise parallel über mindestens ein der Radbremse zugeordnetes Auslassventil und mindestens über ein weiteres der Radbremse zugeordnetes Magnetventil erfolgen. Das weitere Magnetventil kann ein Spezial-Magnetventil sein, wie dieses in Verbindung mit den unterschiedlichen Ausführungsformen beschrieben wurde. Durch das zumindest zeitweise gleichzeitige Nutzen eines Einlassventils und eines Auslassventils für den Druckabbau kann der Druck schnell und effizient abgebaut werden.

In einer Ausführungsform erfolgt ein Einstellen eines niedrigen Drucks in der Drucksenke, insbesondere < als 5 bar, vorzugsweise < als 3 bar, wenn der zweite Druckeinstellmodus ausgewählt ist.

Die eingangs genannte Aufgabe wird ebenfalls durch eine Primärsteuereinheit mit Instruktionen zur Implementierung mindestens eines der beschriebenen Verfahrens gelöst.

Weiterhin wird die Aufgabe durch ein Fahrzeug oder Fahrdynamiksystem mit einer der beschriebenen Primärsteuereinheiten, insbesondere der zuletzt beschriebenen Primärsteuereinheiten gelöst.

Weitere vorteilhafte Ausführungsformen ergeben sich anhand der Unteransprüche.

Nachfolgend wird die Erfindung mittels mehrerer Ausführungsbeispiele beschrieben, die anhand von Figuren näher erläutert werden. Hierbei zeigen:
- Figur 1:: einen ESP-Hydraulikschaltplan gemäß dem Stand der Technik;
- Figur 2a:: eine FDS-Systemarchitektur mit Primärsteuereinheit und mehreren Sekundärsteuereinheiten für Traktionsmotoren und zwei Bremsmodule BM1, BM2
- Figur 2b:: ein exemplarisches Ausführungsbeispiel der Bremsmodule gemäß Figur 2a mit Spezial-Magnetventilen als Trennventile;
- Figur 2c:: eine Ventilanschlussvariante für den Anschluss der Spezial-Magnetventile als Trennventile nach Figur 2b im zweiten Bremsmodul;
- Figur 3a:: eine schematische Darstellung eines ersten Bremsmoduls BM1, bei dem zwei Einlassventile eines Bremskreises mit zuziehfesten Spezial-Magnetventilen ausgestattet sind (mit 3-Kanal-Bremsmomentmodulationsfunktion);
- Figur 3b:: eine schematische Darstellung eines ersten Bremsmoduls mit angeschlossenem zweiten Bremsmodul, wobei bei dem ersten Bremsmodul die vier Einlassventile der beiden Bremskreise mit zuziehfesten Spezial-Magnetventilen ausgestattet sind (mit 4-Kanal-Bremsmomentmodulationsfunktion);
- Figur 4a:: eine schematische Darstellung eines Spezial-Magnetventils mit Permanentmagnet und Rückstellfeder;
- Figur 4b:: ein Weg-Kraft-Diagramm zur Verdeutlichung der auf das Ventilstellglied des Spezial-Magnetventils nach Figur 4a wirkenden Kräfte;
- Figur 5a:: eine schematische Darstellung eines Spezial-Magnetventils mit Permanentmagnet integriert im Ventilanker, wobei der Anker durch ein elektromagnetisches Feld mit unterschiedlicher Polarisierung betätigbar ist;
- Figur 5b:: ein Weg-Kraft-Diagramm zur Verdeutlichung der auf das Ventilstellglied des Spezial-Magnetventils nach Figur 4a wirkenden Kräfte in Abhängigkeit von dem angelegten Strom;
- Figur 6:: eine H-Brücke als Treiber für das Spezial-Magnetventil nach Figur 5a für die Erzeugung eines elektromagnetischen Feldes mit unterschiedlicher Polarisierung ;
- Figur 7a:: eine schematische Darstellung einer Abwandlung des Ausführungsbeispiels nach Figur 3b ohne USV-Ventile (mit 4-Kanal-Bremsmomentmodulationsfunktion);
- Figur 7b:: eine schematische Darstellung einer Abwandlung des Ausführungsbeispiels nach Figur 3b ohne USV-Ventile und mit Rückschlagventilen als Ersatz für die HSV-Ventile (mit 4-Kanal-Bremsmomentmodulationsfunktion);
- Figur 8a:: eine schematische Darstellung eines ersten Bremsmoduls für zwei Radbremsen mit Einfachkolbenpumpe, bei dem die beiden Einlassventile als Spezial-Magnetventil ausgeführt sind (Druckabbau in eine Speicherkammer);
- Figur 8b:: eine schematische Darstellung einer Abwandlung des Ausführungsbeispiels nach Figur 8a mit Mehrkolbenpumpe (Druckabbau in einen Vorratsbehälter);
- Figur 8c:: eine schematische Darstellung einer Abwandlung des Ausführungsbeispiels nach Figur 8a mit Rotationspumpe anstelle der Kolbenpumpe (Druckabbau über Auslassventile in den Vorratsbehälter und/oder Spezial-Magnetventile mit einer gesteuerten/geregelten Rotationspumpe als Drucksenke);
- Figur 9:: eine schematische Darstellung einer Abwandlung des Ausführungsbeispiels nach Figur 7b mit nur einem hydraulischen Anschluss für das zweite Bremsmodul;
- Figur 10:: eine schematische Darstellung einer Abwandlung des Ausführungsbeispiels nach Figur 9 ohne Speicherkammern;
- Figur 11:: eine schematische Darstellung zur Visualisierung einer Steuerstrategie eines Einlassventils;
- Figur 12:: eine schematische Darstellung zur Visualisierung einer Steuerstrategie eines Auslassventils;
- Figur 13a:: eine schematische Darstellung der Verwendung des ersten Bremsmoduls aus Figur 3a in Verbindung mit einer elektrisch angetriebenen Kolben-Zylinder-Einheit als zweites Bremsmodul, wobei ein Druckabbau aus zwei Radbremsen visualisiert ist;
- Figur 13b:: eine schematische Darstellung des Ausführungsbeispiels nach Figur 13a, wobei ein Druckabbau in zwei Radbremsen visualisiert ist;
- Figur 14:: eine schematische Darstellung der Verwendung des ersten Bremsmoduls aus Figur 3b in Verbindung mit einer elektrisch angetriebenen Kolben-Zylinder-Einheit als zweites Bremsmodul, wobei ein Druckabbau visualisiert ist;
- Figur 15:: eine schematische Darstellung der Verwendung des ersten Bremsmoduls aus Figur 3b in Verbindung mit einer Kreiselpumpe als zweites Bremsmodul, wobei ein Druckabbau visualisiert ist.

### Figurenbeschreibung

### Figur 1

zeigt den Hydraulikschaltplan eines ersten Bremsmoduls BM1, das als Standard-ESP-Einheit ausgeführt ist. Das erste Bremsmodul BM1 übernimmt die Funktion der ersten Druckversorgungseinheit. Es umfasst:
- vier zeitgesteuerte Auslassventile AV1-AV4, die jeweils einer Radbremse RB1-RB4 zugeordnet sind;
- vier PWM-gesteuerte Einlassventile EV1-EV4, die jeweils einer Radbremse RB1-RB4 zugeordnet sind;
- vier Rückschlagventile, die jeweils parallel zu einem der Einlassventile EV1-EV4 angeordnet sind und somit auch jeweils einer Radbremse RB1-RB4 zugeordnet sind. Die Rückschlagventile sind so angeordnet, dass sie bei einem Druckaufbau in den Radbremse RB1-RB4 sperren und sich beim Druckabbau je nach Druckbedingungen öffnen. Weiterhin sind die Ventile HSV1, HSV2, die es ermöglichen, dass bei geschlossenen Ventilen USV1, USV2 Bremsflüssigkeit über die Pumpen P, die von dem Motor M angetrieben werden, nachgefördert wird und somit ein Druckaufbau erfolgt. Letztendlich bilden die Pumpen P und der Motor Meine Zweikolbenpumpe (erster Druckerzeuger DV1) mit je einem Kolben für je einen ersten Bremskreis BK1 und einen zweiten Bremskreis BK2 aus. Speicherkammern Spk ermöglichen es Bremsfluid beim Druckabbau über die Auslassventile AV1-AV4 aufzunehmen. Die Pfeile illustrieren die möglichen Strömungsrichtungen des Bremsfluides beim Druckaufbau und Druckabbau an.

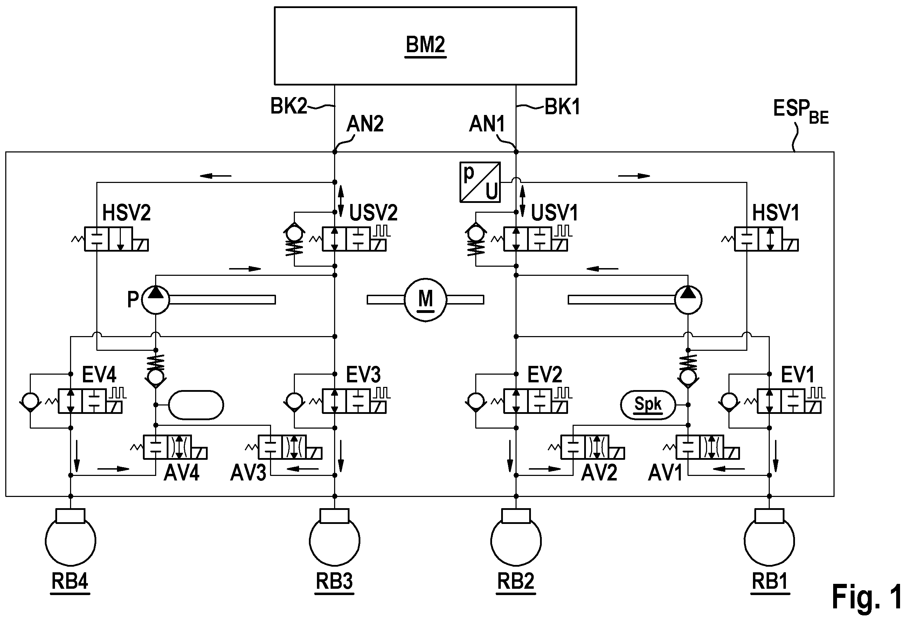

Das erste Bremsmodul BM1 gemäß Figur 1 stellt ein ESP- und eine ABS-Funktion bereit. Dies ESP-Funktion ist hinreichend bekannt und in der Literatur beschrieben, es werden zwölf Magnetventile für die Funktion benötigt. Für die ABS-Funktion werden nur die Einlassventile EV1-EV4 und Auslassventile AV1-AV4, d.h. acht Magnetventile benötigt. Das erste Bremsmodul BM1 verfügt über die beiden Bremskreise BK1, BK2, die über zwei Anschlusspunkte an eine zweite Druckversorgungseinheit angeschlossen sind. Hierbei kann es sich um eine der nachfolgenden handeln:
I. Vakuumbremskraftverstärker gemäß Stand der Technik
II. elektrischer Folgebremskraftverstärker und Bremspedal
III. Bremskraftverstärker mit Pedalgefühlsimulator und Bremspedal
IV. Zweiter Druckerzeuger DV2 mit Ventilen.

Die erste Druckversorgungseinheit der Figur 1a hat einen Drucksensor p/u, der zur Erfassung des Drucks im einem Bremskreis BK1 angeordnet ist.

Nachfolgend sind tabellarisch unterschiedliche Funktionen von modernen Fahrdynamiksystemen wiedergegeben.

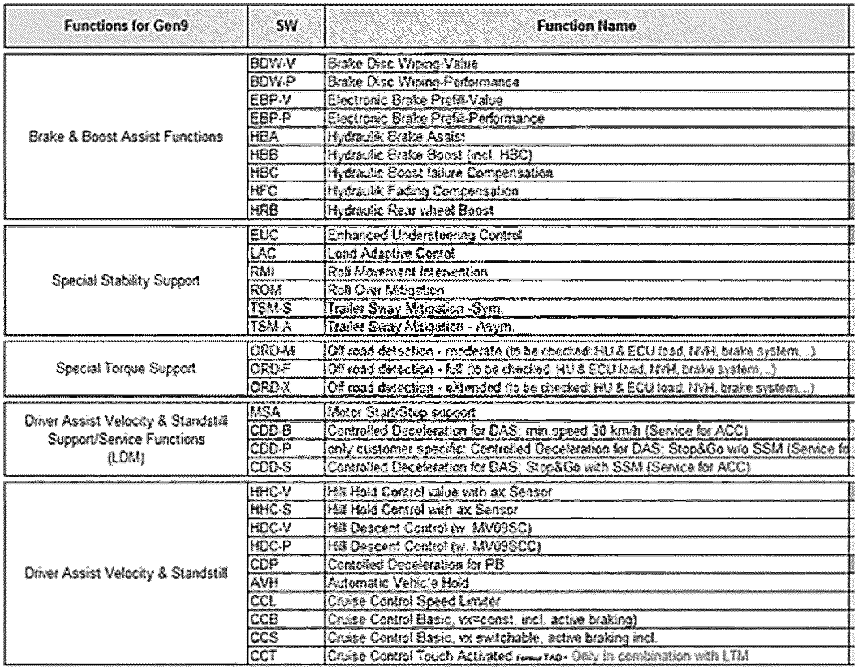

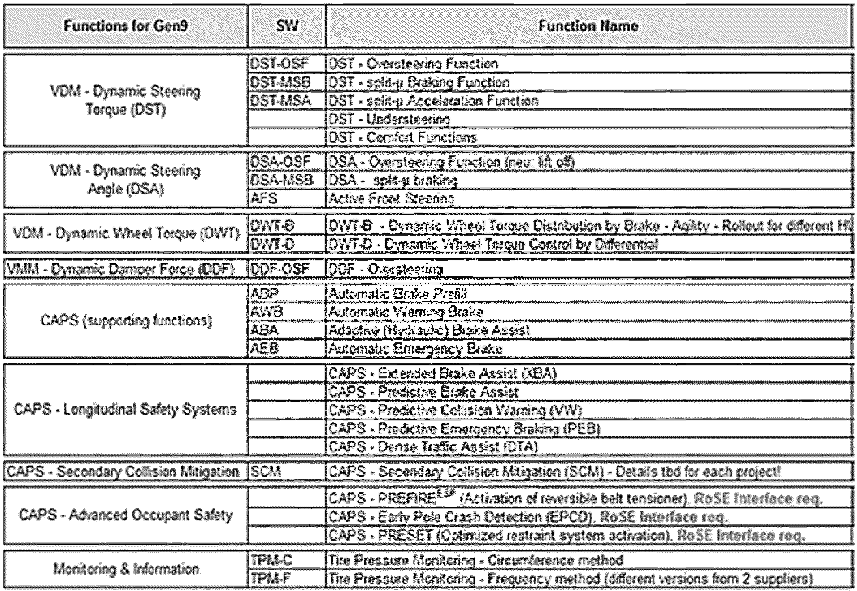

### Figur 2a

zeigt die Architektur eines erfindungsgemäßen Fahrdynamiksystems FDS. Das Fahrdynamiksystem hat einen ersten und einen zweiten Traktionsmotor TM1, TM2 an einer Hinterachse HA des Fahrzeugs und einen dritten Traktionsmotor TM3 an einer Vorderachse VA. Das System kann ein Bremsmodul BM1 und optional weitere Bremsmodule, beispielsweise ein zweites elektrohydraulisches Bremsmodul BM2 haben. Ein wesentliches Element des Fahrdynamiksystem ist Primärsteuereinheit M-ECU-Chassis Domäne, kurz M-ECU, die die Regelung der Bremsmomente von den Traktionsmotoren TM1, TM2, TM3 sowie der Bremsmodule BM1, BM2 für mindestens eine der folgenden Funktionen übernimmt:
A) Notbremse AEB mit gleichzeitiger elektronischer Bremskraftverteilung (EBV)
B) Achsindividuelles oder radindividuelles regeneratives Bremsen
C) Bremsbetrieb über E-Motor bei Ausfall eines Bremsmoduls
D) Radindividuelle Bremsmomenteingriffe zur Lenkungsunterstützung oder Fahrzeugstabilisierung

Die Primärsteuereinheit M-ECU sendet Sollwerte an die unterschiedlichen Aggregate, wobei die Sollwerte insbesondere Bremssollmomente oder Bremssolldrücke umfassen. Für bestimmte Funktionen können Sollsignale für die Drucksteuerung oder Druckregelung, z.B. Steuersignale für Magnetventile und/oder Vordrücke für das zweite Bremsmodul BM2 mit einem zweiten Druckerzeuger DV2 zum Druckaufbau oder Druckabbau vorgegeben werden.

In einem Ausführungsbeispiel hat die Primärsteuereinheit M-ECU eine Schnittstelle zum Steuergerät M-ECU_{AD} oder Domäne des autonomen Fahrens und wertet weitere Informationen aus, die für eine effektive und prädiktive Regelung hilfreich sind. Dies sind z.B. Kamerainformationen über die

Fahrbahnbeschaffenheit (Schnee, Eis, Regen) oder Informationen über die Umgebung (Abstände zu Passanten und/oder anderen Fahrzeugen).

### Figur 2b

zeigt ein sog. 2-Box-Bremssystem, umfassend ein erstes und ein zweites Bremsmodul BM1, BM2. Das erste Bremsmodul BM1 ist ähnlich aufgebaut wie das erste Bremsmodul aus Figur 1a und hat den Funktionsumfang wie dieser oben skizziert wurde. Das zweite Bremsmodul BM2 hat eine durch einen Spindeltrieb angetriebenen Kolben-Zylinder-Einheit (auch als Plunger bezeichnet). Die Kolben-Zylinder-Einheit bildet einen zweiten Druckerzeuger DV2. Als Teil des zweiten Bremsmoduls BM2 sind zwei Trennventile TV1, TV2 vorgesehen, welche die Bremskreise BK1, BK2 von dem zweiten Druckerzeuger DV2 trennen können und welche es ermöglichen, Kernfunktionen umzusetzen:
- Bremskraftverstärkung;
- automatische Notbremse AEB;
- elektronische Bremskraftverteilung EBV;
- 2-Kanal-ABS-Funkion im Multiplex-/PPC-Verfahren.

In einem Ausführungsbeispiel der Erfindung können Redundanzfunktionen zur Erfüllung der Anforderungen für autonomes Fahren der Stufe 4 und 5 bereitgestellt werden.

In beiden Bremsmodulen BM1, BM2 sind Steuergeräte, im weiteren als Sekundarsteuereinheiten S-ECU1, S-ECU2a, S-ECU2b bezeichnet, vorgesehen, die miteinander kommunizieren und vorzugsweise Schnittstellenfunktionen Int_{2BM}, (z.B. gemäß der VDA360-Schnittstellendefinition) aufweisen. Auf Grund der Kommunikationsmöglichkeiten zwischen den Bremsmodulen BM1, BM2 und der (übergeordneten) Steuerfunktion der Primärsteuereinheit M-ECU) können die Komponenten interagieren, um bestimmte Funktionen zu implementieren, z.B. ein Blending, bei dem sowohl der Druckererzeuger des zweiten Bremsmoduls Druck auf- und abbaut während gleichzeitig im ersten Bremsmodul Ventile, z.B. die Radeinlassventile EV1-EV4 und Radauslassventile AV1-AV4 betätigt werden.

Die Verbindung der Bremsmodule BM1, BM2 jeweils über eine Schnittstelle IntBM1 und IntBM2 mit der Primärsteuereinheit M-ECU ermöglicht es weitere Funktionen umzusetzen, wie beispielsweise ABS, ESP, AEB, ACC und neue Domänenfunktionen Torque-Vectoring (BtTV), Lenkungseingriffe durch Bremsen (BtS) und Rekuperations-Management für die elektrischen Traktionsmotoren TM1, TM2, TM3. In diesem Zusammenhang können die Bremsmodule BM1, BM2 als Slaves, d.h. reine Drucksteller agieren und vorgegebene Sollwerte, z.B. Druck- bzw. Bremsmomentsollwerte umsetzen.

In mindestens einem Betriebsmodus dient die Schnittstelle (primär) zur synchronisierten Betätigung beider Bremsmodule BM1, BM2 durch die Primärsteuereinheit M-ECU, z.B. wird der Kolben des zweiten Druckerzeugers DV2 des zweiten Bremsmoduls BM2 verfahren, während gleichzeitig eine oder mehrere Magnetventile des ersten Bremsmoduls BM1 geschalten werden. Die Ausstattung der Bremsmodule mit jeweils einer gesonderten Schnittstelle ermöglicht ein beliebiges Austauschen der Bremsmodule BM1, BM2, d.h. die Bremsmodule BM1, BM2 können von unterschiedlichen Zulieferern bezogen werden. Es kann alternativ nur eine Schnittstelle IntBM1 oder IntBM2 vorgesehen sein, die kommunikativ mit der Primärsteuereinheit M-ECU verbunden ist. In diesem Fall erfolgt die Kommunikation mit der jeweils anderen Einheit über eine standardisierte Schnittstelle Int2BM. In dem Ausführungsbeispiel werden Raddrehzahlsensoren vR1, vR2, vR3, vR4 redundant von mindestens zwei Steuergeräten, beispielsweise eine der Sekundärsteuereinheiten S-ECU1, S-ECU2a, S-ECU2b und der Primärsteuereinheit M-ECU eingelesen, damit die Raddrehzahlsignale stets über die Schnittstellen IntBM1, IntBM2, Int2BM übertragen werden können.

Im gezeigten Ausführungsbeispiel ist das zweite Bremsmodul BM2 über ein Rückschlagventil RV_{NF} (alternativ kann statt Rückschlagventil RV_{NF} auch ein Magnetventil eingesetzt werden) mit einem Vorratsbehälter VB hydraulisch verbunden und weist zur Erfüllung der Anforderungen für autonomes Fahren der Stufe 4 und 5 vorzugsweise zwei dreiphasige Anschlüsse (2x3) auf, wobei jeweils drei Phasen von einer Sekundärsteuereinheit S-ECU2a, S-ECU2b angesteuert werden, wobei Stromsensoren i/u und Motorwinkelgeber α/u vorgesehen sind, die vorzugsweise ebenso redundant ausgeführt sind und für eine hochpräzise PPC-Drucksteuerung oder Druckregelung über Kolbenposition oder Strom verwendet werden. Durch die redundante Ausführung einiger Komponenten des zweiten Bremsmoduls BM2 kann die Verfügbarkeit erhöht werden und analog zur Gestaltung von Steer-by-Wire (zwei Lenkungsaktuatoren, wobei ein Lenkungsaktuator mit 2 x3 Phasen-Motoranschlüssen und einer teilredundanten Elektronik ausgestattet ist) für SAE Stufe 5 eine dritte Rückfallebene geschaffen werden, z.B. bei Ausfall des Pumpenmotors und einem Teilausfall des Motors (Wicklung des Motors, Leistungsendstufe auf der ECU2a oder ECU2b des zweiten Bremsmoduls BM2) ist immer noch eine Bremsmomenterzeugung und Bremsmomentregelung mit ca. 50% des Drehmomentes des Motors möglich. Am Ausgang der Druckversorgung des zweiten Bremsmoduls BM2 ist vorzugsweise ein Drucksensor p/u vorgesehen, der primär für Kalibrierungszwecke verwendet wird. Die Druckregelung oder Drucksteuerung kann aber auch ohne diesen Druckgeber durchgeführt werden, wenn der Zusammenhang zwischen BM2-Bremsmoment und Strom oder Kolbenposition anderweitig hergestellt wird. Auch hiermit wird eine weitere Redundanz ermöglicht.

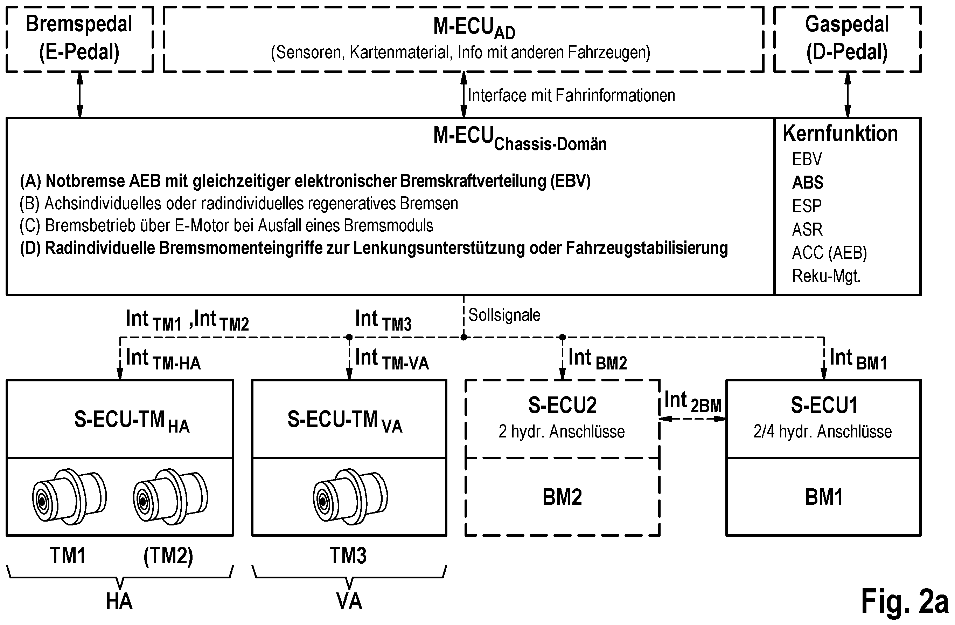

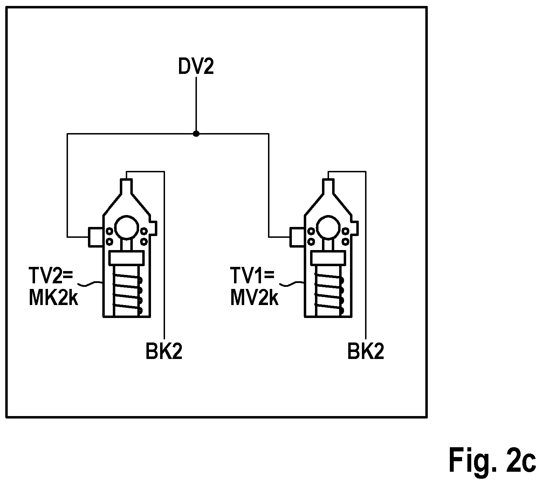

Als (Kreis-)trennventile TV1, TV2 werden in dem Ausführungsbeispiel nach Figur 2a zwei Spezial-Magnetventile MV2k im zweiten Bremsmodul BM2 eingesetzt. Die Spezial-Magnetventile MV2k sind besonders zuziehfest und so ausgestaltet, dass über sie mit hohen Durchflussmengen Q sowohl Druck aufgebaut als auch Druck abgebaut werden kann. Vorzugsweise sind sie dazu geeignet die Druckänderung für einen ABS-Betrieb im Multiplex-/PPC-Verfahren hochdynamisch umzusetzen (d.h. mit Druckgradienten >1000 bar/sec, vorzugsweise > 2000 bar/sec). Die Spezial-Magnetventile sind erfindungsgemäß entsprechend der Systemspezifikation, d.h. maximale Bremsdrücke und maximale Volumenströme zuziehfest, ausgelegt.

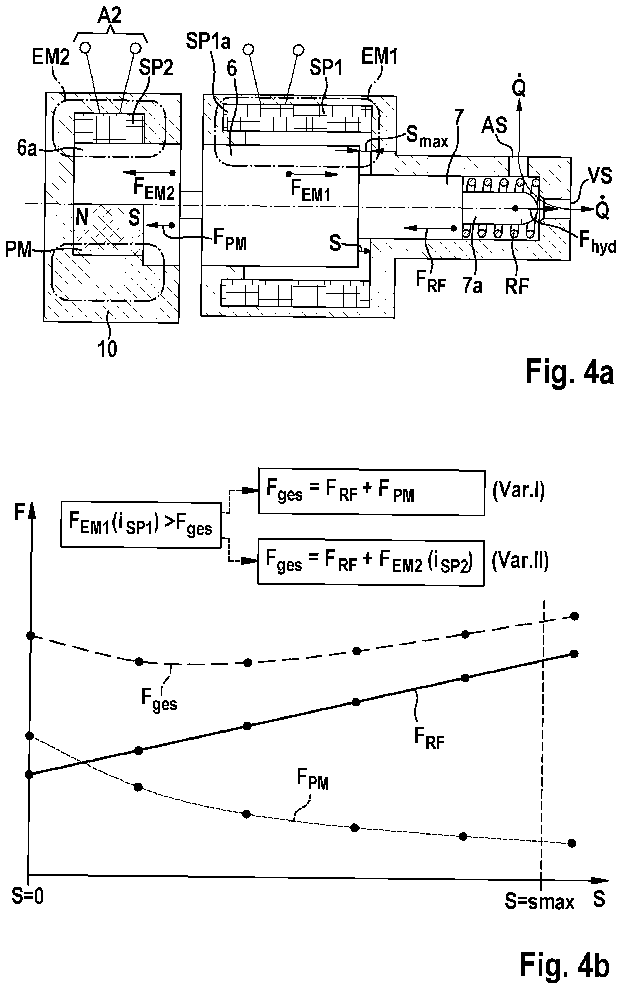

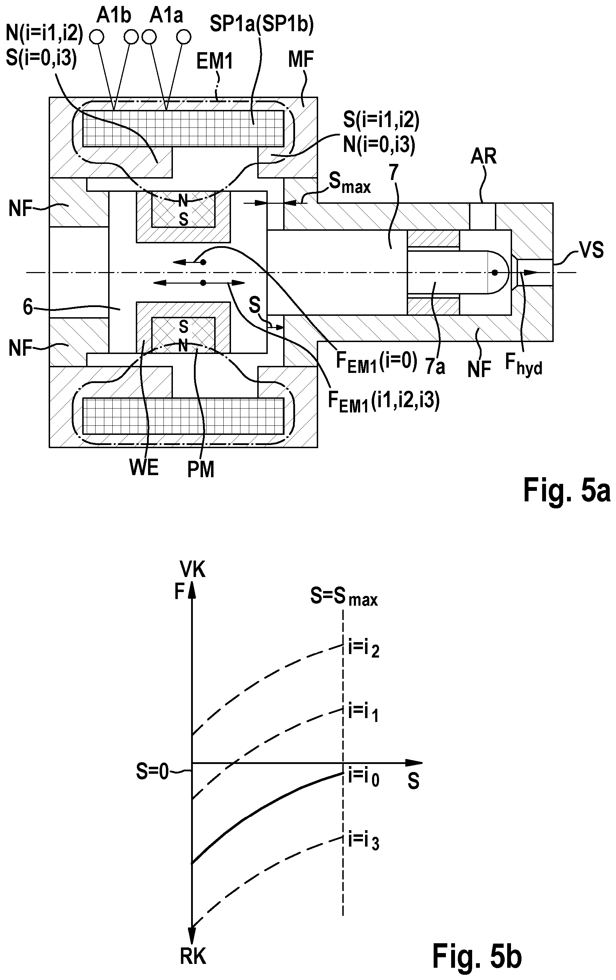

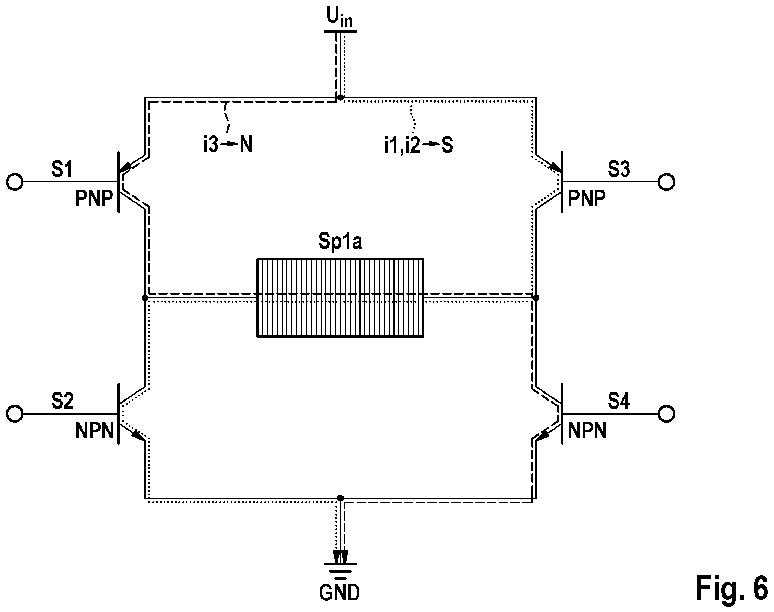

In einem Ausführungsbeispiel werden Spezial-Magnetventile MV2k mit einem ersten Weicheisenmagnetkreis EM1 und zweiten Magnetkreis EM2 gemäß der Figuren 4 oder Spezial-Magnetventile MV2k mit einem Magnetkreis EM1 und einem Permanentmagneten PM im Anker des Ventils gemäß Figur 5a eingesetzt. Bei Einsatz eines Spezial-Magnetventils MV2k mit im Anker eingebettetem Permanentmagnet PM wird vorzugsweise eine H-Brücke zur Stromregelung verwendet, wie diese näher mit Bezugnahme auf Figur 6 erläutert wird. Das Spezial-Magnetventil MV2k dann stromgeregelt mit variablem Ventilquerschnitt sowohl beim Druckaufbau als auch beim Druckabbau betrieben werden. Dies ermöglicht eine besonders geräuscharme und hochpräzise Druckregelung im Druckaufbau und Druckabbau. In der letztgenannten Ausführung kann mit einem Magnetkreis EM1 und einer Erregerspule SP1 eine Magnetkraft in unterschiedlicher Höhe in beide Bewegungsrichtungen erzeugt werden. Durch eine vorteilhafte Positionierung des Permanentmagneten PM ergibt sich auch im stromlosen Zustand eine Rückstellkraft, so dass auf eine Rückstellfeder RF verzichtet werden kann. Erfindungsgemäß kann aber auch zusätzlich zu dem Permanentmagneten PM mindestens eine Rückstellfeder RF vorgesehen sein, wie sich diese beispielsweise aus Figur 4 ergibt.

Alternativ zu den Ventilen aus den Figuren 4 und 6 können als Spezial-Magnetventile auch Standardventile mit einem Magnetkreis EM1 ohne Permanentmagnet, vgl. den Stand der Technik bei 1-Box-Bremssystemen (DE102013222281A1), Figur 1 Bezugszeichen 26a und 26b, eingesetzt werden. Diese Ventile werden erfindungsgemäß entsprechend der Druckdifferenzen und Druckänderungsgeschwindigkeiten der umgesetzten Funktionen, insbesondere der AEB-Funktion und ABS-Funktion, entsprechend ausgelegt. Je nach Funktion kann ein stärkerer Magnetkreis mit größerem Anker und/oder stärkeren Rückstellfedern verwendet werden.

Das erste Bremsmodul BM1 funktioniert autark mit Standard-Druckeinstellmodus (Druckregelverfahren A), wohingegen das Bremsmodul BM2 mit dem Druckregelverfahren B betrieben wird. Ferner kann erfindungsgemäß zwischen einem Standard-Druckeinstellmodus und einem Spezial-Druckeinstellmodus I mit Druckabbau über ein Spezial-Magnetventil und Nutzung des Bremsmoduls BM2 als Drucksenke mit einem Druck <5 bar, insbesondere < 3 bar umgeschalten werden, wenn ein ABS-Betrieb auf sehr niedrigen Fahrbahnreibwerten (low-µ, µ-split) erfolgt.

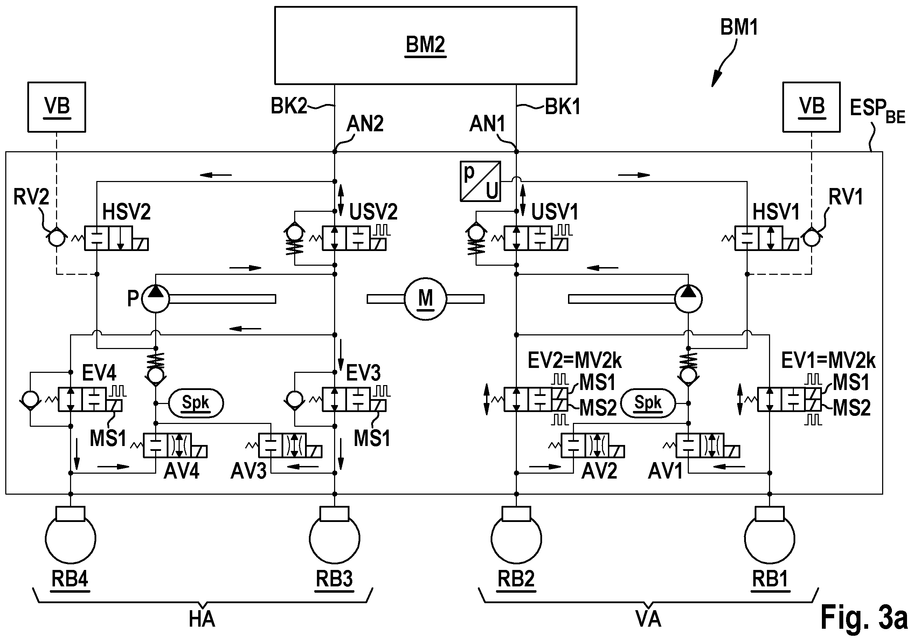

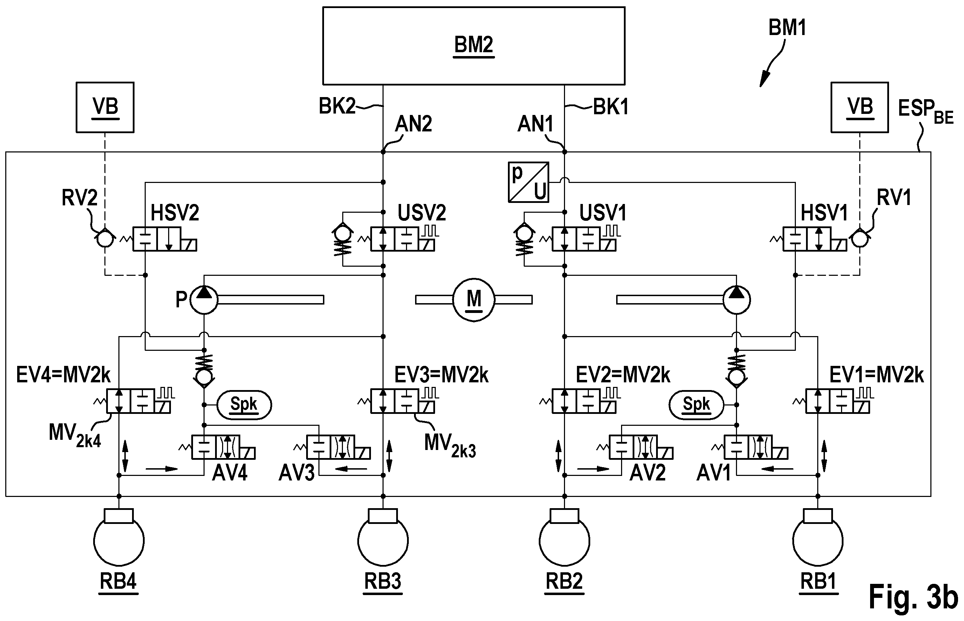

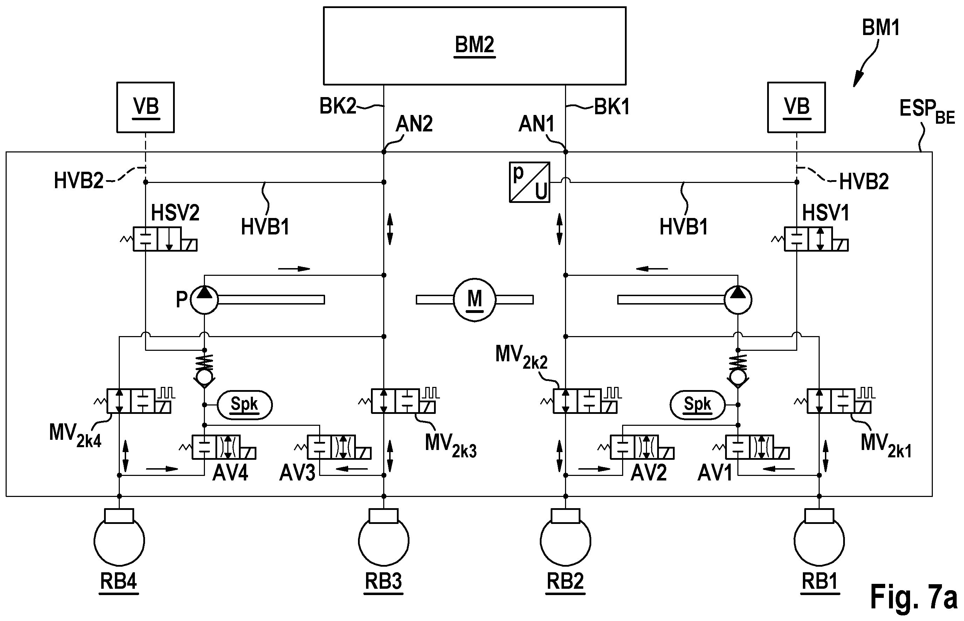

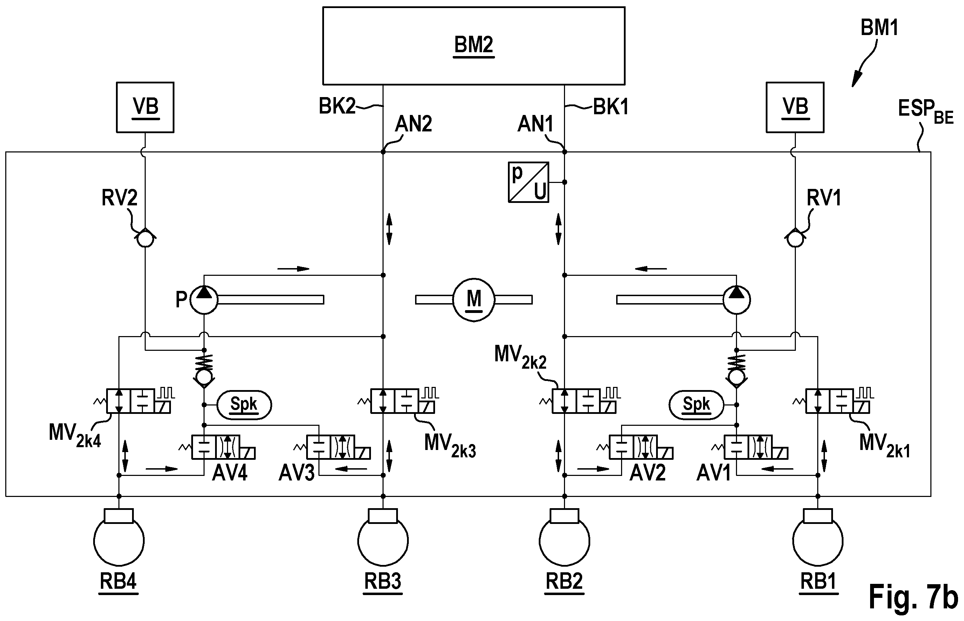

Diese Umschaltmöglichkeit besteht auch bei den weiteren Ausführungsformen (vgl. Figuren 3a, 3b, 7a und 7b) von Bremsanlagen mit zwei Bremsmodulen in der Ausführung mit Speicherkammer und dem Bremsmodul und wird im Folgenden nicht nochmals gesondert ausgeführt.

### Figur 2c

zeigt den vorteilhaften Anschluss des Ventilsitzes VS (z.B. in Fig. 5a) und des Ankerraumes der Trennventile TV1, TV2 an die Bremskreise BK1, BK2. So sind der Ankerraum AR (z.B. in Fig. 5a) mit dem Druckerzeuger DV2 des zweiten Bremsmoduls BM2 hydraulisch verbunden und der Ventilsitz der Spezial-Magnetventile MV2k mit den Bremskreisen. Durch diese Anordnung kann ein Ventilöffnungsquerschnitt, insbesondere durch eine PWM-Ansteuerung oder Stromregelung beim Druckabbau eingestellt werden und somit ein geräuscharmer Druckabbau realisiert werden. Der Druckaufbau erfolgt in dieser Anordnung dann über gesteuerte oder geregelte Volumenzumessung unter Verwendung des zweiten Bremsmoduls BM2, wobei die Trennventile TV1, TV2 beim Druckaufbau vorzugsweise zeitgesteuert werden, und der Druckaufbau im Multiplex-/PPC-Verfahren erfolgt.

Beim Einsatz eines Spezial-Magnetventils MV2k gemäß Figur 5a kann durch die spezielle Stromreglung über eine H-Brücke (vgl. Figur 6) auch der Druckaufbau mit variablem Ventilquerschnitt erfolgen, so dass Totzeiten des Multiplex-/PPC-Verfahrens vermieden werden können und ein simultaner Druckaufbau ohne hohe Anforderungen an den Antrieb erfolgen kann. In diesem Ausführungsbeispiel ist die Anschlussrichtung irrelevant, da mit dem Spezial-Magnetventil MV2k gemäß Figur 5a in beide Richtungen gedrosselt werden kann. Zusätzlich kann es ggf. durch eine entsprechende Bestromung so betrieben werden, dass es zuziehfest ist.

### Figur 3a (Kurzbezeichnung ESP-X_{3k,12MV, 4 RB, SK,KP})

zeigt ein erfindungsgemäßes Ausführungsbeispiel des ersten Bremsmoduls BM1 in einer Ausführung als dreikanaliges Bremssystem mit zwölf Magnetventilen, vier Radbremsen RB1-RB4, Speicherkammern Spk und Kolbenpumpe, das sich von einem Standard-ESP-System dadurch unterscheidet, dass in dem ersten Bremskreis BK1 zwei Einlassventile EV1, EV2 als Spezial-Magnetventil MV2k ausgeführt sind. Auf eine Parallelschaltung von Rückschlagventilen (vgl. RV aus Figur 1) kann auf Grund der besonderen zuziehfesten Eigenschaften dieser Ventile verzichtet werden.

In einem Ausführungsbeispiel werden die Spezial-Magnetventile MV2k mit redundanten Magnetspulen MS1, MS2 und redundanten Magnetventiltreibern ausgestattet, so dass ein redundanter Betrieb möglich ist bzw. ein Magnetventiltreiber über die Primärsteuereinheit M-ECU angesteuert werden kann. Der erste Bremskreis BK1 entspricht im gezeigten Ausführungsbeispiel dem Vorderachsbremskreis eines Fahrzeuges bei einer II-Bremskraftaufteilung. D.h. die Radbremsen RB1, RB2 sind die Radbremsen der Vorderachse VA eines Fahrzeuges.

In einem alternativen Ausführungsbeispiel kann eine X-Bremskreisverteilung gewählt werden. In einer Minimalkonfiguration können in diesem Ausführungsbeispiel die den Radbremsen RB1, RB2 der Vorderachse VA zugeordneten Einlassventile EV1, EV2 als Spezial-Magnetventile MK2k ausgeführt werden. Durch diese Modifikation einer Standard-Bremsanlage können signifikante Verbesserungen erzielt werden, da aus einem 2-kreisigen Bremssystem ein 3-kreisiges Bremssystem wird, wobei für zwei Radbremsen (vgl. Radbremsen RB1, RB2 in Figur 3a) eine Redundanz beim Druckaufbau und Druckabbau gegeben ist. Im Gegensatz zum Stand der Technik kann bei Ausfall einer der ersten oder zweiten Radbremsen RB1, RB2, z.B. der Radbremse RB1, durch Schließen des der defekten Radbremse RB1 zugeordneten Einlassventils EV1 der jeweilige Radbremskreis abgetrennt werden. Damit kann der Regelbetrieb mit den drei verbleibenden Radbremskreisen umfassend die Radbremsen RB2-RB4 fortgesetzt werden. Zusätzlich kann bei einem Ausfall einer Magnetspule eines der Auslassventile AV1, AV2 redundant über das jeweilige Einlassventil EV1, EV2 Druck abgebaut werden. Dies setzt voraus, dass das jeweilige Fahrdynamiksystem eine regelbare Drucksenke, z.B. durch das Vorsehen eines entsprechenden zweiten Bremsmoduls BM2 hat. Mit diesem erfindungsgemäßen Ansatz können signifikante Verbesserungen der erreichbaren Verzögerung gegenüber dem Stand der Technik erreicht werden, da bei Ausfall entweder (a) eine Radbremse RB1, RB2 an der Vorderachse VA sowie zwei Radbremsen RB3, RB4 an der Hinterachse HA oder (b) zwei Radbremsen RB1, RB2 an der Vorderachse VA zum Bremsen zur Verfügung stehen.

Die oben beschriebene Schnittstelle zwischen den Bremsmodulen gemäß VDA360 sind in einem Ausführungsbeispiel dahingehend erweitert, dass neben den in DE102012211278A1 beschriebenen Schnittstellen auch die Einlassventile EV1 bis EV4 extern betätigt werden können. So ist beim Ausfall eines Radkreises eine Giergeschwindigkeitsregelung (ESP), Torque-Vektoring über radindividuelle Bremsmomenteingriffe (BtTV) und ein selektiver Bremsmomenteingriff zur Lenkung (BtS) mit den drei verbleibenden Bremskreisen möglich. Dieser erfindungsgemäße Ansatz hat zudem den Vorteil, dass alle Funktionen gemäß der obenstehenden Tabelle ohne größere Softwareänderungen, insbesondere in dem ersten Bremsmodul BM1, bestehen bleiben können. Die Softwarekomponenten, die für den Druckaufbau verantwortlich sind, müssen derart geändert werden, dass die Zusatzfunktion der 3-kreisigen Regelung im Ausfall eines Radkreises bereitsteht. Ferner kann eine Steuerstrategie, die es der Primärsteuereinheit M-ECU ermöglicht einen Druck einzustellen, mit geringem Entwicklungsaufwand umgesetzt werden, da ein Druck durch das Spezial-Magnetventil an zwei Radbremsen RB1-RB4 gehalten werden kann. So kann radindividuell mittels der speziell ausgestatteten Einlassventile EV1-EV4 unter Verwendung des zweiten Bremsmoduls BM2 Druck aufgebaut und abgebaut werden. Bei radindividueller Bremsmomentregelung oder Bremsmomentsteuerung muss kein Druckabbau über die Auslassventile AV1-AV4 (Umsetzung aller Trennventile TV1-TV4 mit Spezial-Magnetventilen gemäß Figur 3b), bzw. die Auslassventile AV1, AV2 (Umsetzung gemäß Figur 3a) erfolgen und auf eine aufwändige Rückförderung des Bremsfluids mittels der Pumpe P kann verzichtet werden. Entfällt die Notwendigkeit der Rückförderung, kann auch auf die komplexe Druckschwingungskompensation durch das zweite Bremsmodul BM2 beim Rückfördern durch das erste Bremsmodul BM1 verzichtet werden, was sich vorteilhaft auf Geräusch und Verschleiß auswirkt.

Eine Verblendungsstrategie für 2-Box-Bremssytemen ist in der WO2018234387A1 (Seiten 23 - 25) beschrieben und kann auch für eine radindividuelle Bremsmomentsteuerung oder Bremsmomentregelung beim Torque-Vectoring oder bei Lenkeingriffen eingesetzt werden. Mit den Spezial-Magnetventilen MV2k können Verblendungsstrategien bzw. radindividuelle Bremsmomenteingriffe wesentlich einfacher realisiert werden. Weiterhin entstehen Freiheitsgrade, weil der Druck in einer Radbremse RB1-RB4 gehalten werden kann, wenn die Druckversorgungseinheit des zweiten Bremsmoduls BM2 einen anderen Vordruck für eine andere Radbremse einstellt.

In einem Ausführungsbeispiel kann das erste Bremsmodul BM1 um zwei Rückschlagventile RV1, RV2 erweitert werden, die Teil einer Verbindung zwischen den Pumpen P der Bremskreise BK1, BK2 und dem Vorratsbehälter VB sind (vgl. gestrichelte Verbindung in Figur 3a). Dies ermöglicht im Vergleich zum Stand der Technik ein schnelles Ansaugen durch die Pumpe, deutlich schneller als der Ansaugvorgang über die Ventile HSV1, HSV2 und weitere hydraulische Widerstände in Folge der Kombination mit einem zweiten Bremsmodul BM2.

### Figur 3b (Kurzbezeichnung ESP-X_{4k, 12MV, 4 RB, SK, KP})

zeigt das erfindungsgemäße erste Bremsmodul BM1 als 4-kanaliges Bremssystem mit zwölf Magnetventilen, vier Radbremsen RB1-RB4, Speicherkammern Spk und Kolbenpumpe KP, das sich von einem Standard-ESP dadurch unterscheidet, dass in beiden Bremskreisen BK1, BK2 alle Einlassventile EV1-EV4 sowie deren Rückschlagventile RV1-RV4 (vgl. Figur 1a) durch jeweils ein Spezial-Magnetventil MV2k ersetzt sind. In diesem Ausführungsbeispiel wird ein 4-kreisiges Bremssystem geschaffen. Das Ausführungsbeispiel schafft weitere Freiheitsgrade für eine radindividuelle Bremsmomentregelung und stellt eine einfache Druckschnittstelle zur Primärsteuereinheit M-ECU bereit. Durch die Schaffung eines 4-kreisigen Bremssystems im ersten Bremsmodul BM1 kann auf eine Bremskreisaufteilung im zweiten Bremsmodul BM2 verzichtet werden. Beispielsweise kann das zweite Bremsmodul einen einfachen Hauptbremszylinders (HZ) mit nur einem Kolben (sog. Single-Hauptbremszylinder SHZ) und einem Druckraum umfassen, wie dies in der WO2020165294A2 beschrieben ist, wobei der Hauptbremszylinder vorzugsweise mit redundanten Dichtungen ausgeführt wird, wobei der SHZ nur an einen Bremskreis, z.B. dem Vorderachsbremskreis angeschlossen sein muss. Beim Ausfall eines Radkreises im ersten Bremsmodul muss beim zusätzlichen Ausfall der Pumpen P nur sichergestellt werden, dass der defekte Radbremskreis abgetrennt wird. Die kann erfindungsgemäß durch das jeweilige Einlassventile EV1-EV4 erfolgen, das intern und extern angesteuert werden kann. Hierfür sind die Spezial-Magnetventile MV2k mit redundanten Spulen und Magnetventiltreibern ausgestattet.

### Figur 4a

zeigt eine erste vorteilhafte Ausführungsform eines zuziehfesten und bidirektional wirksamen stromlos offenen Magnetventils MV2k. Erfindungsgemäß kann unter dem Begriff "bidirektional" verstanden werden, dass ein Druckaufbau und Druckabbau über das MV2k-Ventil erfolgt. Das Spezial-Magnetventil MV2k funktioniert in beiden Durchflussrichtungen Q sicher, insbesondere bei großen Durchflussmengen, wie z.B. 100 cm³/s - 120 cm³/s, und großen Druckdifferenzen zwischen den Anschlüssen, z.B. 160 bar - 220 bar.

Das Spezial-Magnetventil MV2k hat den typischen Aufbau eines Magnetventils mit elektromagnetischem Kreis EM1, Anker 6, Ventilstellglied 7, umfassend einen Ventilstößel 7a, der einen Ventilsitz VS schließt. Weiterhin ist eine Rückstellfeder RF vorgesehen, die einen linearen Kraftverlauf hat und auf das Ventilstellglied 7 wirkt. Die Rückstellfeder spannt das Spezial-Magnetventil MV2k in eine Ausgangsposition (in Figur 4a gezeigte Stellung) vor.

Insbesondere für den vorbeschriebenen Bereich großer Druckänderungen und Durchflussmengen ist beim Spezial-Magnetventil MV2k sichergestellt, dass es nicht selbsttätig durch Einwirkungen von strömungsdynamischen Kräften schließt. Diese sind dann kritisch, wenn am Ankerraum AR ein hoher Druck vorliegt und an der hydraulischen Verbindung, die auf den Ventilsitz VS wirkt, ein kleiner Druck. Bei der hydrodynamischen Strömung entsteht eine Kraft F_{hyd} , die den Ventilstößel derart kraftbeaufschlagt, dass der Ventilstößel in Richtung Ventilsitz VS bewegt wird. Die Rückstellfeder RF wirkt den strömungsdynamischen Kräften entgegen, reicht aber in Extremfällen nicht aus, um ein Zuziehen unter Einwirkung von strömungsdynamischen Kräften aktiv zu verhindern.

Der Magnetkreis EM1 erzeugt (siehe Figur 4b) über den Hub s eine strom- und positionsabhängige Magnetkraft F_{EM1} = f(i_{SP}), die den Anker in Richtung Anschlag und den Ventilstößel 7a in Richtung Ventilsitz VS bewegt. Der Magnetkraftverkauf ist nichtlinear und steigt mit zunehmend kleinen Luftspalt S (Figur 4a) progressiv, insbesondere mit einer polynomischer Formel mit FM_{EM1}=(sₘₐₓ-s)ⁿ , n = 1,4-2 mit zunehmendem Hub s bzw. kleiner werdenden Luftspalt S zwischen Anker 6 und Anschlag (smax-s) an. Mit höheren Strom i_{SP} kann die Magnetkraft gesteigert werden, ist jedoch durch die Sättigung des Magnetkreises begrenzt. Die Magnetkraft kann jedoch nur in Richtung Ventilsitz VS wirken und damit keine Gegenkraft zu einer hydrodynamischen Kraft F_{hyd} erzeugen, wenn die Strömung Q vom Ankerraum ausgeht. Ist das Ventil geschlossen, kann das Ventil mit Bestromung gegen einen auf den Ventilsitz wirkenden Druck geschlossen aktiv bleiben. Wirkt die Strömung ausgehend vom Ventilsitz VS kann eine Gegenkraft erzeugt werden, somit ist auch ein Betrieb mit variablen Öffnungsquerschnitt möglich, d.h. das Spezial-Magnetventil MV2k wird mit einem variablen Ventilöffnungsquerschnitt vergleichbar wie ein Proportionalventil betrieben. In der Fachsprache wird diese Art der Regelung vereinfacht auch als PMW-Regelung bezeichnet.

Um das Spezial-Magnetventil MV2k zuziehfest zu gestalten, ist in einer ersten Variante ein Permanentmagnet PM als passive Kraftzusatzeinrichtung zur Verstärkung der Rückstellkraft F_{RF} , bedingt durch die Rückstellfeder RF, vorgesehen. Ein permanentmagnetischer Kreis umfasst den Permanentmagneten PM sowie eine Polplatte 10. Der Permanentmagnet ist in einen Zusatzanker 6a integriert, der kraftschlüssig mit dem Anker 6 verbunden ist. Die Pole sind parallel zur Längsrichtung des Spezial-Magnetventils MV2k ausgerichtet, so dass die die Magnetkraft F_{PM} des Permanentmagneten PM additiv zur Rückstellkraft F_{RF} wirkt: Gesamtkraft F_{ges} = F_{PM} + F_{RF}.

Die Magnetkraft FPM ist dadurch charakterisiert, dass die Kraft bei offenem Ventil hoch ist und mit zunehmenden Hub s abfällt. Die Magnetkraft FPM ist bei Hubende S=Sₘₐₓ immer noch groß genug, um die übliche Ankerrückstellung zu übernehmen. Mit entsprechender Auslegung kann die Rückstellfeder 13 ersetzt werden, wenn auch berücksichtigt ist, dass die über die Spule SP2 und den primären Magnetkreis EM1 erzeugte Magnetkraft FEM1 groß genug ist, um die Gegenkraft durch Permanentmagnet oder Rückstellfeder zu überwinden, was durch entsprechende Kennlinienformung des EM-Magnetkreises erreicht werden kann.

Ergänzend oder alternativ kann auch eine zum ersten elektromagnetischen Kreis EM1 zusätzliche Rückstellkraft durch einen zweiten elektromagnetischen Kreis EM2 erzeugt werden. Der zweiten elektromagnetischen Kreis EM2 wird durch Strom in einer zweiten Spule SP2 generiert, wobei das Feld durch den Zusatzanker 6a verläuft, der vorzugsweise aus ferromagnetischem Material besteht. Somit wird auch in dieser Variante eine Kraft erzeugt, die wie die Rückstellkraft FRF der Rückstellfeder RF entgegen der hydrodynamischen Kraft F_{hyd} wirkt. Auch in dieser Variante ist der Anker 6 ist mit einem Zusatzanker 6a mechanisch gekoppelt.

In einem Ausführungsbeispiel kann auf die Rückstellfeder RF verzichtet werden, wenn die Kraftzusatzeinrichtung entsprechend dimensioniert ist.

Ein wesentlicher Aspekt des Spezial-Magnetventils MV2k besteht darin, dass die Gesamtkraft FGes über den gesamten Hub im Wesentlichen linear verläuft. Vorzugsweise ist die Kraft beim Verlassen der Ausgangsstellung bzw. Ausgangsposition erhöht. Eine charakteristische Kräfteverteilung über den Hub s ist in Figur 4b gezeigt. Die Figur verdeutlicht auch, dass sich bei dem erfindungsgemäßen Spezial-Magnetventil MV2k eine deutlich andere Kräfteverteilung (vgl. FGes) ergibt, als bei herkömmlich in diesem Bereich eingesetzten Ventilen (vgl. Rückstellkraft FRF)

### Figur 5a

zeigt ein zweites vorteilhaftes Ausführungsbeispiel eines Spezial-Magnetventils MV2k, das zuziehfest, bidirektional wirksam und stromlos offen ist. Das Spezial-Magnetventil MV2k ist für den beschriebenen Einsatz im ersten Bremsmodul BM1 (als Einlassventil EV1-EV4) sowie im zweiten Bremsmodul BM2 (als Trennventil TV1, TV2) geeignet.

Das Spezial-Magnetventil MV2k hat den typischen Aufbau eines Magnetventils mit elektromagnetischem Kreis EM1. Es verfügt über einen Anker 6, ein Ventilstellglied 7 mit Ventilstößel 7a und einen Ventilsitz VS. In dem Ausführungsbeispiel ist in den Anker 6 ein ringförmiger Permanentmagnet PM integriert, der von Weichmagnetelementen ummantelt ist (Flussleiter). Der Permanentmagnet PM ist mit seinen Polen quer zur Längsrichtung des Spezial-Magnetventils MV2k ausgerichtet. Alternativ können auch eine Vielzahl von entsprechend radial ausgerichteten Permanentmagneten PM vorgesehen sein. Ein elektromagnetischer Feld EM1 wird mittels eines Erregerstroms durch eine Spule SP1a erzeugt, die sich in Kreisbahnen innerhalb eines Abschnitts des Gehäuses des Spezial-Magnetventils MV2k erstreckt. Der elektromagnetische Kreis EM1 erstreckt sich über das Gehäuse, einen linken Schenkel, führt über einen ersten Luftspalt über den Flussleiter im Anker und schließt sich über einen zweiten Luftspalt mit einem rechten Schenkel, wobei beide Schenkel am Gehäuse angeordnet und ferromagnetisch leitend sind. Der linke und der rechte Schenkel sind über einen großen Luftspalt voneinander getrennt, so dass sich das elektromagnetische Feld nicht direkt vom linken zu rechtem Schenkel schließt. Im bestromten Zustand bilden sich in den Schenkeln magnetische Pole aus, die die Pole je nach Stromrichtung durch die Erregerspule SP1a und somit in magnetischer Flussrichtung den Permanentmagneten PM wahlweise anziehen oder abstoßen.

In dem Ausführungsbeispiel ist der übrige Anker 6 aus nicht elektromagnetisch leitendem Material gefertigt. Beispielsweise kann er aus einem kostengünstigen Kunststoffteil hergestellt sein, das verzugsweise auch das Ventilstellglied 7 umfasst. In der Ausgangsstellung ist der Anker 6 so positioniert, dass der Flussleiter näher am linken Schenkel als am rechten Schenkel ist. Dadurch erfährt der Anker 6 eine ventilöffnende Kraftwirkung, die vergleichbar ist mit der Kraftwirkung der Magnetkraft FPM und/oder Rückstellkraft FRF von Figur 4a. Dies ermöglicht es, dass auf eine Rückstellfeder RF verzichtet werden kann. Zudem ist die Rückstellkraft über den Flussleiter mit weniger Toleranzen i.V. zu einer Rückstellfeder RF belastet, da die Ausgestaltung von Magnetkreisen gut reproduzierbar ist.

Im Ausführungsbeispiel nach Figur 5a wird die Erregerspule SP1a über eine H-Brücke (vgl. Figur 6) mit vier Leistungshalbleitern angesteuert. Dies ermöglicht es, dass durch Umkehr der Stromrichtung die magnetische Flussrichtung geändert werden kann. Damit kann das elektromagnetische Feld EM1 die auf den Permanentmagneten PM wirkende Kraft erhöhen oder reduzieren. Das Feld kann auch so umgedreht werden, dass das Spezial-Magnetventil MV2k schließt. Im Ergebnis kann über eine Stromregelung oder Stromsteuerung der Anker 6 in Bildebene nach rechts oder nach links bewegt werden.

Das beschriebene Ausführungsbeispiel hat den Vorteil, dass das Ventil sehr einfach aufgebaut ist. Die H-Brücke umfasst, wie aus der Figur 6 ersichtlich, vier Leistungshalbleiter und je nach Schaltung der Leistungshalbleiter kann die magnetische Flussrichtung bestimmt werden. Werden Leistungshalbleiter S2 und S3 geschalten, erzeugt ein Strom i1, i2 eine erste magnetische Flussrichtung, so dass sich am linken Schenkel ein Nordpol ausbildet und am rechten Schenkel ein Südpol ausbildet und der Anker 6 magnetisch abgestoßen wird, d.h. das Ventil wird geschlossen. Werden Leistungshalbleiter S1 und S4 geschalten, erzeugt ein Strom i3 eine zweite magnetische Flussrichtung, so dass sich am linken Schenkel ein Südpol ausbildet und der Anker zurückgezogen wird, d.h. das Ventil wird geöffnet oder in der geöffneten Stellung gehalten. Durch die erfindungsgemäße Ansteuerung über eine H-Brücke kann die Rückstellkraft durch den Permanentmagneten PM sogar verstärkt werden, was dazu führt, dass das Ventil extrem zuziehfest ist und auch sehr schnell geöffnet werden kann. Das schnelle Öffnen hat den Vorteil, dass Totzeiten beim Druckabbau durch den Öffnungsvorgang der Ventile, die typischerweise bei 2 ms liegen, auf weniger als 1 ms reduziert werden können. Dies ermöglicht einen schnellen Druckabbau ohne Zeitverlust, was sich vorteilhaft auf die ABS-Regelgüte und den Bremsweg auswirkt. Des Weiteren kann der Querschnitt des Spezial-Magnetventils MV2k beim Druckaufbau sehr präzise geregelt werden, und große Ventilöffnungsquerschnitte mit dem Vorteil der verringerten Drosselwirkung mit großen Ventilhüben lassen sich mit dem Ansatz leicht realisieren. Mit der erfindungsgemäßen Ansteuerung über eine H-Brücke können die Spezial-Magnetventile MV2k stromgeregelt mit variablem Ventilquerschnitt sowohl beim Druckaufbau als auch beim Druckabbau betrieben werden. Dies ermöglicht eine besondere geräuscharme und hochpräzise Druckregelung sowohl beim Druckaufbau als auch beim Druckabbau.

In einem Ausführungsbeispiel wird das Spezial-Magnetventil MV2k mit einem großem Querschnitt ausgestattet, wodurch sich die Drosselwirkung beim Druckaufbau deutlich verringern lässt. Damit kann die Zeit bis zur Erzielung des Blockierdrucks verkürzt werden.

Die beschriebenen Spezial-Magnetventile MV2k bieten die Möglichkeit, auf mehrere Auslassventile AV1-AV4 zu verzichten, insbesondere auf zwei Auslassventile an den Radbremsen RB3, RB4 einer Hinterachse HA zu verzichten, weil mit derartigen Ventilen ein 2-kanaliger Multiplexbetrieb sehr einfach zu realisieren ist.

### Figur 5b

zeigt ein Diagramm, das die auf den Anker 6 wirkende Magnetkraft FEM1 (vgl. VK für Vorstellkraft und RK für Rückstellkraft) über den Weg s illustriert. Hierbei ist die gestrichelt dargestellte Grenze smax die Maximalstrecke, bei der der Ventilstößel 7a das Spezial-Magnetventil MV2k schließt. Wird das Spezial-Magnetventil MV2k nicht bestromt (i=0) so ergibt sich in der Ausgangsposition (s=0) eine relativ hoher Rückstellkraft, die über den Weg s abnimmt. Jedoch wirkt auch noch an der geschlossenen Position (s=smax; Ventil ist geschlossen) eine Rückstellkraft, so dass ein ungewolltes Zuziehen des Ventils verhindert wird. Bei einer Bestromung mit negativem Vorzeichen (vgl. i=i3) ergibt sich über den gesamten Weg s eine deutlich stärkere Rückstellkraft.

Bei einer schwachen Bestromung mit einem positiven Vorzeichen (i=i3) ergibt sich lediglich in den Positionen nahe der Ausgangsstellung eine Rückstellkraft. Nach dem überwinden dieser Rückstellkraft wirkt eine Vorstellkraft, die den Ventilstößel in die geschlossene Postion zwingt. Bei starker Bestromung mit positivem Vorzeichen (i=i3) wirkt über den gesamten Weg s eine Vorstellkraft, so dass das Spezial-Magnetventil MV2k gesteuert geschlossen werden kann.

### Figur 7a (Kurzbezeichnung ESP-X_{4k,10MV, 4 RB, SK,KP})

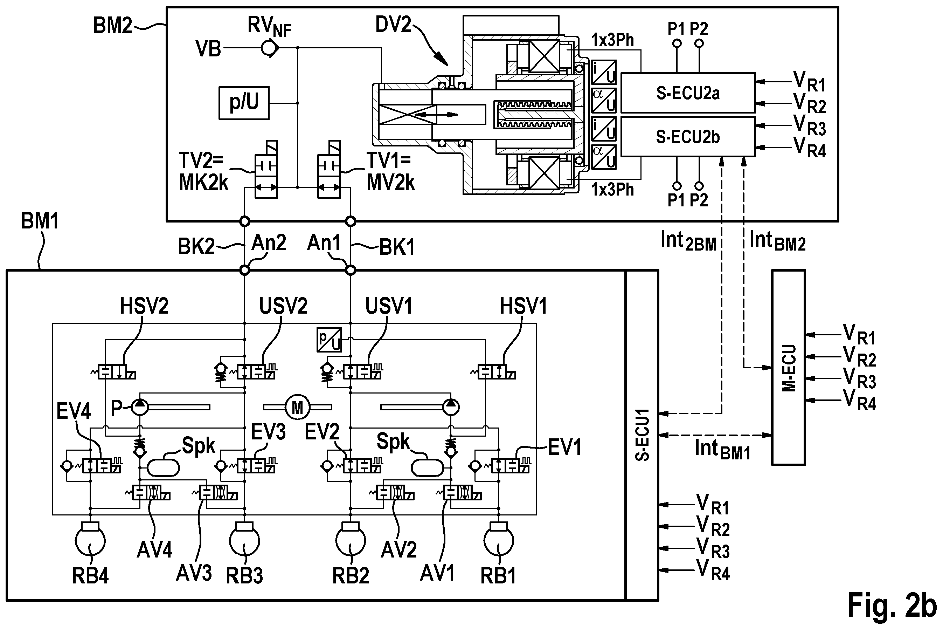

zeigt ein weiteres Ausführungsbeispiel des ersten Bremsmoduls BM1, bei dem auf die Ventile USV1, USV2 verzichtet wird, ohne dass dies zu funktionalen Einschränkungen führen würde. Das Bremsmodul ist vierkreisig, hat zehn Magnetventile, vier Radbremsen und zwei Speicherkammern Spk_. Dies setzt voraus, dass das erste Bremsmodul BM1 mit einem zweiten Bremsmodul BM2 betrieben wird, das zwei gesonderte Bremskreise BK1, BK2 versorgt und Trennventile TV1, TV2 in Form von Spezial-Magnetventilen MV2k aufweist (z.B. wie in Figur 2b ersichtlich). Die Trennventile TV1, TV2 übernehmen dann die Funktion der Ventile USV1, USV2, insbesondere bei ESP-Eingriffen. Zur Umsetzung dieser Lösung ist eine weitere Schnittstelle zwischen den Bremsmodulen BM1, BM2 notwendig. Der Ansatz hat den Vorteil, dass die Drosselwiderstände zwischen dem Druckerzeuger DV2 des zweiten Bremsmoduls BM2 und den Radbremsen RB1-RB4 reduziert werden, wodurch das System noch reaktionsfreudiger wird, was sich beispielsweise positiv bei einer Notbremsung bemerkbar macht.

### Figur 7b (Kurzbezeichnung ESP-X_{4k,8MV, 4 RB, SK, KP})

zeigt ein erstes Bremsmodul BM1 bei dem auf die Ventile USV1, USV2 und auf die Ventile HSV1, HSV2 verzichtet wird. Das Bremsmodul ist vierkreisig, hat acht Magnetventile, vier Radbremsen RB1-RB4, zwei Speicherkammern Spk und eine Kolbenpumpe KP. Zur Umsetzung der Funktionen der Ventile HSV1, HSV2 sind zwei Rückschlagventile RV1, RV2 vorgesehen, die eine Verbindung zum Vorratsbehälter VB herstellen. Dies führt ohne funktionale Einschränkung zu einer weiteren Kostenreduzierung ohne Einschränkungen des Funktionsumfangs.

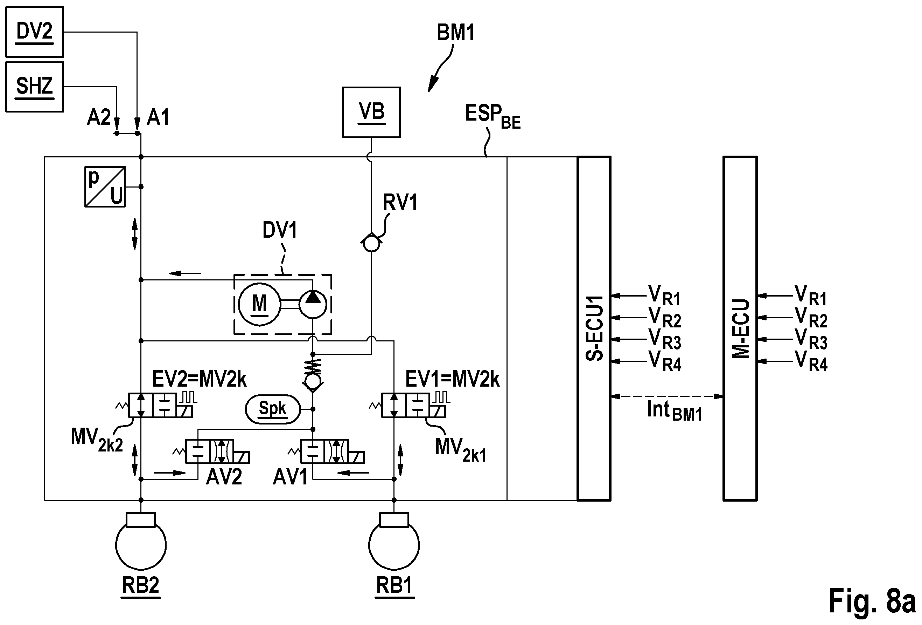

### Figur 8a (Kurzbezeichnung ESP-X_{2k,4MV, 2 RB, SK,KP})

zeigt ein Ausführungsbeispiel, das eine Modifikation des Ausführungsbeispiels nach Figur 7b ist. Dafür sind nur vier Ventile (zwei Einlassventile, zwei Auslassventile) erforderlich. Ein erstes Bremsmodul kann für ein Zweiradfahrzeug oder eine Achse eines Fahrzeuges mit mehreren Achsen eingesetzt werden. Es weist Anschlüsse für genau zwei Radbremsen RB1, RB2 auf, wobei jeder Radkreis gesondert über die Spezial-Magnetventile MV2k, die als Trennventile TV1, TV2 eingesetzt werden, abgetrennt werden kann.

Bei einem Ausfall einer Radbremse RB1, RB2 kann der verbleibende Radbremskreis noch betrieben und ein Bremsmoment auf- oder abgebaut werden. Dieses erste Bremsmodul BM1 sieht vorzugsweise auch eine Schnittstelle IntBM1 zu der Primärsteuereinheit M-ECU vor, so dass Sollvorgaben für radindividuelle Bremsmomenteingriffe direkt über die Primärsteuereinheit M-ECU vorgegeben werden können. Das erste Bremsmodul BM1 funktioniert autark mit Standard-Druckeinstellmodus (Druckregelverfahren A), mit einer weiteren Druckversorgung DV2 kann auch Druckregelverfahren B eingesetzt werden. An dem Bremsmodul BM1 kann im Anschluss A1, A2 wahlweise ein gesondert ausgeführter Druckerzeuger DV2 bzw. ein zweites Bremsmodul BM2 an Aschluss A1 hydraulisch angeschlossen werden oder ein SHZ angeschlossen werden. Ebenso kann, wie in Figur 2b ausgeführt, zwischen einem Standard-Druckeinstellmodus und einem Spezial-Druckeinstellmodus I im ABS-Betrieb umgeschalten werden.

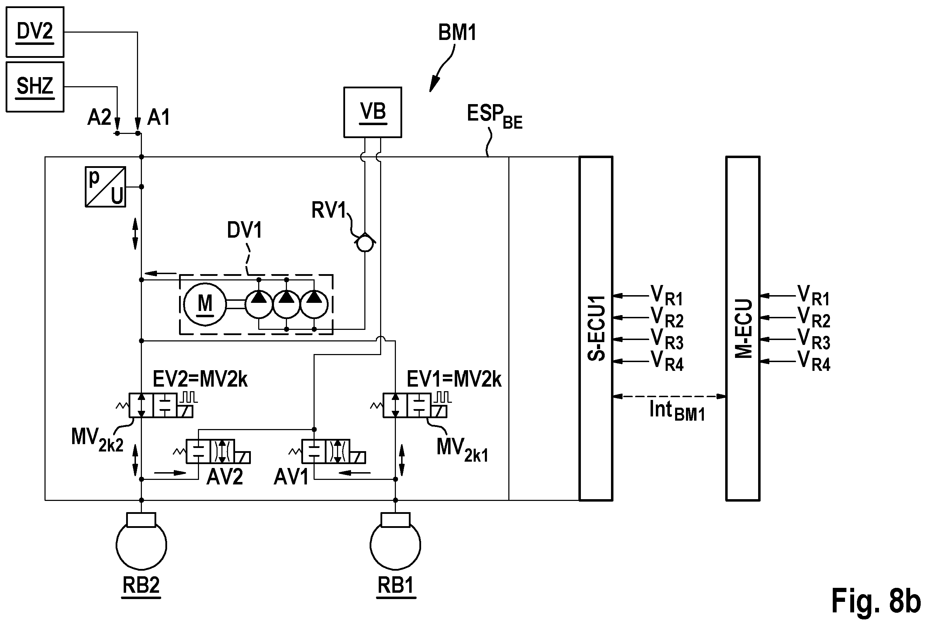

**Figur 8b** **(Kurzbezeichnung ESP-X_{2k,4MV, 2 RB, VB, MKP})** zeigt ein weiteres Ausführungsbeispiel des ersten Bremsmoduls BM1 für zwei Radbremsen RB1, RB2, wobei der Druckerzeuger eine Pumpe mit mehreren Kolben ist. Ein Druckabbau erfolgt über die Auslassventile AV1, AV2 direkt in den Vorratsbehälter VB. Dies hat den regelungstechnischen Vorteil, dass die Regelung bei niedrigen Drücken, insbesondere bei Regelung auf Schnee und Eis deutlich verbessert werden kann, weil der Gegendruck der Speicherkammer SpK nicht die Druckgradienten beim Druckabbau beschränkt. In dieser Ausführungsform ist das Spezial-Druckeinstellmodus I nicht erforderlich.

Das erste Bremsmodul BM1 sieht vorzugsweise auch eine Schnittstelle IntBM1 zur Primärsteuereinheit M-ECU vor, sodass Sollvorgaben von VMC für radindividuelle Bremsmomenteingriffe direkt über die Primärsteuereinheit M-ECU vorgegeben werden können. Das erste Bremsdruckmodul BM1 funktioniert autark mit Druckregelverfahren A, mit einem weiteren Druckerzeuger DV2 kann auch Druckregelverfahren B umgesetzt werden.

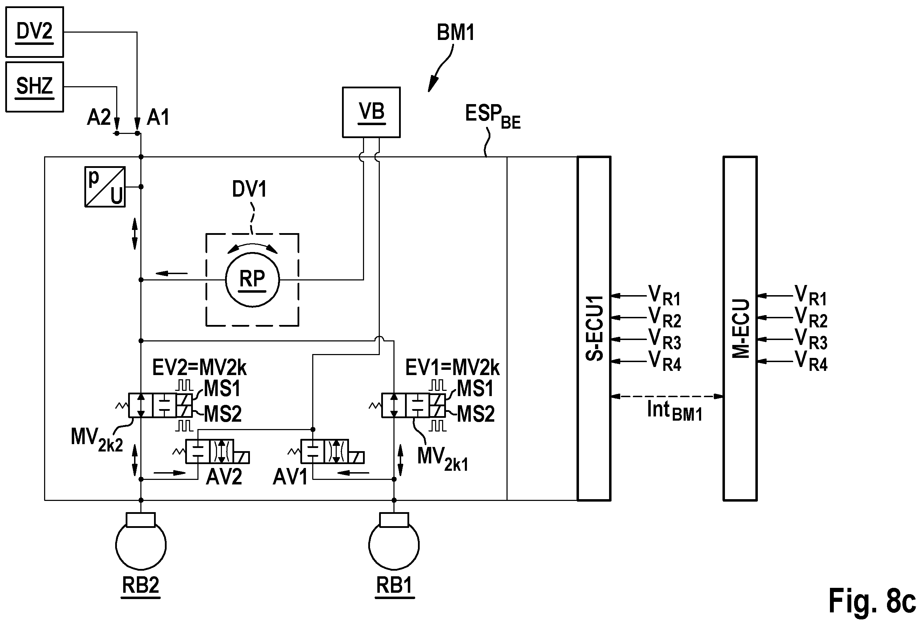

### Figur 8c (Kurzbezeichnung ESP-X_{2k,4MV, 2 RB, VB, RP})

zeigt ein Ausführungsbeispiel ähnlich dem gemäß Figur 8a mit einem ersten Bremsmodul BM1 für zwei Radbremsen. Als Druckerzeuger DV1 ist eine Rotationspumpe RP vorgesehen, mittels der Druck aufgebaut und durch Umkehr der Drehrichtung auch Druck abgebaut werden kann. Die als Einlassventile EV1, EV2 angeordneten und mit den Radbremsen RB1, RB2 verbundenen Spezial-Magnetventile MV2k sind mit redundanten Erregerspulen und redundanten Treibern ausgestattet. Allgemein ist eine entsprechende redundante Ausstattung erfindungsgemäß bei allen Ausführungsbeispielen möglich.

Die beiden Auslassventile AV1, AV2, die jeweils einer Radbremse RB1, RB2 zugeordnet sind, sind für einen effektiven Druckabbau hydraulisch mit dem Vorratsbehälter VB verbunden. Das Ausführungsbeispiel ist dahingehend sehr vorteilhaft, weil mehrere Freiheitsgrade des Druckabbaus bestehen, welche entweder für die Verbesserung der Verfügbarkeit bei Teilausfall oder die Verbesserung der Regelung und der Druckregelmöglichkeiten genutzt werden können. So kann der Druckabbau völlig autark - aus Sicht des ersten Bremsmoduls BM1 - über die Auslassventile AV1, AV2 erfolgen. Zudem kann ein Druckaufbau und Druckabbau mittels eines externen Druckerzeugers DV2, der gesondert oder als Teil eines zweiten Bremsmoduls BM2 vorgesehen ist, erfolgen. Damit ist dieses Ausführungsbeispiel für den Einsatz als kostengünstiges Achsmodul, das vorzugsweise zentral gesteuert wird, besonders geeignet.

Allgemein kann die Rotationspumpe RP in allen beschriebenen Ausführungsbeispielen zusätzlich oder allein als erster Druckerzeuger DV1 oder als zweiter Druckerzeuger DV2 eingesetzt werden. Bei einem Einsatz im ersten Bremsmodul BM1 als erster Druckerzeuger DV1 können das Rückschlagventil RV1 (vgl. z.b. Figur 3b) zwischen Pumpe und Vorratsbehälter VB entfallen. Ein Vorteil des Druckabbaus über die Rotationspumpe RP ist, dass die Druckabbaugradienten durch den Gegendruck der Speicherkammer Spk nicht limitiert sind und zur Verbesserung der ABS-Regelperformance bei low-µ auch ohne externen Durckerzeuger DV2 genutzt werden können.

Das erste Bremsmodul BM1 gemäß Figur 3b sieht vorzugsweise auch eine Schnittstelle Int_{BM1} zur Primärsteuereinheit M-ECU vor, sodass Sollvorgaben von VMC für radindividuelle Bremsmomenteingriffe direkt über die Primärsteuereinheit M-ECU vorgegeben werden können. Das erste Bremsmodul BM1 funktioniert autark mit Druckregelverfahren A oder Spezial-Druckeinstellmodus II (Rotationspumpe wirkt als Drucksenke). Mit einem weiteren Druckerzeuger DV2 kann auch Druckregelverfahren B (Spezial-Druckeinstellmodus I) umgesetzt werden.

**Figur 9** zeigt ein Ausführungsbeispiel ähnlich dem aus Figur 8a. Bei diesem Ausführungsbeispiel ist ein (einziger) hydraulischer Anschluss für ein zweites Bremsmodul BM2 vorgesehen. Es wird der Vorteil der 4-Kreisigkeit durch einen Einsatz der Spezial-Magnetventile MV2k an (allen) vier Radbremsen RB1-RB4 dahingehend genutzt, dass auf eine Bremskreistrennung verzichtet werden kann.

Das Ausführungsbeispiel sieht vorzugsweise auch eine nicht dargestellte Schnittstelle Int-BM1 zu einer zentralen Steuerung, vorzugsweise in Form der Primärsteuereinheit M-ECU, vor, sodass Sollvorgaben für radindividuelle Bremsmomenteingriffe extern vorgegeben werden können. Das beschriebene erste Bremsmodul BM1 funktioniert autark mit Druckregelverfahren A und kann mit einem zweiten Bremsmodul BM2 um Druckregelverfahren B (Spezial-Druckeinstellmodus I) erweitert werden.

### Figur 10

zeigt in einem weiteren Ausführungsbeispiel eine Modifikation des Ausführungsbeispiels nach Figur 9. Das Ausführungsbeispiel hat keine Speicherkammer Spk. Für einen Druckabbau sind die Radbremsen RB1-RB4 über Auslassventile AV1 - AV4 hydraulisch mit dem Vorratsbehälter VB verbunden. Es ist nur ein hydraulischer Anschluss zum Anschließen eines zweiten Bremsmoduls BM2 vorgesehen. Der hydraulische Aufbau ist ähnlich dem der Ausführungsbeispiele gemäß Figur 8b und 8c. Dieses erste Bremsmodul BM1 ist aber für vier Radbremsen ausgelegt. Diese Ausführungsform eignet sich als zentraler Hydraulikdrucksteller, der über einen Zentralrechner, beispielsweise die Primärsteuereinheit M-ECU, angesteuert wird.

Dieses erste Bremsmodul BM1 hat optional eine Schnittstelle Int_{BM1} (nicht dargestellt) zur Primärsteuereinheit, sodass Sollvorgaben für radindividuelle Bremsmomenteingriffe extern vorgegeben werden können. Es funktioniert autark mit Druckregelverfahren A und Druckregelverfahren B.

### Figur 11

zeigt exemplarisch ein erstes Einlassventil EV1, wie es bei einigen oder allen der beschriebenen Ausführungsbeispiele eingesetzt werden kann. Das Einlassventil EV1 ist als Spezial-Magnetventil MV2k ausgeführt und verfügt über redundante Spulen, die jeweils über einen Treiber, bestromt werden. Der erste Treiber (links) ist elektrisch mit dem Sekundärsteuergerät S-ECU1 des ersten Bremsmoduls BM1 verbunden, in dem das jeweilige Einlassventil verwendet wird. Der zweite Treiber (rechts) ist mit zwei Schnittstellen Int2BM und INTBM1 verbunden, so dass er von zumindest einer der Sekundärsteugeräte S-ECU2a des zweiten Bremsmoduls BM2 und der Primärsteuereinheit M-ECU angesteuert werden kann.

In einem Ausführungsbeispiel implementiert das Sekundärsteuergerät S-ECU1 eine PWM-Steuerung mit Pulsweitenmodulation, d.h. einer Taktung der Spannung. Hierzu reicht ein einfacher Schalter. Eine Steuerung durch die Primärsteuereinheit M-ECU oder durch das zweite Bremsmodul BM2 erfolgt vorzugsweise mittels einer Stromregelung i=f(t). Hierfür kann die bereits beschriebene H-Brücke eingesetzt werden. Durch die H-Brücke kann der zeitliche Stromverlauf geregelt werden und es gibt mehr Freiheitsgrad insbesondere für eine Ventilquerschnittssteuerung mit variablem Querschnitt sowohl beim Druckaufbau, mit entsprechender Auslegung auch beim Druckabbau. Somit kann geräuscharm Druck aufgebaut und abgebaut werden. Je nach Ausführungsbeispiel kann die H-Brücke als erster oder zweiter Treiber eingesetzt werden. Alternativ können auch beide Treiber über eine PWM-Steuerung betrieben werden.

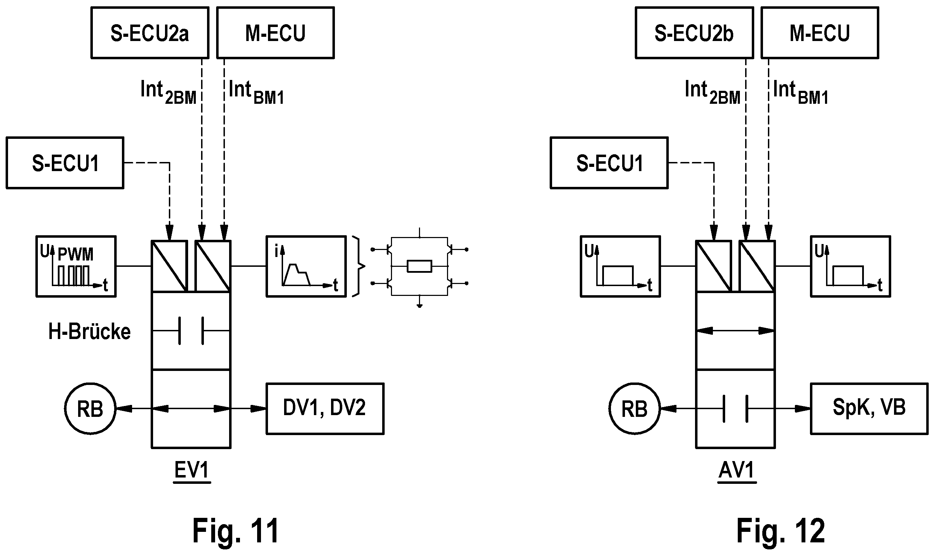

**Figur 12** zeigt ein Auslassventil AV1 wie es bei einem oder allen der beschriebenen Ausführungsbeispiele eingesetzt werden kann. Das Auslassventil AV1 verfügt über redundante Spulen, die jeweils über einen Treiber, bestromt werden. Der erste Treiber (links) ist elektrisch mit dem Sekundärsteugerät S-ECU1 des ersten Bremsmoduls BM1 verbunden, in dem das jeweilige Auslassventil AV1 verwendet wird. Der zweite Treiber (rechts) ist mit zwei Schnittstellen Int2BM und INTBM1 verbunden, so dass er von zumindest einer der Sekundärsteuergeräte S-ECU2a des zweiten Bremsmoduls BM2 und der Primärsteuereinheit M-ECU gesteuert werden kann.

Das Auslassventil AV wir vorzugsweise in einer Zeitsteuerung betrieben, bei der eine Öffnungszeitsteuerung über die Spannung U=f(t) erfolgt.

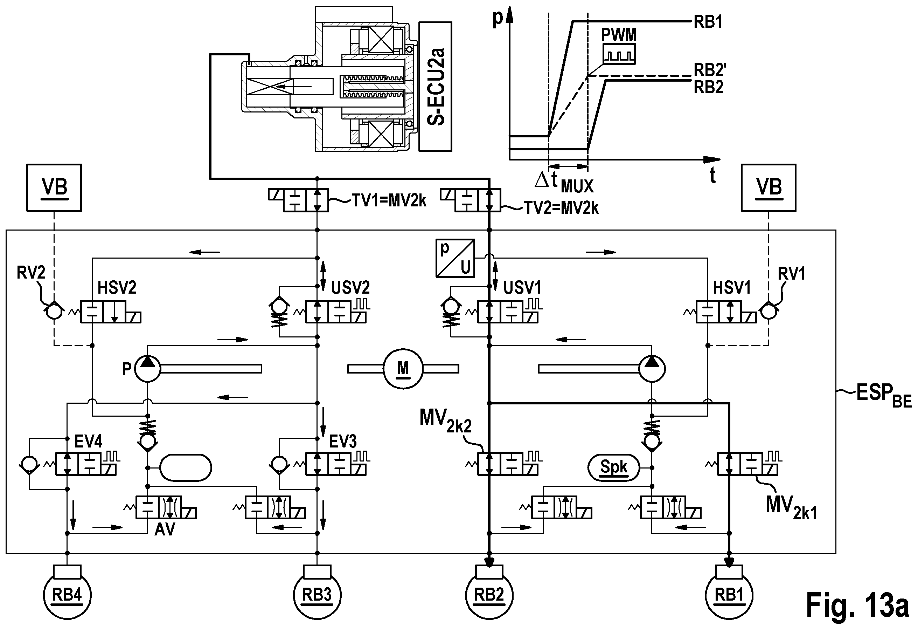

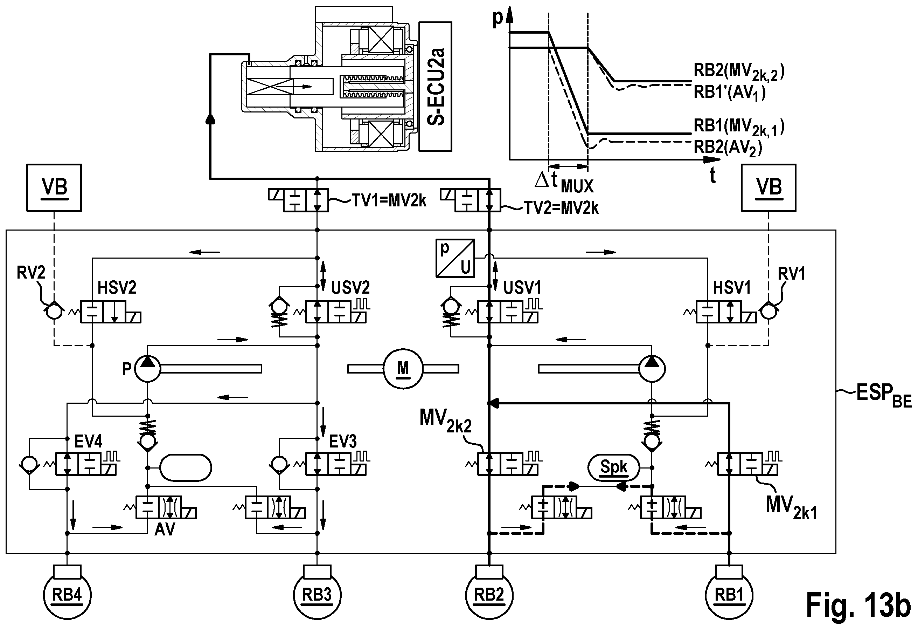

**Figur 13a** und **Figur 13b** zeigen zur Verdeutlichung der Funktionsweise der Bremsmodule BM1, BM2 aus Figur 3a einen Druckaufbau (Figur 13a) und einen Druckabbau (Figur 13b) über das zweite Bremsmodul BM2. Schematisch sind die jeweiligen Volumenflüsse markiert. In der oberen rechten Ecke befinden sich Druckdiagramme über die Zeit (t), die den Druckverlauf in den Radbremsen RB1, RB2 visualisieren.

In dem Ausführungsbeispiel nach Figur 13a erfolgt der Druckaufbau entweder sequenziell nach dem Druckregelverfahren B (MUX) im Multiplex-/PPC-verfahren mit einer Verzugszeit Δtₘᵤₓ oder mittels Druckregelverfahren A (EV_{PWM}), bei dem der Druckaufbau über eine Vordrucksteuerung in mehreren Radbremsen RB1, RB2 zeitgleich erfolgt. Bei dem letztgenannten Verfahren ist vorzugsweise ein Ventil, z.B. das Einlassventil EV1, offen und das andere Ventil, z.B. das zweite Einlassventil EV2 wird PWM-gesteuert betrieben. Alternativ können beide Einlassventile EV1, EV2 mit unterschiedlichen PWM-Frequenzen bzw. Stromprofilen für unterschiedliche Ventilöffnungsquerschnitte betrieben werden, um in den Radbremsen RB1, RB2 bei gegebenem Vordruck unterschiedliche Drücke einzustellen.

Beim Druckabbau gemäß Figur 13b ist beispielhaft der Druckabbau an den Radbremsen RB1 und RB2 dargestellt. Der Druckabbau erfolgt entweder sequenziell nach dem Druckregelverfahren B (MUX) im Multiplex-/PPC-Verfahren im geschlossenen Hydraulikreis über die Spezial-Magnetventile MV2k mit einer Verzugszeit Δtₘᵤₓ oder mittels Druckregelverfahren A (Standard-Druckeinstellungsmodus) mit geöffneten Hydraulikkreis über die Auslassventile AV1, AV2. So kann der Druck aus einer Radbremse RB1 im Multiplex-/PPC-Verfahren abgebaut werden und parallel der Druck in der Radbremse RB2 über Auslassventile aufgebaut werden. Ist ein sehr schneller Druckabbau erforderlich, kann mittels des nicht dargestellten Spezial-Druckeinstellmodus II der Druck auch parallel über Auslassventile und Spezial-Magnetventile abgebaut werden. Fällt ein Auslassventil aus, kann vom Druckregelverfahren A an einer Radbremse auf das Multiplex-/PPC-Verfahren umgeschaltet werden. Durch die Alternativen und Freiheitsgrade ist für jede kritische Fahrsituation eine sehr gute Regelperformance abbildbar bzw. zusätzlich ein redundanter 4-Kanal-Betrieb möglich.

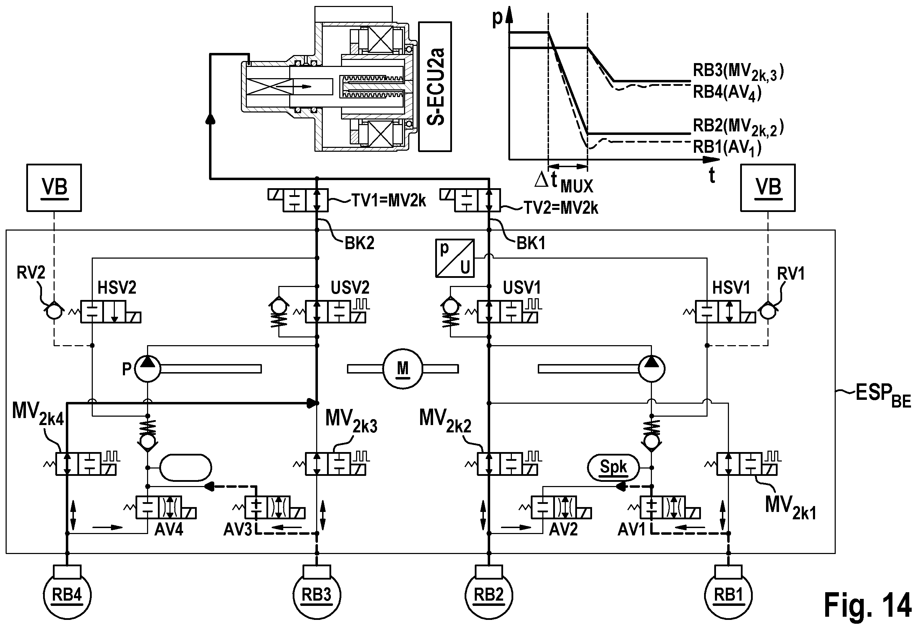

**Figur 14** zeigt den Druckabbau in einer Ausgestaltung der Bremsmodule BM1, BM2, wie sie anhand Figur 3b erläutert wurde. Schematisch ist der Volumenfluss markiert. In der oberen rechten Ecke befindet sich ein Druckdiagramm über die Zeit (t), das den Druckverlauf in den Radbremsen RB1, RB2, RB3, RB4 visualisiert.

Gemäß der hier visualisierten Steuerstrategie kann der Druckabbau nach Druckregelverfahren B im Multiplex-/PPC-Verfahren mit einer Verzugszeit Δtₘᵤₓ oder über das Druckregelverfahren A erfolgen. Über die Kolben-Zylinder-Einheit wird beim MUX-Verfahren der Zieldruck eingestellt, welcher geringer ist als die Drücke in den Radbremsen RB1-RB4. Durch den zeitgleichen Abbau über die Auslassventile AV1-AV4 in die Speicherkammer ohne Verzugszeit kann die Verzugszeit Δtₘᵤₓ vermieden werden. Somit ist keine Einschränkung in kritischen Fahrsituationen durch die Regelung zu erwarten. Zudem kann das erste Bremsmodul BM1 in Hinblick auf Geräusche optimiert werden, indem große Druckgradienten mit dem MUX-Verfahren geregelt werden und somit keine geräuschbildenden Schwingungen aufweisen und kleine Druckgradienten mit dem Druckregelverfahren A realisiert werden.

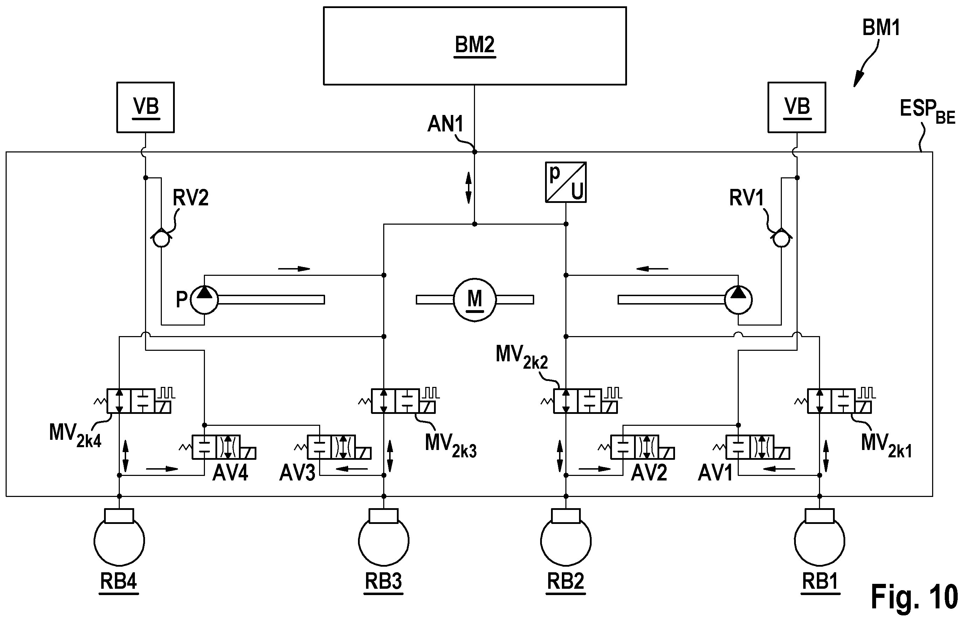

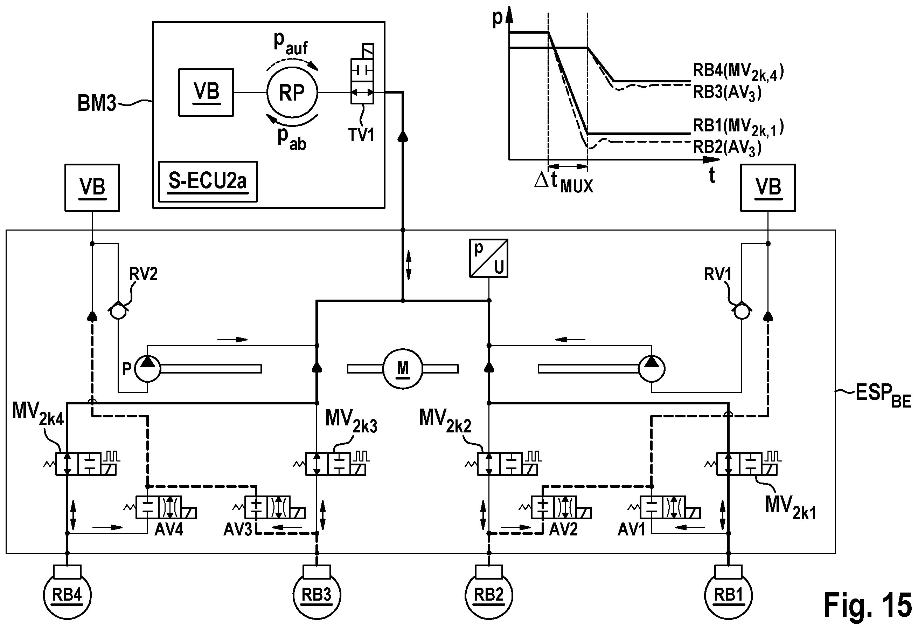

**Figur 15** zeigt eine erfindungsgemäße Lösung mit zwei Druckversorgungseinheiten in der einfachsten und kostengünstigen Ausführung. Das Bremsmodul BM1 ist analog zu Figur 10 nur mit acht Magnetventile ausgestattet, wobei alle Radeinlassventile mit Spezial-Magnetventilen ausgeführt sind, d.h. hier ist eine Bremsmodul BM1 mit 4 Radbremskreisen geschaffen. Als zweite Druckversorgungseinheit wird anstatt einer elektromotorisch angetriebenen Kolben-Zylinder-Einheit eine elektromotorisch angetriebene Rotationspumpe eingesetzt. Aufgrund der Ausführung mit 4 Radbremskreisen ist nur ein hydraulischer Anschluss an das Bremsmodul BM1 erforderlich. Bremsmodul BM1 funktioniert autark, wird aber durch ein drittes Bremsmodul BM3 in der Normalregelung vorzugsweise unterstützt.

Der Druckabbau erfolgt im Standard-Druckeinstellmodus über Auslassventile in den Vorratsbehälter und parallel oder alternativ über die Rotationspumpe. Durch entsprechende Drehrichtung der Rotationspumpe wirkt die Rotationspumpe beim Druckabbau als Drucksenke. Die Ausführungsform bietet neben der hohen Fehlersicherheit viele Freiheitsgrade, insbesondere auch die Möglichkeit des Umschaltens von Standard-Druckeinstellungsmodus (Druckaufbau über Einlassventile und Druckabbau über Zeitsteuerung der Auslassventile) in den Spezial-Druckeinstellungsmodus I und/oder Spezial-Druckeinstellungsmodus II. Bei Ausfall des ersten Bremsmoduls BM1 übernimmt die Rotationspumpe die Funktion des Druckaufbaus, wobei gleichzeitig über die in Figur 11 und Figur 12 ausgeführten Kommunikationsschnittstellen (Int2BM, IntBM1) die Raddruckregelventile über eine Primärsteuereinheit M-ECU oder ein weiteres Sekundärsteuergerät S-ECU2a, S-ECU2b angesteuert werden.

In der vorhergehenden Beschreibung wurde das Spezial-Magnetventil (überwiegend) als ein Spezial-Magnetventil mit einer Kraftzusatzeinrichtung beschrieben, die einen Permanentmagneten und/oder eine zweite Erregerspule umfasst und die zur Bereitstellung mindestens einer auf das Ventilstellglied bzw. den Ventilstößel wirkenden Rückhaltekraft angeordnet ist. In zumindest einigen der beschriebenen Ausführungsformen und Ausführungsbeispielen kann das Spezial-Magnetventil ein beliebiges zuziehfestes Magnetventil sein. So ist es dankbar die Zuziehfestigkeit durch das Vorsehen mindestens einer Drossel zu erreichen, die dafür Sorge trägt, dass der Volumenstrom so gering bleibt, dass es nicht zu einem Schließen des Ventils kommt.

Allgemein kann der Zuzieheffekt kann durch eine Druckdifferenzbegrenzung in der Regelung der Druckversorgungseinheit oder vorzugweise mittels einer nicht dargestellten Drossel begrenzt werden, wobei die Drossel vorzugsweise vor dem Ankeranschluss der Ventilanschluss in einer hydraulischen Leitung angebracht ist.

In einigen Ausführungen des Spezial-Magnetventils kann auf die Rückstellfeder RF verzichtet werden.

Ferner kann das Fahrdynamiksystem in mindestens einer der beschriebenen Ausführungsbeispiele so gestaltet sein, dass eine einfache Applikation der Kernfunktionen über die Primärsteuereinheit M-ECU, insbesondere bedingt durch die hohe Rechenleistung automatisiert in der Applikation der Funktionen in der Entwicklung möglich ist. In mindestens einem der beschriebenen Ausführungsbeispiele kann im Fahrzeugbetrieb über Lernalgorithmen oder Artificial Intelligence (AI) unterstützt werden. Bei der Verwendung von AI kann die Primärsteuereinheit M-ECU die Aufgabe des Applikationsingenieurs übernehmen, was mit Microcontrollern gemäß Stand der Technik (d.h. einer der Regel/Steuereinheit eines Bremssystems aufgrund der sehr begrenzten Leistung und begrenzter Speicher nicht möglich ist. So nimmt der Zentralrechner im Fahrzeugbetrieb Messdaten auf, werte diese aus und appliziert diverse Funktionen, insbesondere die sicherheitskritischen Funktionen ABS, ESP und AEB) im Fahrzeugbetrieb oder beim Fahrzeugstillstand, wenn das Fahrzeug nicht bewegt wird und somit die Anpassung nicht zeitkritisch ist. Daher erfolgt die Anpassung insbesondere nach einem Fahrzeugbetrieb, wenn das Fahrzeug abgestellt wird. Hier hat die vorzugsweise Ausführung als geschlossenes hydraulisches System mit vornehmlich Druckaufbau und Druckabbau über bidirektional wirkende Ventile mittels die Druckversorgungseinheit den großen Vorteil, da die nichtlinearen Zusammenhänge durch geeignete Sensoren über Kennfelder (z.B. Druck-Volumen-kennlinie, Zusammenhang zwischen Motorstrom und Bremsdruck, Zusammenhang zwischen Bremsdruck und Verzögerung bei **Erwärmung** der Radbremse) abgebildet werden können, im Betrieb für die Erfassung von Umwelteinflüssen (z.B. Luft im System, Erwärmung der Radbremse) adaptiert werden. Werden die nichtlinearen Zusammenhänge in mathematischen Funktionen oder Kennfelder abgebildet, kann eine automatische Applikation auch eines elektrohydraulischen Bremssystems erfolgen. Wird der AI-Ansatz konsequent bei einem hydraulischen Bremssystem (EHB) umgesetzt, verschwindet der Vorteil der einfach regelbaren oder steuerbaren elektromechanischen Bremse (EMB) und die Vorteile der geringeren Herstellkosten des hydraulischen Bremssystems werden wirksam, weil die Nachteile in den Applikationskosten weitestgehend verschwinden.

Weitere Aspekte der Erfindung sind die Folgenden:
1. Fahrdynamiksystem für ein Fahrzeug mit Rädern (R1-R4), umfassend:
   - eine Primärsteuereinheit (M-ECU) zur Erfassung und/oder Generierung von Lenkbefehlen und Bremsbefehlen;
   - mindestens zwei hydraulisch betätigbare Radbremsen (RB1-RB4), die jeweils einem Rad (R1-R4) zugeordnet sind;
   - mindestens einen elektrischen Traktionsmotor mit Traktionsmotor-Steuereinheit, wobei der Traktionsmotor (TM1, TM2) angeordnet ist, um mindestens eines der Räder (R1-R4) anzutreiben,
      wobei die Primärsteuereinheit kommunikativ mit einer Traktionsmotor-Steuereinheit verbunden ist, um den Traktionsmotor (TM1, TM2) zur Implementierung der Lenkbefehle und Bremsbefehle zu steuern;
   - mindestens eine (erste) elektrohydraulische Druckversorgungseinheit (BM1) mit
      ∘ mindestens einer elektrischen Motor-Pumpen-Einheit:
      ∘ mindestens zwei Anschlüssen zum Anschließen der Radbremsen (RB1-RB4);
      ∘ elektrisch betätigbaren Radbremsdruckeinstellventilen bzw. Bremsdruckeinstellventilen (AV1-AV4, EV1-EV4), und
      ∘ einer ersten Sekundärsteuereinheit (S-ECU1);

   wobei mindestens einer der hydraulisch betätigbaren Radbremsen (RB1-RB4) ein Bremsdruckeinstellventil in Form eines insbesondere zuziehfesten Spezial-Magnetventils (MV2k) und ein Auslassventil (AV1-AV4) zugeordnet ist, **dadurch gekennzeichnet,** dass
   das Fahrdynamiksystem, insbesondere die Primärsteuereinheit (M-ECU), dazu ausgebildet ist, aus der mindestens einen hydraulisch betätigbaren Radbremse wahlweise über das zugeordnete Auslassventil oder über das Spezial-Magnetventil (MV2k) Druck abzubauen.
2. Fahrdynamiksystem nach Aspekt 1,
   **dadurch gekennzeichnet,** dass
   das mindestens eine Bremsdruckeinstellventil ein Spezial-Magnetventil (MV2k) mit einem elektromagnetischen Antrieb mit einer ersten Erregerspule (SP1, SP1a) ist, über den ein Ventilstellglied (7) bzw. Ventilstößel (7a) zwischen einer geöffneten Ventilstellung und einer geschlossenen Ventilstellung verstellbar ist,
   wobei das Spezial-Magnetventil (MV2k) eine Kraftzusatzeinrichtung aufweist, die einen Permanentmagneten (PM) und/oder mindestens eine zweite Erregerspule (SP1b, SP2) umfasst und die zur Bereitstellung mindestens einer auf das Ventilstellglied (7) bzw. den Ventilstößel (7a) wirkenden Rückhaltekraft (FEM2,FPM) angeordnet ist; und/oder
   die Primärsteuereinheit (M-ECU) dazu ausgebildet ist, zumindest in einem ausgewählten Bremsmodus das Spezial-Magnetventil (MV2k) und die erste Druckversorgungseinheit (BM1) derart anzusteuern, dass aus der dem Spezial-Magnetventil (MV2k) zugeordneten Radbremse (RB1-RB4) bei geöffnetem Spezial-Magnetventil (MV2k) Druck abgebaut wird.
3. Fahrdynamiksystem nach einem der vorhergehenden Aspekte,
   **dadurch gekennzeichnet,** dass
   die Primärsteuereinheit (M-ECU) dazu ausgebildet ist, zumindest in einem ausgewählten Bremsmodus das zugeordnete Spezial-Magnetventil (MV2k) und Auslassventil (AV1-AV4) derart anzusteuern, dass gleichzeitig Bremsfluid über das zugeordnete Spezial-Magnetventil (MV2k) und das zugeordnete Auslassventil (AV1-AV4) aus der Radbremse abgeführt wird.
4. Fahrdynamiksystem nach einem der vorhergehenden Aspekte, **gekennzeichnet** durch:
   mindestens eine zweite Druckversorgungseinheit (BM2), vorzugsweise umfassend eine Kolben-Zylinder-Einheit oder eine Rotationspumpe, die zur Bereitstellung von Bremsfluid an mindestens einem Eingang der ersten Druckversorgungseinheit für einen ersten Bremskreis (BK1) und einen zweiten Bremskreis (BK2) angeordnet ist, wobei vorzugsweise mindestens ein Trennventil zum Abtrennen des ersten und/oder zweiten Bremskreises vorgesehen ist.
5. Fahrdynamiksystem nach einem der vorhergehenden Aspekte,
   **dadurch gekennzeichnet,** dass
   die erste Druckversorgungseinheit (BM1) (unmittelbar) mit genau zwei Radbremsen (RB1-RB4) verbunden ist, wobei die genau zwei Radbremsen (RB1-RB4) Räder an einer ersten Achse bremsen und/oder eine weitere Druckversorgungseinheit (BM3) vorgesehen ist, die (unmittelbar) mit mindestens zwei Radbremsen (RB1-RB4) an einer zweiten Achse verbunden ist.
6. Fahrdynamiksystem nach einem der vorhergehenden Aspekte,
   **dadurch gekennzeichnet,** dass
   das Spezial-Magnetventil (MV2k) stromlos offen ausgeführt ist und derart angeordnet ist, dass ein Ventilsitz des Spezial-Magnetventils (unmittelbar) mit mindestens einer der Radbremsen (RB1-RB4) verbunden ist.
7. Fahrdynamiksystem nach einem der vorhergehenden Aspekte,
   **dadurch gekennzeichnet,** dass
   die Primärsteuereinheit (M-ECU) dazu ausgebildet ist, einen Ausfall zumindest eines Radbremskreises, umfassend eines der Radbremsen (RB1-RB4) zu detektieren und für ein Abtrennen des Radbremskreises das der Radbremse (RB1-RB4) zugeordnete Spezial-Magnetventil (MV2k) zu schließen.
8. Fahrdynamiksystem nach einem der vorhergehenden Aspekte,
   **dadurch gekennzeichnet,** dass
   die erste Druckversorgungseinheit (BM1) eine Rotationspumpe umfasst, die angeschlossen und dazu ausgebildet ist, Druck in den Radbremsen (RB1-RB4) auf- und abzubauen.
9. Fahrdynamiksystem nach einem der vorhergehenden Aspekte, insbesondere nach Aspekt 4,
   **dadurch gekennzeichnet,** dass
   ein/das Spezial-Magnetventil (MV2k), insbesondere das der zweiten Druckversorgungseinheit (BM2) zugeordnete Spezial-Magnetventil (MV2k), derart angeordnet ist, dass ein Ventilsitz des Spezial-Magnetventils (unmittelbar) mit einem/dem Eingang der ersten Druckversorgungseinheit (BM1) verbunden ist.
10. Fahrdynamiksystem nach einem der vorhergehenden Aspekte, insbesondere nach Aspekt 4 oder 9,
   dadurch gekennzeichnet, dass
   zumindest eines der Spezial-Magnetventile (MV2k) beim Druckabbau zur Bereitstellung eines variablen Ventilöffnungsquerschnitts, insbesondere durch PWM-Ansteuerung oder Stromregelung, angesteuert wird.
11. Fahrdynamiksystem nach einem der vorhergehenden Aspekte,
   **dadurch gekennzeichnet,** dass
   die erste Sekundärsteuereinheit (S-ECU1) und/oder zweite Sekundärsteuereinheit (S-ECU2a, S-ECU2b) und/oder
   Aktuatoren der ersten und/oder zweiten Druckversorgungseinheit (BM1, BM2) und/oder
   Sensoren der ersten und/oder zweiten Druckversorgungseinheit (BM1, BM2) kommunikativ, insbesondere über Kommunikationsschnittstellen (IntBM1, IntBM2) mit der Primärsteuereinheit (M-ECU) verbunden sind, um Lenkbefehle und/oder Bremsbefehle zu implementieren.
12. Fahrdynamiksystem nach einem der vorhergehenden Aspekte, insbesondere nach Aspekt 10,
   **dadurch gekennzeichnet,** dass
   die Primärsteuereinheit (M-ECU) dazu ausgebildet ist,
   - durch ein Ansteuern mindestens eines der Spezial-Magnetventile der ersten Druckversorgungseinheit und/oder der mindestens einen zweiten Druckversorgungseinheit eine radbremsindividuelle Drucksteuerung zu implementieren,
      und/oder
   - durch Druckmessungen bei geschlossenem Spezial-Magnetventil der ersten Druckversorgung oder eines Einlassventils einen Radkreisausfall zu detektieren,
      und/oder

   - durch ein Schließen mindestens eines der Trennventile (TV1,TV2), einen defekten Bremskreis abzutrennen,
      und/oder
   - durch Steuerung mindestens eines der Trennventile (TV1, TV2) sowie abwechselnden Druckaufbau und Druckabbau über die zweite Druckversorgungseinheit ein (achsweises) ABS zu implementieren,
      und/oder
   - durch Steuerung mindestens eines der Spezial-Magnetventile (MV2k) sowie insbesondere von Auslassventilen der ersten Druckversorgungseinheit sowie
      durch abwechselnden Druckaufbau und Druckabbau, über die zweite Druckversorgungseinheit (BM2) ein radindividuelles ABS zu implementieren,
      und/oder
   - bei einer Bremsung unter Verwendung des mindestens einen Traktionsmotors, ein mittels der zweiten Druckversorgungseinheit (BM2) erzeugtes Bremsmoment achsweise durch Steuerung des der zweiten Druckversorgungseinheit zugeordneten Spezial-Magnetventils (MV2K) zu verteilen,
      und/oder
   - durch ein paralleles Ansteuern der Traktionsmotoren (TM1, TM2) und zumindest der ersten Druckversorgungseinheit (BM1) eine (automatische) Notbremsung zu implementieren.
13. Fahrdynamiksystem nach einem der vorhergehenden Aspekte, insbesondere nach Aspekt 2,
   **dadurch gekennzeichnet,** dass
   der elektromagnetische Antrieb (EM1) redundant mit mindestens einem ersten Magnetventiltreiber und einem zweiten Magnetventiltreiber ausgebildet ist, wobei die Sekundärsteuereinheit (S-ECU1) zur Steuerung des mindestens einen Spezial-Magnetventils (MV2k) mit dem ersten Magnetventiltreiber und die Primärsteuereinheit (M-ECU) zur Steuerung des mindestens einen Spezial-Magnetventils (MV2k) mit dem zweiten Magnetventiltreiber kommunikativ verbunden ist.
14. Fahrdynamiksystem nach einem der vorhergehenden Aspekte,
   **dadurch gekennzeichnet,** dass
   die Primärsteuereinheit (M-ECU) dazu ausgebildet ist, zumindest zeitweise einen Bremsdruck zumindest in einer Auswahl der Radbremsen (RB1-RB4) in einem Multiplex- und/oder einem PPC-Verfahren einzustellen.
15. Fahrdynamiksystem nach einem der vorhergehenden Aspekte,
   **dadurch gekennzeichnet,** dass
   die Primärsteuereinheit (M-ECU) dazu ausgebildet ist, das Verfahren zumindest nach Anspruch 16 zu implementieren.
16. Verfahren zum Einstellen eines Bremsdrucks in mindestens einer Radbremse eines Bremssystems vorzugsweise über Einlassventile zum Einlassen von Bremsfluid in Radbremsen und Auslassventile zum Auslassen von Bremsfluid aus den Radbremsen (RB1-RB4), das Verfahren umfassend:
   - Bestimmen, dass aus mindestens einer der Radbremsen (RB1-RB4), nämlich einer Zielradbremse, Druck abgebaut werden soll;
   - Auswahl eines Druckabbaumodus aus einem ersten Druckabbaumodus und einem zweiten Druckabbaumodus;
   - wenn der erste Druckabbaumodus ausgewählt ist, Öffnen mindestens eines der der Zielradbremse zugeordneten Auslassventils, um den Druckabbau zu implementieren;
   - wenn der zweite Druckabbaumodus ausgewählt ist, Geschlossenhalten des der Zielradbremse zugeordneten Auslassventils und Öffnen mindestens eines der der Zielradbremse zugeordneten Einlassventils und Erzeugung eines Differenzdruckes in einer (externen), vorzugsweise zweiten, Druckversorgungseinheit, um den Druckabbau aus der Zielradbremse über das Einlassventil zu implementieren.

### Bezugszeichenliste:

- M-ECU: Primärsteuereinheit, Zentralrechner
- R1-R4: Rad
- vR1-vR4: Raddrehzahlsensoren
- RB1-RB4: Radbremse
- BK1, BK2: Bremskreis
- A1, A2: Anschluss
- BM1: Erstes Bremsmodul
- BM1BE: Baueinheit des ersten Bremsmoduls
- DV1: Druckerzeuger
- M: Motor
- P: Pumpeneinheit
- Spk: Speicherkammer
- S-ECU1: Steuergerät des ersten Bremsmoduls
- RP: Rotationspumpe
- KP: Kolbenpumpe
- MKP: Mehrkolbenpumpe

- BM2: Zweites Bremsmodul
- BM2BE: Baueinheit des zweiten Bremsmoduls
- DV2: Druckerzeuger
- S-ECU2a: Steuergerät des zweiten Bremsmoduls
- S-ECU2b: Steuergerät des zweiten Bremsmoduls
- TV1, TV2: Trennventil

- BM3: Weiteres Bremsmodul
- RV, RV1, RV2: Rückschlagventil
- AV1, AV2, AV3, AV4: Auslassventil
- EV1, EV2, EV3, EV4: Einlassventil
- HSV1, HSV2, USV1, USV2: Ventile der ESP-Einheit
- MV2k: Spezial-Magnetventil für Druckaufbau und Druckabbau
- TM1: erster elektrischer Traktionsmotor zum Antrieb eines Fahrzeugachse oder eines Rades
- TM2: zweiter elektrischer Traktionsmotor zum Antrieb eines Fahrzeugachse oder eines Rades
- TM3: dritter elektrischer Traktionsmotor zum Antrieb eines Fahrzeugachse oder eines Rades
- VB: Vorratsbehälter
- VA: Vorderachse
- HA: Hinterachse
- FRF: Rückstellkraft über eine Feder
- FPM: Magnetkraft
- FEM1, FEM2: Magnetkraft
- PM: Permanentmagnet
- EM1, EM2: Magnetkreis
- RF: Rückstellfeder
- SP1, SP1a, SP1b, SP2: Erregerspule
- 6: Anker
- 6a: Zusatzanker
- 7: Ventilstellglied
- 7a: Ventilstößel
- 10: Polplatte
- 13: Rückstellfeder
- VS: Ventilsitz
- AR: Ankerraum
- MS1, MS2: Magnetspule
- S: Luftspalt

- S1-S4: Leistungshalbleiter

## Patentansprüche

1. Fahrdynamiksystem für ein Fahrzeug mit Rädern (R1-R4), umfassend:
- eine Primärsteuereinheit (M-ECU) zur Erfassung und/oder Generierung von Lenkbefehlen und Bremsbefehlen;
- mindestens zwei hydraulisch betätigbare Radbremsen (RB1-RB4), die jeweils einem Rad (R1-R4) zugeordnet sind;
- mindestens einen elektrischen Traktionsmotor mit Traktionsmotor-Steuereinheit, wobei der Traktionsmotor (TM1, TM2) angeordnet ist, um mindestens eines der Räder (R1-R4) anzutreiben,
wobei die Primärsteuereinheit kommunikativ mit einer Traktionsmotor-Steuereinheit verbunden ist, um den Traktionsmotor (TM1, TM2) zur Implementierung der Lenkbefehle und Bremsbefehle zu steuern;
- mindestens eine (erste) elektrohydraulische Druckversorgungseinheit (BM1) mit
∘ mindestens einer elektrischen Motor-Pumpen-Einheit:
∘ mindestens zwei Anschlüssen zum Anschließen der Radbremsen (RB1-RB4);
∘ elektrisch betätigbaren Radbremsdruckeinstellventilen bzw. Bremsdruckeinstellventilen (AV1-AV4, EV1-EV4), und
∘ einer ersten Sekundärsteuereinheit (S-ECU1);
wobei mindestens einer der hydraulisch betätigbaren Radbremsen (RB1-RB4) ein Bremsdruckeinstellventil in Form eines Einlassventils (EV1-EV4) und eines Auslassventils (AV1-AV4) zugeordnet ist,
**dadurch gekennzeichnet, dass**
die Primärsteuereinheit (M-ECU) dazu ausgebildet ist, Informationen auszuwerten und diese für eine effektive und prädiktive Druckregelung oder Drucksteuerung zu verwenden,
wobei die Informationen Kamerainformationen über die Fahrbahnbeschaffenheit oder Informationen über die Umgebung, beispielsweise Abstände zu Passanten und/oder Fahrzeugen, umfassen.

2. Fahrdynamiksystem nach Anspruch 1,
**dadurch gekennzeichnet, dass**
die Einlassventile auch für Druckauf- und Druckabbau genutzt werden, wobei über eine direkte Ansteuerung über die Primärsteuereinheit ein radindividueller Bremsmomenteingriff implementierbar ist.

3. Fahrdynamiksystem nach einem der vorhergehenden Ansprüche,
**dadurch gekennzeichnet, dass**
die Einlassventile (EV1-EV4) als Spezial-Magnetventil (MV2k) ausgeführt sind, wobei das Fahrdynamiksystem, insbesondere die Primärsteuereinheit (M-ECU), dazu ausgebildet ist, aus der mindestens einen hydraulisch betätigbaren Radbremse wahlweise über das zugeordnete Auslassventil oder über das Spezial-Magnetventil (MV2k) Druck abzubauen.

4. Fahrdynamiksystem nach einem der vorhergehenden Ansprüche, insbesondere nach Anspruch 3,
**dadurch gekennzeichnet, dass**
das Spezial-Magnetventil (MV2k) zuziehfest aufgrund einer Drossel ist oder mit einem elektromagnetischen Antrieb mit einer ersten Erregerspule (SP1, SP1a) ausgestattet ist, über den ein Ventilstellglied (7) bzw. Ventilstößel (7a) zwischen einer geöffneten Ventilstellung und einer geschlossenen Ventilstellung verstellbar ist,
wobei das Spezial-Magnetventil (MV2k) eine Kraftzusatzeinrichtung aufweist, die einen Permanentmagneten (PM) umfasst.

5. Fahrdynamiksystem nach einem der vorhergehenden Ansprüche, **gekennzeichnet durch**:
mindestens eine zweite Druckversorgungseinheit (BM2), vorzugsweise umfassend eine Kolben-Zylinder-Einheit oder eine Rotationspumpe, die zur Bereitstellung von Bremsfluid an mindestens einem Eingang der ersten Druckversorgungseinheit für einen ersten Bremskreis (BK1) und einen zweiten Bremskreis (BK2) angeordnet ist, wobei vorzugsweise mindestens ein Trennventil zum Abtrennen des ersten und/oder zweiten Bremskreises vorgesehen ist.

6. Fahrdynamiksystem nach einem der Ansprüche 3 oder 4,
**dadurch gekennzeichnet, dass**
das Spezial-Magnetventil (MV2k) stromlos offen ausgeführt ist und derart angeordnet ist, dass ein Ventilsitz des Spezial-Magnetventils (unmittelbar) mit mindestens einer der Radbremsen (RB1-RB4) verbunden ist.

7. Fahrdynamiksystem nach einem der vorhergehenden Ansprüche,
**dadurch gekennzeichnet, dass**
die Primärsteuereinheit (M-ECU) dazu ausgebildet ist, einen Ausfall zumindest eines Radbremskreises, umfassend eine der Radbremsen (RB1-RB4) zu detektieren und für ein Abtrennen des Radbremskreises das der Radbremse (RB1-RB4) zugeordnete Einlassventil (EV1-EV4), insbesondere in Form von Spezial-Magnetventil (MV2k), zu schließen.

8. Fahrdynamiksystem nach einem der vorhergehenden Ansprüche,
**dadurch gekennzeichnet, dass**
die erste Druckversorgungseinheit (BM1) eine Rotationspumpe umfasst, die angeschlossen und dazu ausgebildet ist, Druck in den Radbremsen (RB1-RB4) auf- und abzubauen.

9. Fahrdynamiksystem nach einem der Ansprüche 1 bis 7,
**dadurch gekennzeichnet, dass**
die erste Druckversorgungseinheit (BM1) eine Kolbenpumpe mit mehreren Kolben umfasst.

10. Fahrdynamiksystem nach einem der vorhergehenden Ansprüche, insbesondere nach Anspruch 8 oder 9,
**dadurch gekennzeichnet, dass**
die erste Druckversorgereinheit für einen Druckabbau, insbesondere einen direkten Druckabbau über Auslassventile (AV1, AV2), in einen Vorratsbehälter (VB) ausgebildet ist.

11. Fahrdynamiksystem nach einem der vorhergehenden Ansprüche, insbesondere nach Anspruch 10,
**dadurch gekennzeichnet, dass**
die erste Druckversorgereinheit eine Schnittstelle (IntBM1) zur Primärsteuereinheit (M-ECU) umfasst, sodass Sollvorgaben von einer zentralen Steuerung für radindividuelle Bremsmomenteingriffe über die Primärsteuereinheit (M-ECU) vorgegeben werden können.

12. Fahrdynamiksystem nach einem der vorhergehenden Ansprüche,
**dadurch gekennzeichnet, dass**
die erste Sekundärsteuereinheit (S-ECU1) und/oder zweite Sekundärsteuereinheit (S-ECU2a, S-ECU2b) und/oder Aktuatoren der ersten und/oder zweiten Druckversorgungseinheit (BM1, BM2) und/oder
Sensoren der ersten und/oder zweiten Druckversorgungseinheit (BM1, BM2) kommunikativ, insbesondere über Kommunikationsschnittstellen (IntBM1, IntBM2) mit der Primärsteuereinheit (M-ECU) verbunden sind, um Lenkbefehle und/oder Bremsbefehle zu implementieren.

13. Fahrdynamiksystem nach einem der vorhergehenden Ansprüche, insbesondere nach Anspruch 12,
**dadurch gekennzeichnet, dass**
die Primärsteuereinheit (M-ECU) dazu ausgebildet ist,
- durch ein Ansteuern einer/der mindestens einen zweiten Druckversorgungseinheit eine radbremsindividuelle Drucksteuerung zu implementieren,
und/oder
- durch Druckmessungen bei geschlossenem Einlassventil einen Radkreisausfall zu detektieren,
und/oder
- durch ein Schließen mindestens eines der Trennventile (TV1,TV2), einen defekten Bremskreis abzutrennen,
und/oder
- durch ein paralleles Ansteuern der Traktionsmotoren (TM1, TM2) und zumindest der ersten Druckversorgungseinheit (BM1) eine (automatische) Notbremsung zu implementieren.

14. Verfahren zum Einstellen eines Bremsdrucks in mindestens einer Radbremse eines Bremssystems über Einlassventile zum Einlassen von Bremsfluid in Radbremsen und Auslassventile zum Auslassen von Bremsfluid aus den Radbremsen (RB1-RB4), das Verfahren umfassend:
- Bestimmen, dass aus mindestens einer der Radbremsen (RB1-RB4), nämlich einer Zielradbremse, Druck abgebaut werden soll;
- Auswahl eines Druckabbaumodus aus einem ersten Druckabbaumodus und einem zweiten Druckabbaumodus;
- wenn der erste Druckabbaumodus ausgewählt ist, Öffnen mindestens eines der der Zielradbremse zugeordneten Auslassventile, um den Druckabbau (direkt) in einen Vorratsbehälter (VB) zu implementieren;
- wenn der zweite Druckabbaumodus ausgewählt ist, Geschlossenhalten des der Zielradbremse zugeordneten Auslassventils und Öffnen mindestens eines der der Zielradbremse zugeordneten Einlassventile und Erzeugung eines Differenzdruckes in einer externen zweiten, Druckversorgungseinheit, um den Druckabbau aus der Zielradbremse über das Einlassventil zu implementieren.
